# EUROPÄISCHE PATENTSCHRIFT

(11) **EP 4 110 696 B1**
(45) Veröffentlichungstag und Bekanntmachung des Hinweises auf die Patenterteilung: **01.04.2026**
(21) Anmeldenummer: 21709625.4
(22) Anmeldetag: 19.02.2021
(51) Int. Cl.: B64D 11/06

(54) **FLUGZEUGSITZANORDNUNG**
AIRCRAFT SEAT ARRANGEMENT
AGENCEMENT DES SIÈGES D'AVION

(30) Priorität: 26.02.2020 DE 102020105072
(43) Veröffentlichungstag der Anmeldung: 04.01.2023
(73) Patentinhaber: Recaro Aircraft Seating GmbH & Co. KG, 74523 Schwäbisch Hall (DE)
(72) Erfinder: MANSON, Tim, Wembley HA0 3JL (GB); DUCREUX, Christophe, 13540 Aix-en-Provence (FR)
(74) Vertreter: Daub, Thomas
(86) Internationale Anmeldenummer: PCT/EP2021/054217
(87) Internationale Veröffentlichungsnummer: WO 2021/170507

(56) Entgegenhaltungen:
- WO-A1-2019/179638
- US-A1- 2012 223 186
- US-A1- 2013 032 668
- US-A1- 2014 283 296
- US-A1- 2015 166 183
- US-A1- 2015 166 184

## Beschreibung

### Stand der Technik

Die Erfindung betrifft eine Flugzeugsitzanordnung nach dem Oberbegriff des Patentanspruchs 1.

Es ist bereits eine Flugzeugsitzanordnung mit mehreren in einem Flugzeugkabinenabschnitt angeordneten Flugzeugsitzvorrichtungen vorgeschlagen worden, die zumindest teilweise unterschiedlich voneinander ausgebildet sind und jeweils einen Flugzeugsitz aufweisen, der als ein Full-Flat-Sitz ausgebildet ist.

Die Druckschrift US 2012 /223 186 A1 offenbart eine Flugzeugsitzanordnung mit mehreren in einem Flugzeugkabinenabschnitt in einer Sitzreihe angeordneten Flugzeugsitzvorrichtungen, wobei zwei davon als untere Flugzeugsitzvorrichtungen ausgebildet sind und eine mittlere als eine obere Flugzeugsitzvorrichtung. Die obere Flugzeugsitzvorrichtung weist in einer Komfortkategorie einen unterschiedlichen Wert auf als die unteren Flugzeugsitzvorrichtungen.

Die Aufgabe der Erfindung besteht insbesondere darin, eine gattungsgemäße Anordnung mit verbesserten Eigenschaften hinsichtlich einer Kompaktheit und einer Variabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzanordnung zur Verwendung in einer Flugzeugkabine eines Flugzeugs, wobei die Flugzeugkabine zumindest eine Sitzspalte und zumindest einen Flugzeugkabinenabschnitt aufweist, und wobei die Flugzeugsitzanordnung mehrere Flugzeugsitzvorrichtungen aufweist, die im Betriebszustand der Flugzeugsitzanordnung in dem zumindest einen Flugzeugkabinenabschnitt angeordnet sind, die zumindest teilweise unterschiedlich voneinander ausgebildet sind und jeweils einen Flugzeugsitz aufweisen, der als ein Full-Flat-Sitz ausgebildet ist, wobei sich die Flugzeugsitzvorrichtungen in dem Flugzeugkabinenabschnitt in zumindest einer Komfortkategorie unterscheiden, wobei die Flugzeugsitzvorrichtungen für die zumindest eine Komfortkategorie jeweils einen zueinander unterschiedlichen Wert aufweisen, der durch eine unterschiedliche Anordnung der Flugzeugsitze und durch die zumindest teilweise unterschiedliche Ausbildung der Flugzeugsitzvorrichtungen bedingt ist.

Gemäß der Erfindung, sind in dem Flugzeugkabinenabschnitt in einer Sitzspalte zumindest vier, voneinander unterschiedlich ausgebildete, Flugzeugsitzvorrichtungen der mehreren Flugzeugsitzvorrichtungen angeordnet, wobei die zumindest vier Flugzeugsitzvorrichtungen im Betriebszustand der Flugzeugsitzanordnung unmittelbar in der Sitzspalte hintereinander angeordnet sind, sodass alle von einer selben Flugzeuglängsachse geschnitten werden und jeweils einen direkten Zugang zu einem selben Flugzeugkabinengang aufweisen.

Die Beispiele, die sich auf Flugzeugsitzanordnungen mit mindestens zwei oder drei Sitzvorrichtungen beziehen, dienen lediglich der Veranschaulichung und sind nicht Bestandteil des beanspruchten Gegenstands.

Durch eine erfindungsgemäße Ausgestaltung kann eine vorteilhaft kompakte und variable Anordnung der mehreren Flugzeugsitzvorrichtungen erreicht werden. Durch die erfindungsgemäße Ausgestaltung können die mehreren Flugzeugsitzvorrichtungen vorteilhaft einfach miteinander kombiniert werden. Des Weiteren können die mehreren Flugzeugsitzvorrichtungen durch die erfindungsgemäße Ausgestaltung besonders vorteilhaft zueinander positioniert werden. Dadurch kann ein zur Verfügung stehender Raum vorteilhaft effizient ausgenutzt werden. Des Weiteren können die Flugzeugsitze in der Liegestellung dadurch eine vorteilhaft große Liegefläche ausbilden. Ferner können durch die erfindungsgemäße Ausgestaltung, insbesondere nebeneinander angeordnete, Flugzeugsitzvorrichtungen der mehreren Flugzeugsitzvorrichtungen vorteilhaft variabel zueinander positioniert werden. Besonders vorteilhaft können dabei unterschiedliche Bereiche geschaffen werden, die individuellen Anforderungen von Passagieren, insbesondere alleine reisenden Passagieren oder paarweise reisenden Passagieren, gerecht werden. Durch die erfindungsgemäße Ausgestaltung können für unterschiedliche Passagierbedürfnisse vorteilhaft unterschiedliche Komfortkategorien erreicht werden. Vorzugsweise ist die Flugzeugsitzanordnung zur Verwendung in einer Flugzeugkabine eines Flugzeugs vorgesehen. Bevorzugt ist die Flugzeugkabine für einen Aufenthalt aller Passagiere während eines Fluges bestimmt, insbesondere unabhängig von einer gebuchten Sitzklasse. Eine Sitzklasse ist beispielsweise als eine Economy-Class, als eine Premium-Economy-Class, als eine Business-Class oder als eine First-Class ausgebildet. Vorzugsweise weist die Flugzeugkabine, insbesondere entlang einer Flugzeuglängsachse, zumindest einen Flugzeugkabinenabschnitt auf. Bevorzugt ist der zumindest eine Flugzeugkabinenabschnitt durch zumindest ein Trennelement, insbesondere eine Trennwand oder einen Vorhang, und/oder durch zumindest ein Flugzeugkabinenmodul, insbesondere ein Küchenmodul oder ein Toilettenmodul, entlang einer Flugzeuglängsachse begrenzt. Eine Sitzklasse kann insbesondere in mehreren Flugzeugkabinenabschnitten angeordnet sein. Bevorzugt weist die Flugzeugkabine eine Flugzeugkabinenmittelachse auf. Vorzugsweise weist die Flugzeugkabinenmittelachse jeweils einen selben Abstand zu sich gegenüberliegenden Flugzeugkabinenaußenwänden der Flugzeugkabine auf. Vorzugsweise ist die Flugzeugkabinenmittelachse parallel zu einer Rollachse des Flugzeugs ausgerichtet. Vorzugsweise ist die Flugzeugkabinenmittelachse parallel zu einem Flugzeugkabinenboden der Flugzeugkabine ausgerichtet. Unter einer "Flugzeuglängsachse" soll insbesondere eine Achse verstanden werden, die sich in Richtung einer größten Ausdehnung der Flugzeugkabine erstreckt und die innerhalb der Flugzeugkabine angeordnet ist. Dabei ist die Flugzeuglängsachse insbesondere parallel zu der Flugzeugkabinenmittelachse ausgerichtet. Bevorzugt weist das Flugzeug in zumindest einem Betriebszustand eine Flugrichtung auf. Vorzugsweise ist die Flugrichtung, insbesondere in einem idealen Betriebszustand, parallel zu der Flugzeugkabinenmittelachse und/oder zu einer Flugzeuglängsachse ausgerichtet. Vorzugsweise weist die Flugzeugkabine zumindest einen Flugzeugkabinengang auf. Bevorzugt erstreckt sich der zumindest eine Flugzeugkabinengang zumindest im Wesentlichen entlang einer Flugzeuglängsachse. Vorzugsweise bilden die Flugzeugsitzvorrichtungen jeweils einen Flugzeugsitzbereich aus. Unter einem "Flugzeugsitzbereich" soll dabei insbesondere ein Bereich verstanden werden, den ein Passagier in der Flugzeugkabine zur Verfügung hat, insbesondere während der Passagier auf dem Flugzeugsitz sitzt oder liegt. Vorzugsweise sind die Flugzeugsitzvorrichtungen dazu vorgesehen, auf dem Flugzeugkabinenboden der Flugzeugkabine aufgeständert zu werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Bevorzugt weisen die Flugzeugsitzvorrichtungen jeweils einen Flugzeugsitz auf, der dazu vorgesehen ist, einen Sitzplatz für einen Passagier im Flugzeug bereitzustellen. Unter einer "unterschiedlichen Anordnung der Flugzeugsitze" soll insbesondere verstanden werden, dass die Flugzeugsitze der mehreren Flugzeugsitzvorrichtungen zueinander unterschiedliche Sitzrichtungen und/oder Liegerichtungen aufweisen und/oder dass die Flugzeugsitze der mehreren Flugzeugsitzvorrichtungen unterschiedliche, insbesondere minimale oder maximale, Abstände zu einem Flugzeugkabinengang der Flugzeugkabine aufweisen. Des Weiteren soll unter einer "unterschiedlichen Anordnung der Flugzeugsitze" insbesondere eine unterschiedliche Positionierung der Flugzeugsitze innerhalb entsprechender Flugzeugsitzbereiche verstanden werden. Unter "unterschiedliche Sitzrichtungen und/oder Liegerichtungen" soll insbesondere verstanden werden, dass Sitzrichtungen der Flugzeugsitzvorrichtungen und/oder Liegerichtungen der Flugzeugsitzvorrichtungen einen Winkel größer null zueinander aufweisen, wobei die Sitzrichtungen und/oder die Liegerichtungen parallel zu dem Flugzeugkabinenboden ausgerichtet sind. Bevorzugt sind Sitzrichtungen der Flugzeugsitzvorrichtungen und/oder Liegerichtungen der Flugzeugsitzvorrichtungen, insbesondere die sich in der zumindest einen Komfortkategorie unterscheiden, antiparallel oder nicht parallel zueinander ausgerichtet. Vorzugsweise sind die Flugzeugsitzvorrichtungen der mehreren Flugzeugsitzvorrichtungen entlang einer Flugzeuglängsachse aufeinander folgend und/oder quer zu einer Flugzeuglängsachse nebeneinander angeordnet. Vorzugsweise kann eine Anordnung, insbesondere eine Reihenfolge, der Flugzeugsitzvorrichtungen der mehreren Flugzeugsitzvorrichtungen zueinander variieren. Dadurch kann eine vorteilhaft variable Flugzeugsitzanordnung mit vielfältig kombinierbaren Flugzeugsitzvorrichtungen bereitgestellt werden. Unter "unterschiedlich voneinander ausgebildet" soll insbesondere verstanden werden, dass die Flugzeugsitzvorrichtungen unterschiedlich ausgeformte, unterschiedlich angeordnete und/oder unterschiedlich funktionierende gleichartige Bauteile in den entsprechenden Flugzeugsitzbereichen aufweisen. Unter einem "Bauteil einer Flugzeugsitzvorrichtung" soll in diesem Zusammenhang insbesondere ein Flugzeugsitz, eine Konsole, eine Ottomane, eine Umhausung, eine Trenneinheit, eine Tischeinheit, ein Bildschirm und/oder ein Beleuchtungsmittel verstanden werden. Unter "gleichartig" soll insbesondere verstanden werden, dass es sich bei den Flugzeugsitzvorrichtungen jeweils um das gleiche Bauteil handelt. Unter "unterschiedlich ausgeformt" soll insbesondere verstanden werden, dass sich eine Form, insbesondere eine Außenkontur, der gleichartigen Bauteile der Flugzeugsitzvorrichtungen unterscheidet, insbesondere senkrecht zu einer Ebene betrachtet, die parallel zu dem Flugzeugkabinenboden ausgerichtet ist. Dabei soll jedoch insbesondere keine veränderte Form von Bauteilen der Flugzeugsitzvorrichtungen aufgrund von Umgebungsbedingungen, beispielsweise einer gekrümmten Kontur einer Flugzeugkabinenaußenwand der Flugzeugkabine, verstanden werden. Unter "zumindest teilweise unterschiedlich voneinander ausgebildet" soll insbesondere verstanden werden, dass eine einzelne Flugzeugsitzvorrichtung der mehreren Flugzeugsitzvorrichtungen, die unterschiedlich von wenigstens einer weiteren Flugzeugsitzvorrichtung der mehreren Flugzeugsitzvorrichtungen ausgebildet ist, mehrmals in der Flugzeugsitzanordnung vorhanden sein kann, womit insbesondere mehrere identisch ausgebildete Flugzeugsitzvorrichtungen in der Flugzeugsitzanordnung vorhanden sein können. Unter einer "Komfortkategorie" soll insbesondere eine Kategorie verstanden werden, welche eine Eigenschaft für einen Komfort für einen auf dem Flugzeugsitz sitzenden und/oder liegenden Passagier beschreibt, insbesondere quantifiziert. Die zumindest eine Komfortkategorie ist insbesondere dazu vorgesehen, einen Komfort zwischen zumindest zwei der mehreren Flugzeugsitzvorrichtungen zu vergleichen und/oder zu unterscheiden. Grundsätzlich müssen sich mindestens zwei Flugzeugsitzvorrichtungen, aber insbesondere nicht alle Flugzeugsitzvorrichtungen, in dem Flugzeugkabinenabschnitt in der zumindest einen Komfortkategorie unterscheiden. Grundsätzlich müssen sich die Flugzeugsitzvorrichtungen nicht in sämtlichen Werten, insbesondere für mehrere Komfortkategorien, voneinander unterscheiden. Erfindungsgemäß unterscheiden sich zumindest vier unterschiedlich ausgebildete Flugzeugsitzvorrichtungen der mehreren Flugzeugsitzvorrichtungen in dem Flugzeugkabinenabschnitt in zumindest einer Komfortkategorie, wobei die Flugzeugsitzvorrichtungen für die zumindest eine Komfortkategorie jeweils einen zueinander unterschiedlichen Wert aufweisen, der durch die unterschiedliche Anordnung der Flugzeugsitze und durch die zumindest teilweise unterschiedliche Ausbildung der Flugzeugsitzvorrichtungen bedingt ist. Unter einem "Wert" soll vorzugsweise eine physikalische Größe verstanden werden, die die Komfortkategorie quantitativ beschreibt. Grundsätzlich ist es denkbar, dass den mehreren Flugzeugsitzvorrichtungen abhängig von der zumindest einen Komfortkategorie unterschiedliche Buchungsklassen und/oder Preisklassen zugeordnet sind. Dadurch kann eine vorteilhaft selektive Buchung einer gewünschten Flugzeugsitzvorrichtung vorgenommen werden, wobei vorteilhaft ein unterschiedlicher Ertrag erzielt werden kann. Vorzugsweise umfasst der Flugzeugsitz einen Sitzboden und die Rückenlehne. Bevorzugt umfasst der Flugzeugsitz eine Beinstütze. Unter einer "Sitzrichtung" soll insbesondere eine Richtung verstanden werden, welche zumindest im Wesentlichen parallel zu dem Flugzeugkabinenboden, insbesondere unter einer Abweichung von 3 Grad zu dem Flugzeugkabinenboden, und zumindest im Wesentlichen senkrecht zu einer theoretischen, ebenen, senkrecht zu dem Flugzeugkabinenboden ausgerichteten Rückenlehne ausgerichtet ist, wobei die Richtung einer Normalen auf einer Vorderseite der Rückenlehne entspricht, wobei die Vorderseite der Rückenlehne eine Abstützfläche für einen Rücken eines Passagiers in einer gewöhnlichen Sitzposition ausbildet. Unter einer "Liegerichtung" soll insbesondere eine Richtung verstanden werden, welche zumindest im Wesentlichen parallel zu dem Flugzeugkabinenboden, insbesondere unter einer Abweichung von 3 Grad zu dem Flugzeugkabinenboden, und in der Liegestellung entlang einer gemeinsamen Mittelachse der Rückenlehne und des Sitzbodens verläuft. Vorzugsweise entspricht die Liegerichtung der Sitzrichtung. Grundsätzlich kann der Flugzeugsitz weitere Anbauteile, wie insbesondere eine Kopfstütze oder wenigstens eine Armlehne, umfassen. Vorzugsweise weisen die Flugzeugsitzvorrichtungen jeweils zumindest eine Konsole auf. Besonders bevorzugt ist die zumindest einen Konsole von zwei unmittelbar benachbart zueinander angeordneten Flugzeugsitzvorrichtungen nutzbar. Vorzugsweise bildet die zumindest eine Konsole zumindest einen Fußraum, zumindest eine Ablagefläche und/oder zumindest einen Stauraum aus, wobei die zumindest eine Ablagefläche und/oder der zumindest eine Stauraum insbesondere für eine unmittelbar benachbarte Flugzeugsitzvorrichtung vorgesehen sind/ist. Vorzugsweise weisen die Flugzeugsitzvorrichtungen jeweils zumindest eine Ottomane auf. Grundsätzlich kann die zumindest eine Ottomane mit der zumindest einen Konsole gekoppelt sein. Bevorzugt ist die zumindest eine Ottomane als eine Bein- und/oder Fußablage für einen Passagier vorgesehen. Vorzugsweise weisen die Flugzeugsitzvorrichtungen jeweils zumindest eine Umhausung auf. Bevorzugt ist die zumindest eine Umhausung als ein Shellelement ausgebildet. Vorzugsweise ist der Flugzeugsitz zwischen einer Sitzstellung und einer Liegestellung, insbesondere elektromechanisch, verstellbar. Bevorzugt umfassen die Flugzeugsitzvorrichtungen jeweils wenigstens eine Verstelleinheit, die dazu vorgesehen ist, den Flugzeugsitz zwischen der Sitzstellung und der Liegestellung zu verstellen. Unter einer "Sitzstellung" soll insbesondere eine Stellung des Flugzeugsitzes verstanden werden, bei der ein Passagier aufrecht auf dem Flugzeugsitz sitzen kann. Vorzugsweise stehen die Rückenlehne des Flugzeugsitzes und der Sitzboden des Flugzeugsitzes in der Sitzstellung im Wesentlichen senkrecht aufeinander, insbesondere in einem Winkel zwischen 90 Grad und 110 Grad. Vorzugsweise bildet die Sitzstellung eine erste Endposition des Flugzeugsitzes aus, in die der Flugzeugsitz maximal verstellbar ist. Bevorzugt ist die Sitzstellung als eine TTL-Stellung ausgebildet. Unter einer "TTL-Stellung" soll insbesondere eine aufrechte Stellung des Flugzeugsitzes verstanden werden, die aus Sicherheitsgründen, insbesondere in einer Rollphase, in einer Startphase und in einer Landephase des Flugzeugs, eingenommen werden muss. Unter einer "Liegestellung" soll insbesondere eine Stellung des Flugzeugsitzes verstanden werden, die dazu vorgesehen ist, eine zumindest im Wesentlichen waagerechte Liegefläche für einen Passagier bereitzustellen, insbesondere damit der Passagier während eines Fluges eine Schlafhaltung einnehmen kann. Vorzugsweise liegt der Passagier in der Liegestellung des Flugzeugsitzes zumindest im Wesentlichen auf dem Flugzeugsitz, insbesondere auf dem Sitzboden und auf der Rückenlehne. Vorzugsweise bildet die Liegestellung eine zweite Endposition des Flugzeugsitzes aus, in die der Flugzeugsitz maximal verstellbar ist. Unter "zumindest im Wesentlichen" soll insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Grundsätzlich können zwischen der Sitzstellung und der Liegestellung weitere Stellungen vorgesehen sein, die insbesondere eine kombinierte Sitz- und Liegestellung ausbilden. Unter einem "Full-Flat-Sitz" soll insbesondere ein Sitz verstanden werden, der, vorzugsweise elektromechanisch, von der Sitzstellung in die Liegestellung überführbar ist und in der Liegestellung eine zumindest im Wesentlichen ebene Liegefläche ausbildet. Vorzugsweise ist die ebene Liegefläche in einem Winkel von 3 Grad zu dem Flugzeugkabinenboden geneigt. Besonders bevorzugt sind zumindest der Sitzboden des Flugzeugsitzes und die Rückenlehne des Flugzeugsitzes in der Liegestellung zumindest im Wesentlichen parallel zu dem Flugzeugkabinenboden ausgerichtet, auf dem der Flugzeugsitz aufgeständert ist. Vorzugsweise weisen der Sitzboden des Flugzeugsitzes und die Rückenlehne des Flugzeugsitzes in der Liegestellung eine gemeinsame Auflagefläche auf, die zumindest im Wesentlichen parallel zu dem Flugzeugkabinenboden ausgerichtet ist.

Jede der mehreren Flugzeugsitzvorrichtungen hat jeweils einen direkten Zugang zu einem Flugzeugkabinengang. Durch diese Ausgestaltung kann ein vorteilhaft einfacher und komfortabler Zugang zu einem Flugzeugsitz erreicht werden. Dadurch kann ein besonders vorteilhaft hoher Komfort für einen Passagier erreicht werden. Des Weiteren kann durch diese Ausgestaltung ein vorteilhaft hoher Komfort für den Passagier erreicht werden, da Passagiere aus benachbarten Flugzeugsitzbereichen durch einen direkten Zugang zu einem Flugzeugkabinengang nicht gestört und/oder beeinträchtigt werden. Unter einem "direkten Zugang" soll insbesondere ein Zugang von einem Flugzeugkabinengang zu einem Flugzeugsitzbereich, insbesondere zu einem Flugzeugsitz, verstanden werden, wobei der Zugang zu dem Flugzeugsitzbereich, insbesondere zu dem Flugzeugsitz, nicht durch einen benachbarten Flugzeugsitzbereich verläuft. Besonders bevorzugt kann der Passagier direkt von dem Flugzeugkabinengang in den Flugzeugsitzbereich eintreten, insbesondere ohne einen weiteren Flugzeugsitzbereich zu durchqueren. Vorzugsweise ist der direkte Zugang lediglich einer Flugzeugsitzvorrichtung der mehreren Flugzeugsitzvorrichtungen zugeordnet. Bevorzugt ist der direkte Zugang lediglich von einer Flugzeugsitzvorrichtung der mehreren Flugzeugsitzvorrichtungen nutzbar.

Ferner wird vorgeschlagen, dass die zumindest eine Komfortkategorie einen Livingspace, insbesondere eine Grundfläche, eine Bettlänge, eine Bettbreite, ein Fußraumvolumen und/oder eine Durchgangsbreite in zumindest einem Bereich, beschreibt. Durch diese Ausgestaltung können Flugzeugsitzvorrichtungen mit vorteilhaft zueinander variablen Komforteigenschaften bereitgestellt werden. Dadurch kann ein vorteilhaft individueller Komfort für unterschiedliche Passagierbedürfnisse erreicht werden. Unter einem "Livingspace" soll insbesondere ein persönlich von einem Passagier nutzbarer Raum, insbesondere Freiraum, in einem Flugzeugsitzbereich verstanden werden. Besonders bevorzugt ist die zumindest eine Komfortkategorie als eine Grundfläche einer Flugzeugsitzvorrichtung, als eine Ablagefläche einer Flugzeugsitzvorrichtung, insbesondere einer Konsole, als eine Tischfläche einer Flugzeugsitzvorrichtung, als eine, insbesondere minimale oder maximale, Armfreiheit für einen Passagier, insbesondere einem begrenzenden, maximalen Bewegungswinkel ausgehend von der Sitzrichtung in der Sitzstellung, als eine, insbesondere maximale, Abstützfläche eines Flugzeugsitzes für einen Passagier, insbesondere in der Sitzstellung oder in der Liegestellung, als eine, insbesondere maximale, Bettlänge eines Flugzeugsitzes in der Liegestellung, als eine, insbesondere maximale, Bettbreite des Flugzeugsitzes in der Liegestellung, als ein, insbesondere maximales, Fußraumvolumen, als eine Flugzeugsitzorientierung und/oder als eine, insbesondere minimale, Durchgangsbreite in zumindest einem Bereich der Flugzeugsitzvorrichtung ausgebildet. Das Fußraumvolumen ist vorzugsweise von einer Konsole begrenzt. Bevorzugt ist die Konsole dazu vorgesehen, das Fußraumvolumen aufzuspannen. Unter einer "Flugzeugsitzorientierung" soll insbesondere die Ausrichtung der Sitzrichtung und/oder der Liegerichtung bezogen auf eine Flugzeuglängsachse und/oder auf die Flugrichtung verstanden werden. Bevorzugt ist die Durchgangsbreite als eine minimale Breite des direkten Zugangs von einem Flugzeugkabinengang in den Flugzeugsitzbereich, direkt an diesen Flugzeugkabinengang angrenzend und parallel zu einer Flugzeuglängsachse gemessen, ausgebildet und/oder als eine minimale Breite des direkten Zugangs in einem Bereich zwischen dem Flugzeugkabinengang und einem Bereich, der in Sitzrichtung betrachtet unmittelbar hinter dem Sitzboden angeordnet ist. Grundsätzlich kann die zumindest eine Komfortkategorie auch eine Qualität, eine Geräuschbelastung und/oder eine Beleuchtung beschreiben. Die Qualität kann insbesondere eine Sitzpolsterung, beispielsweise einen Schaumstoffkern oder einen Federkern, oder ein Kontaktmaterial, beispielsweise Stoff oder Leder, beschreiben. Der Lärm kann insbesondere eine Abschirmung des Flugzeugsitzes gegenüber Umgebungsgeräuschen aus der Flugzeugkabine beschreiben. Die Beleuchtung kann insbesondere eine Anzahl an Beleuchtungsmitteln und eine Eigenschaft der Beleuchtungsmittel beschreiben.

Zudem wird erfindungsgemäß vorgeschlagen, dass in dem Flugzeugkabinenabschnitt in einer Sitzspalte zumindest vier, voneinander unterschiedlich ausgebildete unmittelbar hintereinander angeordnete, Flugzeugsitzvorrichtungen der mehreren Flugzeugsitzvorrichtungen angeordnet sind. Durch diese Ausgestaltung kann eine vorteilhaft variable Positionierung von unterschiedlich ausgebildeten Flugzeugsitzvorrichtungen der mehreren Flugzeugsitzvorrichtungen ermöglicht werden. Dadurch können innerhalb einer Sitzspalte Flugzeugsitzvorrichtungen bereitgestellt werden, die sich in ihren Komfortkategorien vorteilhaft unterscheiden. Dadurch kann ein vorteilhaft individueller Komfort für unterschiedliche Passagierbedürfnisse erreicht werden. Unter einer "Sitzspalte" soll insbesondere ein Bereich in der Flugzeugkabine verstanden werden, in dem zumindest eine Flugzeugsitzvorrichtung der mehreren Flugzeugsitzvorrichtungen angeordnet ist und der durch zumindest einen Flugzeugkabinengang begrenzt ist, wobei eine Achse, die senkrecht zu einer Flugzeuglängsachse und parallel zu dem Flugzeugkabinenboden angeordnet ist, innerhalb dieses Bereichs insbesondere lediglich einen Flugzeugsitz schneidet. Vorzugsweise erstreckt sich die Sitzspalte in Flugrichtung. Bevorzugt sind in einer Sitzspalte zumindest zwei hintereinander angeordnete Flugzeugsitzvorrichtungen angeordnet, die alle von einer selben Flugzeuglängsachse geschnitten werden und die jeweils einen direkten Zugang zu einem selben Flugzeugkabinengang aufweisen. Unter "hintereinander" soll insbesondere entlang einer Flugzeuglängsachse aufeinander folgend verstanden werden. Unter "unmittelbar hintereinander angeordnet" soll insbesondere verstanden werden, dass zwischen den zumindest drei Flugzeugsitzvorrichtungen der mehreren Flugzeugsitzvorrichtungen jeweils kein weiteres Objekt, insbesondere keine weitere Flugzeugsitzvorrichtung der mehreren Flugzeugsitzvorrichtungen, angeordnet ist. Vorzugsweise sind die zumindest drei voneinander unterschiedlich ausgebildeten Flugzeugsitzvorrichtungen der mehreren Flugzeugsitzvorrichtungen in Flugrichtung unmittelbar aufeinander folgend angeordnet.

Des Weiteren wird vorgeschlagen, dass in dem Flugzeugkabinenabschnitt in einer Sitzspalte eine Sitzrichtung einer Flugzeugsitzvorrichtung der mehreren Flugzeugsitzvorrichtungen zumindest im Wesentlichen parallel zu einer Flugzeuglängsachse angeordnet ist und eine Sitzrichtung einer weiteren Flugzeugsitzvorrichtung der mehreren Flugzeugsitzvorrichtungen, insbesondere in einem Winkel von mindestens 18 Grad, abgewinkelt zu der Flugzeuglängsachse angeordnet ist. Durch diese Ausgestaltung kann eine vorteilhaft kompakte und variable Anordnung von Flugzeugsitzvorrichtungen realisiert werden.

Ferner wird vorgeschlagen, dass in dem Flugzeugkabinenabschnitt eine Sitzrichtung von zumindest einer Flugzeugsitzvorrichtung der mehreren Flugzeugsitzvorrichtungen von einem unmittelbar angrenzenden Flugzeugkabinengang weggerichtet ist. Durch diese Ausgestaltung kann die zumindest eine Flugzeugsitzvorrichtung besonders vorteilhaft in der Flugzeugsitzanordnung positioniert werden. Des Weiteren kann durch diese Ausgestaltung eine vorteilhaft hohe Privatsphäre für einen Passagier bereitgestellt werden. Dadurch kann ein vorteilhaft hoher Komfort erreicht werden.

Zudem wird vorgeschlagen, dass in dem Flugzeugkabinenabschnitt eine Sitzrichtung von zumindest einer Flugzeugsitzvorrichtung der mehreren Flugzeugsitzvorrichtungen zu einem unmittelbar angrenzenden Flugzeugkabinengang gerichtet ist. Durch diese Ausgestaltung kann die zumindest eine Flugzeugsitzvorrichtung besonders vorteilhaft in der Flugzeugsitzanordnung positioniert werden. Des Weiteren kann durch diese Ausgestaltung eine vorteilhaft einfache Zugänglichkeit des Flugzeugsitzes für einen Passagier gewährleistet werden. Dadurch kann ein vorteilhaft hoher Komfort erreicht werden.

Des Weiteren wird vorgeschlagen, dass die Sitzrichtungen von zumindest zwei Flugzeugsitzvorrichtungen, die insbesondere durch zumindest eine weitere Flugzeugsitzvorrichtung voneinander beabstandet sind, in einer Sitzspalte um einen betragsmäßig zumindest im Wesentlichen gleichen Winkel zu einer Flugzeuglängsachse abgewinkelt angeordnet sind, wobei die Sitzrichtungen der Flugzeugsitzvorrichtungen zu einer Flugzeuglängsachse gespiegelt ausgebildet sind. Durch diese Ausgestaltung kann eine vorteilhaft variable und kompakte Flugzeugsitzanordnung erreicht werden. Des Weiteren können dadurch mehrere Flugzeugsitzvorrichtungen vorteilhaft kompakt miteinander kombiniert werden. Dadurch kann eine vorteilhaft große Anzahl an Flugzeugsitzen in dem Flugzeugkabinenabschnitt bereitgestellt werden.

Ferner wird vorgeschlagen, dass ein Flugzeugsitz einer Flugzeugsitzvorrichtung der in dem Flugzeugkabinenabschnitt in einer Sitzspalte angeordneten Flugzeugsitzvorrichtungen gangseitig angeordnet ist, wobei ein Flugzeugsitz einer weiteren Flugzeugsitzvorrichtung der in der Sitzspalte angeordneten Flugzeugsitzvorrichtungen gangabgewandt angeordnet ist. Durch diese Ausgestaltung kann eine vorteilhaft variable und kompakte Flugzeugsitzanordnung erreicht werden. Des Weiteren können dadurch mehrere Flugzeugsitzvorrichtungen vorteilhaft kompakt miteinander kombiniert werden. Dadurch kann eine vorteilhaft große Anzahl an Flugzeugsitzen in dem Flugzeugkabinenabschnitt bereitgestellt werden. Unter "gangseitig angeordnet" soll insbesondere verstanden werden, dass in der Sitzstellung zumindest ein Großteil des Flugzeugsitzes in Flugrichtung betrachtet auf einer dem Flugzeugkabinengang zugewandten Seite der Flugzeugsitzvorrichtung angeordnet ist. Unter "zumindest ein Großteil" soll insbesondere zumindest 55 %, bevorzugt zumindest 65 % und besonders bevorzugt zumindest 75 % verstanden werden. Unter "gangabgewandt angeordnet" soll insbesondere verstanden werden, dass in der Sitzstellung zumindest ein Großteil des Flugzeugsitzes in Flugrichtung betrachtet auf einer dem Flugzeugkabinengang abgewandten Seite der Flugzeugsitzvorrichtung angeordnet ist. Vorzugsweise weist der Flugzeugsitz, der gangseitig angeordnet ist, einen geringeren minimalen Abstand zu dem Flugzeugkabinengang auf, als ein weiterer Flugzeugsitz, der gangabgewandt angeordnet ist.

Zudem wird erfindungsgemäß vorgeschlagen, dass die Flugzeugsitzanordnung zumindest eine Sitzgruppierung von wenigstens vier, in dem Flugzeugkabinenabschnitt in einer Sitzspalte unmittelbar hintereinander angeordneten Flugzeugsitzvorrichtungen der mehreren Flugzeugsitzvorrichtungen aufweist, die jeweils unterschiedliche Sitzrichtungen aufweisen und/oder deren Flugzeugsitze gangseitig oder gangabgewandt angeordnet sind. Durch diese Ausgestaltung können mehrere Flugzeugsitzvorrichtungen vorteilhaft kompakt und variabel miteinander kombiniert werden. Dadurch kann eine vorteilhaft große Anzahl an Flugzeugsitzen in dem Flugzeugkabinenabschnitt bereitgestellt werden. Ferner kann durch diese Ausgestaltung eine wiederholbare Abfolge der zumindest einen Sitzgruppierung ermöglicht werden. Des Weiteren können durch diese Ausgestaltung individuelle Passagierbedürfnisse vorteilhaft berücksichtigt werden, wodurch ein besonders vorteilhaft hoher Komfort ermöglicht wird. Unter einer "Sitzgruppierung" soll eine Anordnung der wenigstens vier, in dem Flugzeugkabinenabschnitt in einer Sitzspalte unmittelbar hintereinander angeordneten Flugzeugsitzvorrichtungen verstanden werden. Vorzugsweise bildet die zumindest eine Sitzgruppierung eine, insbesondere periodisch, wiederholbare Abfolge aus. Dabei können mehrere identische Sitzgruppierungen, insbesondere entlang einer Flugzeuglängsachse, unmittelbar hintereinander angeordnet werden.

Des Weiteren wird vorgeschlagen, dass die Sitzrichtungen der unmittelbar hintereinander angeordneten Flugzeugsitzvorrichtungen innerhalb der zumindest einen Sitzgruppierung abwechselnd zumindest im Wesentlichen parallel und abgewinkelt zu der Flugzeuglängsachse angeordnet sind. Durch diese Ausgestaltung kann eine vorteilhaft variable und kompakte Flugzeugsitzanordnung erreicht werden. Des Weiteren können dadurch mehrere Flugzeugsitzvorrichtungen vorteilhaft kompakt miteinander kombiniert werden. Dadurch kann eine vorteilhaft große Anzahl an Flugzeugsitzen in dem Flugzeugkabinenabschnitt bereitgestellt werden. Vorzugsweise ist, in Flugrichtung betrachtet, vor und hinter einer Flugzeugsitzvorrichtung, deren Sitzrichtung zumindest im Wesentlichen parallel zu der Flugzeuglängsachse angeordnet ist, jeweils eine Flugzeugsitzvorrichtung angeordnet, deren Sitzrichtung abgewinkelt zu der Flugzeuglängsachse angeordnet ist. Vorzugsweise ist, in Flugrichtung betrachtet, vor und hinter einer Flugzeugsitzvorrichtung, deren Sitzrichtung abgewinkelt zu der Flugzeuglängsachse angeordnet ist, jeweils eine Flugzeugsitzvorrichtung angeordnet, deren Sitzrichtung zumindest im Wesentlichen parallel zu der Flugzeuglängsachse angeordnet ist.

Ferner wird vorgeschlagen, dass in dem Flugzeugkabinenabschnitt in einer Sitzspalte zwei Flugzeugsitzvorrichtungen der mehreren Flugzeugsitzvorrichtungen je einen Flugzeugsitz aufweisen, der gangseitig angeordnet ist, und zwei weitere Flugzeugsitzvorrichtungen der mehreren Flugzeugsitzvorrichtungen, die in einer Flugrichtung betrachtet unmittelbar hinter oder vor den zwei Flugzeugsitzvorrichtungen angeordnet sind, je einen Flugzeugsitz aufweisen, der gangabgewandt angeordnet ist. Durch diese Ausgestaltung kann eine vorteilhaft variable und kompakte Flugzeugsitzanordnung erreicht werden. Zudem können dadurch mehrere Flugzeugsitzvorrichtungen vorteilhaft kompakt miteinander kombiniert werden.

Zudem wird vorgeschlagen, dass in dem Flugzeugkabinenabschnitt in einer Sitzspalte zumindest drei Flugzeugsitzvorrichtungen der mehreren Flugzeugsitzvorrichtungen angeordnet sind, wobei eine Sitzrichtung einer Flugzeugsitzvorrichtung der zumindest drei Flugzeugsitzvorrichtungen zumindest im Wesentlichen parallel zu einer Flugzeuglängsachse angeordnet ist und Sitzrichtungen zweier weiterer Flugzeugsitzvorrichtungen der zumindest drei Flugzeugsitzvorrichtungen abgewinkelt zu der Flugzeuglängsachse angeordnet sind. Durch diese Ausgestaltung kann eine vorteilhaft variable und kompakte Flugzeugsitzanordnung erreicht werden. Des Weiteren können dadurch mehrere Flugzeugsitzvorrichtungen vorteilhaft kompakt miteinander kombiniert werden. Dadurch kann eine vorteilhaft große Anzahl an Flugzeugsitzen in dem Flugzeugkabinenabschnitt bereitgestellt werden. Bevorzugt sind in dem Flugzeugkabinenabschnitt in einer Sitzspalte zumindest drei der Flugzeugsitzvorrichtungen unmittelbar hintereinander angeordnet, wobei Sitzrichtungen zweier der Flugzeugsitzvorrichtungen zumindest im Wesentlich parallel zu einer Flugzeuglängsachse angeordnet sind und eine Sitzrichtung einer weiteren der Flugzeugsitzvorrichtungen abgewinkelt zu der Flugzeuglängsachse angeordnet ist.

Des Weiteren wird vorgeschlagen, dass Flugzeugsitze der Flugzeugsitzvorrichtungen, deren Sitzrichtungen abgewinkelt zu der Flugzeuglängsachse angeordnet sind, unterschiedliche Abstände zu einem Flugzeugkabinengang aufweisen. Durch diese Ausgestaltung kann eine vorteilhaft kompakte und variable Anordnung von Flugzeugsitzvorrichtungen realisiert werden. Unter "unterschiedlichen Abständen zu einem Flugzeugkabinengang" soll insbesondere verstanden werden, dass die Flugzeugsitze gangseitig oder gangabgewandt angeordnet sind. Vorzugsweise weisen Flugzeugsitze der Flugzeugsitzvorrichtungen, deren Sitzrichtungen zumindest im Wesentlichen parallel zu der Flugzeuglängsachse angeordnet sind, unterschiedliche Abstände zu dem Flugzeugkabinengang auf.

Zudem wird vorgeschlagen, dass in dem Flugzeugkabinenabschnitt in zumindest einer Sitzspalte vier unterschiedlich voneinander ausgebildete Flugzeugsitzvorrichtungen der mehreren Flugzeugsitzvorrichtungen unmittelbar hintereinander angeordnet sind, wobei Sitzrichtungen zweier Flugzeugsitzvorrichtungen der vier Flugzeugsitzvorrichtungen zumindest im Wesentlichen parallel zu einer Flugzeuglängsachse angeordnet sind, wobei ein Flugzeugsitz einer Flugzeugsitzvorrichtung der zwei Flugzeugsitzvorrichtungen gangseitig angeordnet ist und ein weiterer Flugzeugsitz einer weiteren Flugzeugsitzvorrichtung der zwei Flugzeugsitzvorrichtungen gangabgewandt angeordnet ist, und Sitzrichtungen zweier weiterer Flugzeugsitzvorrichtungen der vier Flugzeugsitzvorrichtungen abgewinkelt zu der Flugzeuglängsachse angeordnet sind, wobei ein Flugzeugsitz einer Flugzeugsitzvorrichtung der zwei weiteren Flugzeugsitzvorrichtungen gangseitig angeordnet ist und ein weiterer Flugzeugsitz einer weiteren Flugzeugsitzvorrichtung der zwei weiteren Flugzeugsitzvorrichtungen gangabgewandt angeordnet ist. Durch diese Ausgestaltung kann eine vorteilhaft kompakte und variable Anordnung der mehreren Flugzeugsitzvorrichtungen erreicht werden. Des Weiteren können durch diese Ausgestaltung die mehreren Flugzeugsitzvorrichtungen vorteilhaft einfach miteinander kombiniert werden. Ferner können die mehreren Flugzeugsitzvorrichtungen durch diese Ausgestaltung besonders vorteilhaft zueinander positioniert werden. Dadurch kann ein zur Verfügung stehender Raum vorteilhaft effizient ausgenutzt werden. Des Weiteren können durch diese Ausgestaltung für unterschiedliche Passagierbedürfnisse vorteilhaft unterschiedliche Komfortkategorien erreicht werden.

Ferner wird vorgeschlagen, dass in dem Flugzeugkabinenabschnitt zwei Flugzeugsitzvorrichtungen der mehreren Flugzeugsitzvorrichtungen in zwei unmittelbar nebeneinander angeordneten Sitzspalten ein Sitzpaar ausbilden, wobei Sitzrichtungen der zwei Flugzeugsitzvorrichtungen zumindest im Wesentlichen parallel zu einer Flugzeuglängsachse angeordnet sind und Flugzeugsitze der zwei Flugzeugsitzvorrichtungen gangabgewandt angeordnet sind, wobei in den zwei unmittelbar nebeneinander angeordneten Sitzspalten zumindest zwei der Sitzpaare angeordnet sind. Durch diese Ausgestaltung kann eine vorteilhaft variable Flugzeugsitzanordnung bereitgestellt werden. Dadurch können nebeneinander angeordnete Flugzeugsitzvorrichtungen der mehreren Flugzeugsitzvorrichtungen vorteilhaft variabel zueinander positioniert werden. Besonders vorteilhaft können dabei unterschiedliche Bereiche geschaffen werden, die individuellen Anforderungen von Passagieren, insbesondere alleine reisenden Passagieren oder paarweise reisenden Passagieren, gerecht werden. Unter einem "Sitzpaar" soll insbesondere eine Anordnung von genau zwei Flugzeugsitzvorrichtungen verstanden werden, die unmittelbar nebeneinander angeordnet sind und insbesondere nicht durch einen Flugzeugkabinengang voneinander getrennt sind. Vorzugsweise sind die zwei unmittelbar nebeneinander angeordneten Flugzeugsitzvorrichtungen, insbesondere über die Flugzeugkabinenmittelachse, zueinander gespiegelt ausgebildet. Bevorzugt sind die zwei Flugzeugsitzvorrichtungen der mehreren Flugzeugsitzvorrichtungen, die ein Sitzpaar ausbilden, insbesondere in einer Ebene parallel zu dem Flugzeugkabinenboden betrachtet, in Flugrichtung bündig zueinander angeordnet. Vorzugsweise sind die zwei Flugzeugsitzvorrichtungen der mehreren Flugzeugsitzvorrichtungen, die ein Sitzpaar ausbilden, in einem Mittelbereich der Flugzeugkabine angeordnet. Unter einem "Mittelbereich" soll insbesondere ein Bereich in der Mitte der Flugzeugkabine verstanden werden, der von der Flugzeugkabinenmittelachse geschnitten wird. Vorzugsweise ist der Mittelbereich von zwei Flugzeugkabinengängen begrenzt. Besonders bevorzugt sind in dem Mittelbereich der Flugzeugkabine zwei Sitzspalten angeordnet.

Zudem wird vorgeschlagen, dass eine Anordnung von Flugzeugsitzvorrichtungen der mehreren Flugzeugsitzvorrichtungen in dem Flugzeugkabinenabschnitt in zumindest einer Sitzspalte auf einer ersten Flugzeugkabinenseite asymmetrisch zu einer Anordnung von Flugzeugsitzvorrichtungen der mehreren Flugzeugsitzvorrichtungen in zumindest einer Sitzspalte auf einer zweiten Flugzeugkabinenseite ausgebildet ist, wobei die erste Flugzeugkabinenseite durch eine gedachte Flugzeugkabinenmittelebene, die senkrecht zu einem Flugzeugkabinenboden entlang der Flugzeugkabinenmittelachse ausgerichtet ist, von der zweiten Flugzeugkabinenseite getrennt ist. Durch diese Ausgestaltung kann eine vorteilhaft variable Flugzeugsitzanordnung bereitgestellt werden. Dadurch können unterschiedliche Bereiche geschaffen werden, die individuellen Anforderungen von Passagieren gerecht werden. Bevorzugt ist die Flugzeugkabinenmittelachse in der Flugzeugkabinenmittelebene angeordnet. Vorzugsweise weisen die erste Flugzeugkabinenseite und die zweite Flugzeugkabinenseite jeweils einen Flugzeugkabinengang auf. Grundsätzlich ist es denkbar, dass die Flugzeugkabine in dem Flugzeugkabinenabschnitt zumindest eine Trennwand entlang der Flugzeugkabinenmittelachse aufweist, die die erste Flugzeugkabinenseite von der zweiten Flugzeugkabinenseite abtrennt.

Des Weiteren wird vorgeschlagen, dass in zumindest einer Sitzspalte ausschließlich Flugzeugsitzvorrichtungen der mehreren Flugzeugsitzvorrichtungen angeordnet sind, deren Sitzrichtungen abgewinkelt zu der Flugzeuglängsachse angeordnet sind. Durch diese Ausgestaltung kann eine vorteilhaft kompakte Flugzeugsitzanordnung erreicht werden.

Ferner wird vorgeschlagen, dass in zumindest einer Sitzspalte ausschließlich Flugzeugsitzvorrichtungen der mehreren Flugzeugsitzvorrichtungen angeordnet sind, deren Sitzrichtungen zumindest im Wesentlichen parallel zu der Flugzeuglängsachse angeordnet sind. Durch diese Ausgestaltung kann eine vorteilhaft kompakte Flugzeugsitzanordnung erreicht werden.

Zudem wird vorgeschlagen, dass Sitzrichtungen eines Teils der mehreren Flugzeugsitzvorrichtungen in dem Flugzeugkabinenabschnitt zumindest im Wesentlichen entgegengesetzt zu der Flugrichtung ausgerichtet sind. Durch diese Ausgestaltung kann eine vorteilhaft variable Flugzeugsitzanordnung erreicht werden. Des Weiteren kann durch diese Ausgestaltung ein Blickkontakt von Passagieren vorteilhaft vereinfacht werden. Vorzugsweise sind in dem Flugzeugkabinenabschnitt zumindest vier, insbesondere acht, unterschiedlich voneinander ausgebildete Flugzeugsitzvorrichtungen angeordnet. Dabei ist es denkbar, dass jede der unterschiedlich ausgebildeten Flugzeugsitzvorrichtungen mehrfach existiert.

Die erfindungsgemäße Flugzeugsitzanordnung soll hierbei nicht auf die oben beschriebene Anwendung und Ausführungsform beschränkt sein. Insbesondere kann die erfindungsgemäße Flugzeugsitzanordnung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind sieben Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit sie in den Umfang der Ansprüche fallen.

Es zeigen:
- Fig. 1: ein Flugzeug in einer schematischen Darstellung in einem ersten Ausführungsbeispiel,
- Fig. 2: eine erfindungsgemäße Flugzeugsitzanordnung in einer schematischen Darstellung in dem ersten Ausführungsbeispiel,
- Fig. 3: einen Ausschnitt aus der erfindungsgemäßen Flugzeugsitzanordnung in einer schematischen Darstellung in dem ersten Ausführungsbeispiel,
- Fig. 4: die erfindungsgemäße Flugzeugsitzanordnung in einer schematischen Darstellung in dem ersten Ausführungsbeispiel, wobei die Darstellung abgesehen von Bezugszeichen identisch zu der Fig. 2 ist,
- Fig. 5: eine erfindungsgemäße Flugzeugsitzanordnung in einer schematischen Darstellung in einem zweiten Ausführungsbeispiel,
- Fig. 6: eine nicht beanspruchte Flugzeugsitzanordnung in einer schematischen Darstellung in einem dritten Ausführungsbeispiel,
- Fig. 7: eine nicht beanspruchte Flugzeugsitzanordnung in einer schematischen Darstellung in einem vierten Ausführungsbeispiel,
- Fig. 8: eine erfindungsgemäße Flugzeugsitzanordnung in einer schematischen Darstellung in einem fünften Ausführungsbeispiel,
- Fig. 9: eine erfindungsgemäße Flugzeugsitzanordnung in einer schematischen Darstellung in einem sechsten Ausführungsbeispiel und
- Fig. 10: eine erfindungsgemäße Flugzeugsitzanordnung in einer schematischen Darstellung in einem siebten Ausführungsbeispiel.

### Beschreibung der Ausführungsbeispiele

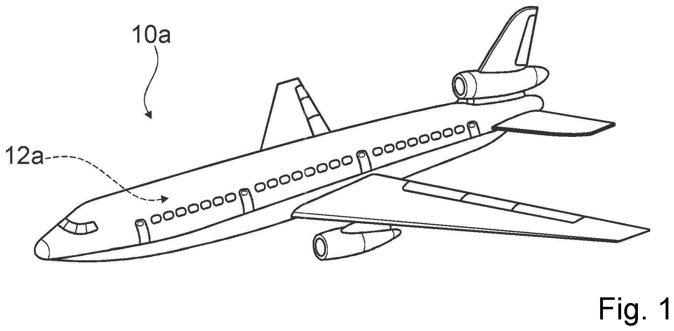

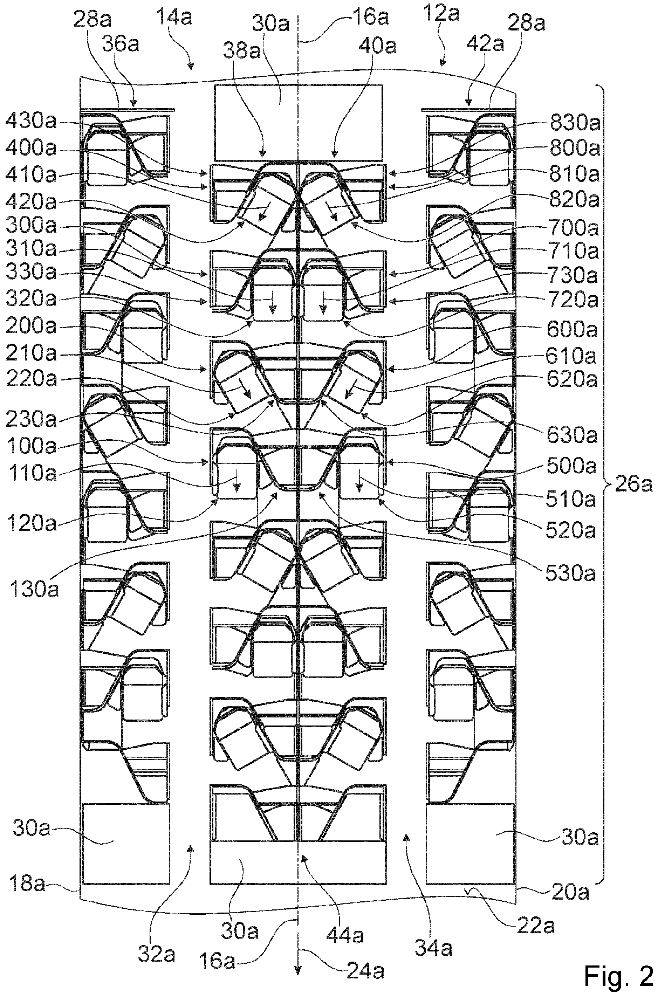

Die Figur 1 zeigt ein Flugzeug 10a. Das Flugzeug 10a weist eine Flugzeugkabine 12a auf. Das Flugzeug 10a weist eine Flugzeugsitzanordnung 14a auf. Die Figuren 2 bis 4 zeigen die Flugzeugsitzanordnung 14a in einem ersten Ausführungsbeispiel. Die Flugzeugsitzanordnung 14a ist zur Verwendung in der teilweise dargestellten Flugzeugkabine 12a des Flugzeugs 10a vorgesehen. Die Flugzeugkabine 12a ist für einen Aufenthalt aller Passagiere während eines Fluges bestimmt.

Die Flugzeugkabine 12a weist eine Flugzeugkabinenmittelachse 16a auf. Die Flugzeugkabinenmittelachse 16a ist als eine Flugzeuglängsachse ausgebildet. Die Flugzeugkabinenmittelachse 16a weist jeweils einen selben Abstand zu sich gegenüberliegenden Flugzeugkabinenaußenwänden 18a, 20a der Flugzeugkabine 12a auf. Die Flugzeugkabinenmittelachse 16a ist parallel zu einer Rollachse des Flugzeugs 10a ausgerichtet. Die Flugzeugkabinenmittelachse 16a ist parallel zu einem Flugzeugkabinenboden 22a der Flugzeugkabine 12a ausgerichtet. Das Flugzeug 10a weist in zumindest einem Betriebszustand eine Flugrichtung 24a auf. Die Flugrichtung 24a ist im vorliegenden Fall idealisiert parallel zu der Flugzeugkabinenmittelachse 16a ausgerichtet.

Die Flugzeugkabine 12a weist entlang der Flugzeugkabinenmittelachse 16a einen Flugzeugkabinenabschnitt 26a auf. Zusätzlich kann die Flugzeugkabine 12a zumindest einen weiteren Flugzeugkabinenabschnitt, in Flugrichtung 24a betrachtet insbesondere vor oder hinter dem Flugzeugkabinenabschnitt 26a, aufweisen. Der Flugzeugkabinenabschnitt 26a ist im vorliegenden Fall durch mehrere Trennelemente 28a und durch mehrere schematisch dargestellte Flugzeugkabinenmodule 30a entlang der Flugzeugkabinenmittelachse 16a begrenzt. Die Trennelemente 28a sind im vorliegenden Fall jeweils als eine Trennwand ausgebildet. Die Flugzeugkabinenmodule 30a sind im vorliegenden Fall jeweils als ein Küchenmodul, als ein Toilettenmodul, als ein Kleiderschrank oder als ein Front-Row-Monument ausgebildet.

Die Flugzeugsitzanordnung 14a umfasst mehrere in dem Flugzeugkabinenabschnitt 26a angeordnete Flugzeugsitzvorrichtungen 100a, 200a, 300a, 400a, 500a, 600a, 700a, 800a. Die Flugzeugsitzvorrichtungen 100a, 200a, 300a, 400a, 500a, 600a, 700a, 800a sind dazu vorgesehen, auf dem Flugzeugkabinenboden 22a der Flugzeugkabine 12a aufgeständert zu werden. Im vorliegenden Fall sind die Flugzeugsitzvorrichtungen 100a, 200a, 300a, 400a, 500a, 600a, 700a, 800a jeweils als eine Business-Class-Sitzvorrichtung ausgebildet. Die mehreren Flugzeugsitzvorrichtungen 100a, 200a, 300a, 400a, 500a, 600a, 700a, 800a sind unterschiedlich voneinander ausgebildet.

Die Flugzeugsitzanordnung 14a umfasst eine erste Flugzeugsitzvorrichtung 100a der mehreren Flugzeugsitzvorrichtungen 100a, 200a, 300a, 400a, 500a, 600a, 700a, 800a. Die erste Flugzeugsitzvorrichtung 100a weist eine Sitzrichtung 110a auf. Die Sitzrichtung 110a der ersten Flugzeugsitzvorrichtung 100a ist in Flugrichtung 24a ausgerichtet. Die Sitzrichtung 110a der ersten Flugzeugsitzvorrichtung 100a entspricht der Flugrichtung 24a. Die Sitzrichtung 110a der ersten Flugzeugsitzvorrichtung 100a ist zumindest im Wesentlichen parallel zu der Flugzeugkabinenmittelachse 16a ausgerichtet. Die erste Flugzeugsitzvorrichtung 100a weist eine Liegerichtung auf. Im vorliegenden Fall entspricht die Liegerichtung der ersten Flugzeugsitzvorrichtung 100a der Sitzrichtung 110a der ersten Flugzeugsitzvorrichtung 100a. Grundsätzlich ist es auch denkbar, dass eine Liegerichtung einer Flugzeugsitzvorrichtung von einer Sitzrichtung dieser Flugzeugsitzvorrichtung abweicht, insbesondere um einen Winkel von höchstens 18 Grad. Die Liegerichtung der ersten Flugzeugsitzvorrichtung 100a ist in Flugrichtung 24a ausgerichtet. Die Liegerichtung der ersten Flugzeugsitzvorrichtung 100a entspricht der Flugrichtung 24a. Die Liegerichtung der ersten Flugzeugsitzvorrichtung 100a ist zumindest im Wesentlichen parallel zu der Flugzeugkabinenmittelachse 16a ausgerichtet.

Die Flugzeugsitzanordnung 14a umfasst eine zweite Flugzeugsitzvorrichtung 200a der mehreren Flugzeugsitzvorrichtungen 100a, 200a, 300a, 400a, 500a, 600a, 700a, 800a. Die zweite Flugzeugsitzvorrichtung 200a weist eine Sitzrichtung 210a auf. Die Sitzrichtung 210a der zweiten Flugzeugsitzvorrichtung 200a weist eine Richtungskomponente in Flugrichtung 24a auf. Die Sitzrichtung 210a der zweiten Flugzeugsitzvorrichtung 200a weicht von der Flugrichtung 24a ab. Die Sitzrichtung 210a der zweiten Flugzeugsitzvorrichtung 200a ist im vorliegenden Fall um 30 Grad abgewinkelt zu der Flugzeugkabinenmittelachse 16a ausgerichtet. Die zweite Flugzeugsitzvorrichtung 200a weist eine Liegerichtung auf. Im vorliegenden Fall entspricht die Liegerichtung der zweiten Flugzeugsitzvorrichtung 200a der Sitzrichtung 210a der zweiten Flugzeugsitzvorrichtung 200a. Die Liegerichtung der zweiten Flugzeugsitzvorrichtung 200a weist eine Richtungskomponente in Flugrichtung 24a auf. Die Liegerichtung der zweiten Flugzeugsitzvorrichtung 200a weicht von der Flugrichtung 24a ab. Die Liegerichtung der zweiten Flugzeugsitzvorrichtung 200a ist im vorliegenden Fall um 30 Grad abgewinkelt zu der Flugzeugkabinenmittelachse 16a ausgerichtet.

Die Flugzeugsitzanordnung 14a umfasst eine dritte Flugzeugsitzvorrichtung 300a der mehreren Flugzeugsitzvorrichtungen 100a, 200a, 300a, 400a, 500a, 600a, 700a, 800a. Die dritte Flugzeugsitzvorrichtung 300a weist eine Sitzrichtung 310a auf. Die Sitzrichtung 310a der dritten Flugzeugsitzvorrichtung 300a ist in Flugrichtung 24a ausgerichtet. Die Sitzrichtung 310a der dritten Flugzeugsitzvorrichtung 300a entspricht der Flugrichtung 24a. Die Sitzrichtung 310a der dritten Flugzeugsitzvorrichtung 300a ist zumindest im Wesentlichen parallel zu der Flugzeugkabinenmittelachse 16a ausgerichtet. Die dritte Flugzeugsitzvorrichtung 300a weist eine Liegerichtung auf. Im vorliegenden Fall entspricht die Liegerichtung der dritten Flugzeugsitzvorrichtung 300a der Sitzrichtung 310a der dritten Flugzeugsitzvorrichtung 300a. Die Liegerichtung der dritten Flugzeugsitzvorrichtung 300a ist in Flugrichtung 24a ausgerichtet. Die Liegerichtung der dritten Flugzeugsitzvorrichtung 300a entspricht der Flugrichtung 24a. Die Liegerichtung der dritten Flugzeugsitzvorrichtung 300a ist zumindest im Wesentlichen parallel zu der Flugzeugkabinenmittelachse 16a ausgerichtet.

Die Flugzeugsitzanordnung 14a umfasst eine vierte Flugzeugsitzvorrichtung 400a der mehreren Flugzeugsitzvorrichtungen 100a, 200a, 300a, 400a, 500a, 600a, 700a, 800a. Die vierte Flugzeugsitzvorrichtung 400a weist eine Sitzrichtung 410a auf. Die Sitzrichtung 410a der vierten Flugzeugsitzvorrichtung 400a weist eine Richtungskomponente in Flugrichtung 24a auf. Die Sitzrichtung 410a der vierten Flugzeugsitzvorrichtung 400a weicht von der Flugrichtung 24a ab. Die Sitzrichtung 410a der vierten Flugzeugsitzvorrichtung 400a ist im vorliegenden Fall um 30 Grad abgewinkelt zu der Flugzeugkabinenmittelachse 16a ausgerichtet. Die vierte Flugzeugsitzvorrichtung 400a weist eine Liegerichtung auf. Im vorliegenden Fall entspricht die Liegerichtung der vierten Flugzeugsitzvorrichtung 400a der Sitzrichtung 410a der vierten Flugzeugsitzvorrichtung 400a. Die Liegerichtung der vierten Flugzeugsitzvorrichtung 400a weist eine Richtungskomponente in Flugrichtung 24a auf. Die Liegerichtung der vierten Flugzeugsitzvorrichtung 400a weicht von der Flugrichtung 24a ab. Die Liegerichtung der vierten Flugzeugsitzvorrichtung 400a ist im vorliegenden Fall um 30 Grad abgewinkelt zu der Flugzeugkabinenmittelachse 16a ausgerichtet.

Die erste Flugzeugsitzvorrichtung 100a, die zweite Flugzeugsitzvorrichtung 200a, die dritte Flugzeugsitzvorrichtung 300a und die vierte Flugzeugsitzvorrichtung 400a sind unterschiedlich voneinander ausgebildet.

Die Flugzeugsitzanordnung 14a umfasst eine fünfte Flugzeugsitzvorrichtung 500a der mehreren Flugzeugsitzvorrichtungen 100a, 200a, 300a, 400a, 500a, 600a, 700a, 800a. Die fünfte Flugzeugsitzvorrichtung 500a ist über eine Flugzeuglängsachse, insbesondere über die Flugzeugkabinenmittelachse 16a, gespiegelt zu der ersten Flugzeugsitzvorrichtung 100a ausgebildet. Die fünfte Flugzeugsitzvorrichtung 500a weist eine Sitzrichtung 510a auf. Die Sitzrichtung 510a der fünften Flugzeugsitzvorrichtung 500a ist in Flugrichtung 24a ausgerichtet. Die Sitzrichtung 510a der fünften Flugzeugsitzvorrichtung 500a entspricht der Flugrichtung 24a. Die Sitzrichtung 510a der fünften Flugzeugsitzvorrichtung 500a ist zumindest im Wesentlichen parallel zu der Flugzeugkabinenmittelachse 16a ausgerichtet. Die fünfte Flugzeugsitzvorrichtung 500a weist eine Liegerichtung auf. Im vorliegenden Fall entspricht die Liegerichtung der fünften Flugzeugsitzvorrichtung 500a der Sitzrichtung 510a der fünften Flugzeugsitzvorrichtung 500a. Die Liegerichtung der fünften Flugzeugsitzvorrichtung 500a ist in Flugrichtung 24a ausgerichtet. Die Liegerichtung der fünften Flugzeugsitzvorrichtung 500a entspricht der Flugrichtung 24a. Die Liegerichtung der fünften Flugzeugsitzvorrichtung 500a ist zumindest im Wesentlichen parallel zu der Flugzeugkabinenmittelachse 16a ausgerichtet.

Die Flugzeugsitzanordnung 14a umfasst eine sechste Flugzeugsitzvorrichtung 600a der mehreren Flugzeugsitzvorrichtungen 100a, 200a, 300a, 400a, 500a, 600a, 700a, 800a. Die sechste Flugzeugsitzvorrichtung 600a ist über eine Flugzeuglängsachse, insbesondere über die Flugzeugkabinenmittelachse 16a, gespiegelt zu der zweiten Flugzeugsitzvorrichtung 200a ausgebildet. Die sechste Flugzeugsitzvorrichtung 600a weist eine Sitzrichtung 610a auf. Die Sitzrichtung 610a der sechsten Flugzeugsitzvorrichtung 600a weist eine Richtungskomponente in Flugrichtung 24a auf.

Die Sitzrichtung 610a der sechsten Flugzeugsitzvorrichtung 600a weicht von der Flugrichtung 24a ab. Die Sitzrichtung 610a der sechsten Flugzeugsitzvorrichtung 600a ist im vorliegenden Fall um 30 Grad abgewinkelt zu der Flugzeugkabinenmittelachse 16a ausgerichtet. Die sechste Flugzeugsitzvorrichtung 600a weist eine Liegerichtung auf. Im vorliegenden Fall entspricht die Liegerichtung der sechsten Flugzeugsitzvorrichtung 600a der Sitzrichtung 610a der sechsten Flugzeugsitzvorrichtung 600a. Die Liegerichtung der sechsten Flugzeugsitzvorrichtung 600a weist eine Richtungskomponente in Flugrichtung 24a auf. Die Liegerichtung der sechsten Flugzeugsitzvorrichtung 600a weicht von der Flugrichtung 24a ab. Die Liegerichtung der sechsten Flugzeugsitzvorrichtung 600a ist im vorliegenden Fall um 30 Grad abgewinkelt zu der Flugzeugkabinenmittelachse 16a ausgerichtet.

Die Flugzeugsitzanordnung 14a umfasst eine siebte Flugzeugsitzvorrichtung 700a der mehreren Flugzeugsitzvorrichtungen 100a, 200a, 300a, 400a, 500a, 600a, 700a, 800a. Die siebte Flugzeugsitzvorrichtung 700a ist über eine Flugzeuglängsachse, insbesondere über die Flugzeugkabinenmittelachse 16a, gespiegelt zu der dritten Flugzeugsitzvorrichtung 300a ausgebildet. Die siebte Flugzeugsitzvorrichtung 700a weist eine Sitzrichtung 710a auf. Die Sitzrichtung 710a der siebten Flugzeugsitzvorrichtung 700a ist in Flugrichtung 24a ausgerichtet. Die Sitzrichtung 710a der siebten Flugzeugsitzvorrichtung 700a entspricht der Flugrichtung 24a. Die Sitzrichtung 710a der siebten Flugzeugsitzvorrichtung 700a ist zumindest im Wesentlichen parallel zu der Flugzeugkabinenmittelachse 16a ausgerichtet. Die siebte Flugzeugsitzvorrichtung 700a weist eine Liegerichtung auf. Im vorliegenden Fall entspricht die Liegerichtung der siebten Flugzeugsitzvorrichtung 700a der Sitzrichtung 710a der siebten Flugzeugsitzvorrichtung 700a. Die Liegerichtung der siebten Flugzeugsitzvorrichtung 700a ist in Flugrichtung 24a ausgerichtet. Die Liegerichtung der siebten Flugzeugsitzvorrichtung 700a entspricht der Flugrichtung 24a. Die Liegerichtung der siebten Flugzeugsitzvorrichtung 700a ist zumindest im Wesentlichen parallel zu der Flugzeugkabinenmittelachse 16a ausgerichtet.

Die Flugzeugsitzanordnung 14a umfasst eine achte Flugzeugsitzvorrichtung 800a der mehreren Flugzeugsitzvorrichtungen 100a, 200a, 300a, 400a, 500a, 600a, 700a, 800a. Die achte Flugzeugsitzvorrichtung 800a ist über eine Flugzeuglängsachse, insbesondere über die Flugzeugkabinenmittelachse 16a, gespiegelt zu der vierten Flugzeugsitzvorrichtung 400a ausgebildet. Die achte Flugzeugsitzvorrichtung 800a weist eine Sitzrichtung 810a auf. Die Sitzrichtung 810a der achten Flugzeugsitzvorrichtung 800a weist eine Richtungskomponente in Flugrichtung 24a auf. Die Sitzrichtung 810a der achten Flugzeugsitzvorrichtung 800a weicht von der Flugrichtung 24a ab. Die Sitzrichtung 810a der achten Flugzeugsitzvorrichtung 800a ist im vorliegenden Fall um 30 Grad abgewinkelt zu der Flugzeugkabinenmittelachse 16a ausgerichtet. Die achte Flugzeugsitzvorrichtung 800a weist eine Liegerichtung auf. Im vorliegenden Fall entspricht die Liegerichtung der achten Flugzeugsitzvorrichtung 800a der Sitzrichtung 810a der achten Flugzeugsitzvorrichtung 800a. Die Liegerichtung der achten Flugzeugsitzvorrichtung 800a weist eine Richtungskomponente in Flugrichtung 24a auf. Die Liegerichtung der achten Flugzeugsitzvorrichtung 800a weicht von der Flugrichtung 24a ab. Die Liegerichtung der achten Flugzeugsitzvorrichtung 800a ist im vorliegenden Fall um 30 Grad abgewinkelt zu der Flugzeugkabinenmittelachse 16a ausgerichtet.

Die fünfte Flugzeugsitzvorrichtung 500a, die sechste Flugzeugsitzvorrichtung 600a, die siebte Flugzeugsitzvorrichtung 700a und die achte Flugzeugsitzvorrichtung 800a sind unterschiedlich voneinander ausgebildet.

Im vorliegenden Fall umfasst die Flugzeugsitzanordnung 14a acht unterschiedlich ausgebildete Flugzeugsitzvorrichtungen 100a, 200a, 300a, 400a, 500a, 600a, 700a, 800a, die jeweils zumindest einmal in der Flugzeugsitzanordnung 14a vorhanden sind. Die erste Flugzeugsitzvorrichtung 100a, die zweite Flugzeugsitzvorrichtung 200a, die dritte Flugzeugsitzvorrichtung 300a, die vierte Flugzeugsitzvorrichtung 400a, die fünfte Flugzeugsitzvorrichtung 500a, die sechste Flugzeugsitzvorrichtung 600a, die siebte Flugzeugsitzvorrichtung 700a und die achte Flugzeugsitzvorrichtung 800a sind unterschiedlich voneinander ausgebildet. In dem Flugzeugkabinenabschnitt 26a sind im vorliegenden Fall acht unterschiedlich voneinander ausgebildete Flugzeugsitzvorrichtungen 100a, 200a, 300a, 400a, 500a, 600a, 700a, 800a angeordnet.

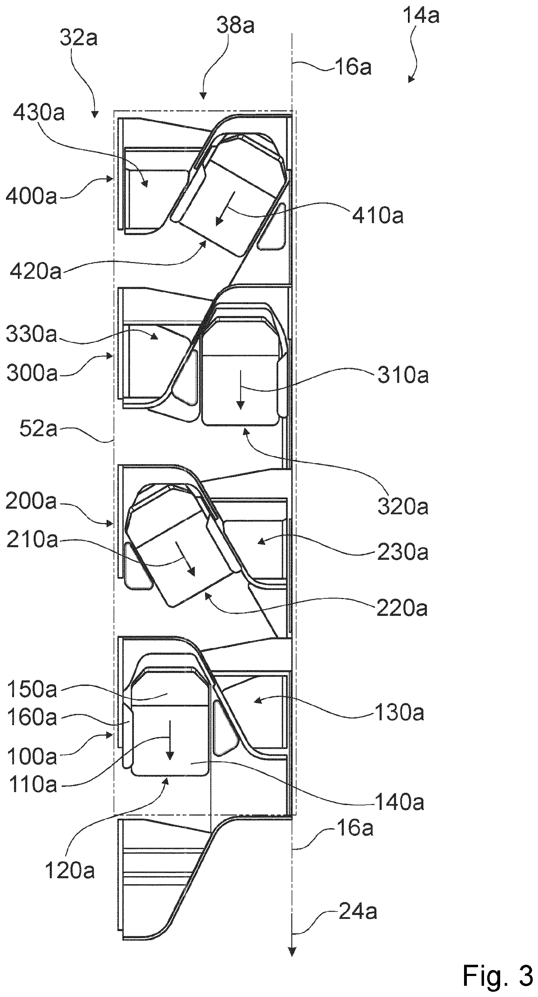

Die Flugzeugsitzvorrichtungen 100a, 200a, 300a, 400a, 500a, 600a, 700a, 800a weisen jeweils einen Flugzeugsitz auf. Die erste Flugzeugsitzvorrichtung 100a weist einen ersten Flugzeugsitz 120a auf. Die zweite Flugzeugsitzvorrichtung 200a weist einen zweiten Flugzeugsitz 220a auf. Die dritte Flugzeugsitzvorrichtung 300a weist einen dritten Flugzeugsitz 320a auf. Die vierte Flugzeugsitzvorrichtung 400a weist einen vierten Flugzeugsitz 420a auf. Die fünfte Flugzeugsitzvorrichtung 500a weist einen fünften Flugzeugsitz 520a auf. Die sechste Flugzeugsitzvorrichtung 600a weist einen sechsten Flugzeugsitz 620a auf. Die siebte Flugzeugsitzvorrichtung 700a weist einen siebten Flugzeugsitz 720a auf. Die achte Flugzeugsitzvorrichtung 800a weist einen achten Flugzeugsitz 820a auf. Die Flugzeugsitze 120a, 220a, 320a, 420a, 520a, 620a, 720a, 820a sind jeweils dazu vorgesehen, einen Sitzplatz für einen nicht dargestellten Passagier im Flugzeug 10a bereitzustellen. Die Flugzeugsitze 120a, 220a, 320a, 420a, 520a, 620a, 720a, 820a umfassen jeweils einen Sitzboden. Die Flugzeugsitze120a, 220a, 320a, 420a, 520a, 620a, 720a, 820a umfassen jeweils eine Rückenlehne. Die Flugzeugsitze 120a, 220a, 320a, 420a, 520a, 620a, 720a, 820a umfassen jeweils eine nicht näher dargestellte Beinstütze. Die Flugzeugsitze 120a, 220a, 320a, 420a, 520a, 620a, 720a, 820a umfassen jeweils eine Armlehne. In der Figur 3 sind ein Sitzboden 140a, eine Rückenlehne 150a und eine Armlehne 160a des ersten Flugzeugsitzes 120a exemplarisch mit einem Bezugszeichen versehen. Im vorliegenden Fall sind die Flugzeugsitze 120a, 220a, 320a, 420a, 520a, 620a, 720a, 820a im Wesentlichen identisch ausgebildet. Im vorliegenden Fall unterscheiden sich die Flugzeugsitze 120a, 220a, 320a, 420a, 520a, 620a, 720a, 820a selbst lediglich durch eine Anordnung der Armlehne an den Flugzeugsitzen 120a, 220a, 320a, 420a, 520a, 620a, 720a, 820a. Zusätzlich können die Flugzeugsitze 120a, 220a, 320a, 420a, 520a, 620a, 720a, 820a jeweils weitere, nicht näher dargestellte Anbauteile, beispielsweise eine Kopfstütze oder wenigstens eine weitere Armlehne, umfassen. Die Flugzeugsitze 120a, 220a, 320a, 420a, 520a, 620a, 720a, 820a sind jeweils als ein Full-Flat-Sitz ausgebildet. Die Flugzeugsitze 120a, 220a, 320a, 420a, 520a, 620a, 720a, 820a sind jeweils zwischen einer Sitzstellung und einer Liegestellung verstellbar. In den Figuren 2 und 3 sind die Flugzeugsitze 120a, 220a, 320a, 420a, 520a, 620a, 720a, 820a jeweils in der Sitzstellung dargestellt. Die Flugzeugsitze 120a, 220a, 320a, 420a, 520a, 620a, 720a, 820a umfassen jeweils wenigstens eine nicht näher dargestellte Verstelleinheit, die dazu vorgesehen ist, den Flugzeugsitz 120a, 220a, 320a, 420a, 520a, 620a, 720a, 820a zwischen der Sitzstellung und der Liegestellung elektromechanisch zu verstellen. Grundsätzlich können zwischen der Sitzstellung und der Liegestellung weitere Stellungen vorgesehen sein, die insbesondere eine kombinierte Sitz- und Liegestellung ausbilden. Die Flugzeugsitze 120a, 220a, 320a, 420a, 520a, 620a, 720a, 820a bilden jeweils in der Liegestellung eine zumindest im Wesentlichen ebene Liegefläche aus.

Die Flugzeugsitzvorrichtungen 100a, 200a, 300a, 400a, 500a, 600a, 700a, 800a weisen jeweils eine Konsole auf. Die erste Flugzeugsitzvorrichtung 100a weist eine erste Konsole 130a auf. Die erste Konsole 130a ist gangabgewandt angeordnet. Die zweite Flugzeugsitzvorrichtung 200a weist eine zweite Konsole 230a auf. Die zweite Konsole 230a ist gangabgewandt angeordnet. Die dritte Flugzeugsitzvorrichtung 300a weist eine dritte Konsole 330a auf. Die dritte Konsole 330a ist gangseitig angeordnet. Die vierte Flugzeugsitzvorrichtung 400a weist eine vierte Konsole 430a auf. Die vierte Konsole 430a ist gangseitig angeordnet. Die fünfte Flugzeugsitzvorrichtung 500a weist eine fünfte Konsole 530a auf. Die fünfte Konsole 530a ist gangabgewandt angeordnet. Die sechste Flugzeugsitzvorrichtung 600a weist eine sechste Konsole 630a auf. Die sechste Konsole 630a ist gangabgewandt angeordnet. Die siebte Flugzeugsitzvorrichtung 700a weist eine siebte Konsole 730a auf. Die siebte Konsole 730a ist gangseitig angeordnet. Die achte Flugzeugsitzvorrichtung 800a weist eine achte Konsole 830a auf. Die achte Konsole 830a ist gangseitig angeordnet. Die Konsolen 130a, 230a, 330a, 430a, 530a, 630a, 730a, 830a sind jeweils von zwei unmittelbar in einer einzelnen Sitzspalte benachbart zueinander angeordneten Flugzeugsitzvorrichtungen 100a, 200a, 300a, 400a, 500a, 600a, 700a, 800a nutzbar. Die Konsolen 130a, 230a, 330a, 430a, 530a, 630a, 730a, 830a sind jeweils von zwei unmittelbar hintereinander angeordneten Flugzeugsitzvorrichtungen 100a, 200a, 300a, 400a, 500a, 600a, 700a, 800a nutzbar. Die Konsolen 130a, 230a, 330a, 430a, 530a, 630a, 730a, 830a bilden jeweils eine Ablagefläche aus. Die Ablagefläche ist für einen unmittelbar zu einer entsprechenden Konsole 130a, 230a, 330a, 430a, 530a, 630a, 730a, 830a benachbarten Flugzeugsitz 120a, 220a, 320a, 420a, 520a, 620a, 720a, 820a vorgesehen. Zusätzlich können die Konsolen 130a, 230a, 330a, 430a, 530a, 630a, 730a, 830a jeweils zumindest einen Stauraum, insbesondere für ein Schwimmwestenmodul, für Literatur und/oder für persönliche Gegenstände, ausbilden.

Die Flugzeugsitzvorrichtungen 100a, 200a, 300a, 400a, 500a, 600a, 700a, 800a umfassen jeweils eine Tischeinheit. Im vorliegenden Fall ist die Tischeinheit an der Konsole 130a, 230a, 330a, 430a, 530a, 630a, 730a, 830a angeordnet. Die Tischeinheit umfasst einen schwenk- und/oder ausziehbaren Tisch. Der Tisch ist in zumindest einem Betriebszustand zumindest teilweise in einem Bereich oberhalb eines Sitzbodens positionierbar.

Die Konsolen 130a, 230a, 330a, 430a, 530a, 630a, 730a, 830a bilden jeweils einen nicht näher dargestellten Fußraum aus. Die Fußräume sind jeweils der in Sitzrichtung 110a, 210a, 310a, 410a, 510a, 610a, 710a, 810a der entsprechenden Flugzeugsitzvorrichtung 100a, 200a, 300a, 400a, 500a, 600a, 700a, 800a betrachtet unmittelbar vor dieser Flugzeugsitzvorrichtung 100a, 200a, 300a, 400a, 500a, 600a, 700a, 800a angeordneten Flugzeugsitzvorrichtung zugeordnet. Die Flugzeugsitzvorrichtungen 100a, 200a, 300a, 400a, 500a, 600a, 700a, 800a weisen jeweils eine nicht näher dargestellte Ottomane auf. Die Ottomanen sind jeweils innerhalb der Konsolen 130a, 230a, 330a, 430a, 530a, 630a, 730a, 830a angeordnet. Die Ottomanen sind jeweils als eine Bein- und/oder Fußablage für einen Passagier vorgesehen. Die Ottomanen sind jeweils der in Sitzrichtung 110a, 210a, 310a, 410a, 510a, 610a, 710a, 810a der entsprechenden Flugzeugsitzvorrichtung 100a, 200a, 300a, 400a, 500a, 600a, 700a, 800a betrachtet unmittelbar vor dieser Flugzeugsitzvorrichtung 100a, 200a, 300a, 400a, 500a, 600a, 700a, 800a angeordneten Flugzeugsitzvorrichtung zugeordnet.

Die Flugzeugsitzvorrichtungen 100a, 200a, 300a, 400a, 500a, 600a, 700a, 800a weisen jeweils eine Umhausung auf. Die Umhausungen sind jeweils als ein Shellelement ausgebildet. Die Umhausungen sind jeweils in Flugrichtung 24a betrachtet vor den entsprechenden Flugzeugsitzen 120a, 220a, 320a, 420a, 520a, 620a, 720a, 820a angeordnet. Die Umhausungen sind dazu vorgesehen, unmittelbar hintereinander angeordnete Flugzeugsitzvorrichtungen 100a, 200a, 300a, 400a, 500a, 600a, 700a, 800a voneinander optisch abzutrennen. Die Umhausungen sind im vorliegenden Fall jeweils mit einer Konsole 130a, 230a, 330a, 430a, 530a, 630a, 730a, 830a verbunden. Grundsätzlich können Umhausungen mehrerer der Flugzeugsitzvorrichtungen 100a, 200a, 300a, 400a, 500a, 600a, 700a, 800a auch einstückig miteinander ausgebildet sein.

Die Flugzeugsitzvorrichtungen 100a, 200a, 300a, 400a, 500a, 600a, 700a, 800a umfassen jeweils einen Bildschirm. Die Bildschirme sind jeweils an einer Rückseite der Umhausungen angeordnet. Die Bildschirme sind jeweils der in Sitzrichtung 110a, 210a, 310a, 410a, 510a, 610a, 710a, 810a der entsprechenden Flugzeugsitzvorrichtung 100a, 200a, 300a, 400a, 500a, 600a, 700a, 800a betrachtet unmittelbar vor dieser Flugzeugsitzvorrichtung 100a, 200a, 300a, 400a, 500a, 600a, 700a, 800a angeordneten Flugzeugsitzvorrichtung zugeordnet.

Die Flugzeugsitzvorrichtungen 100a, 200a, 300a, 400a, 500a, 600a, 700a, 800a weisen jeweils zumindest eine Trenneinheit auf, die dazu vorgesehen ist, den Flugzeugsitzbereich bedarfsgerecht von einer Umgebung optisch abzuschirmen. Dadurch kann eine Privatsphäre vorteilhaft erhöht werden. Die zumindest eine Trenneinheit weist wenigstens ein verstellbares Trennelement auf, das beispielsweise als eine Schiebetüre ausgebildet ist.

Die Flugzeugsitzvorrichtungen 100a, 200a, 300a, 400a, 500a, 600a, 700a, 800a bilden jeweils einen Flugzeugsitzbereich aus. In den Flugzeugsitzbereichen sind jeweils die entsprechenden Flugzeugsitze 120a, 220a, 320a, 420a, 520a, 620a, 720a, 820a der Flugzeugsitzvorrichtungen 100a, 200a, 300a, 400a, 500a, 600a, 700a, 800a angeordnet. Die Flugzeugsitzbereiche sind jeweils zu einem Aufenthalt eines Passagiers während eines Fluges bestimmt. Die Flugzeugsitzvorrichtungen 100a, 200a, 300a, 400a, 500a, 600a, 700a, 800a weisen unterschiedlich ausgeformte und/oder unterschiedlich angeordnete Bauteile in den entsprechenden Flugzeugsitzbereichen auf. Dadurch sind die erste Flugzeugsitzvorrichtung 100a, die zweite Flugzeugsitzvorrichtung 200a, die dritte Flugzeugsitzvorrichtung 300a und die vierte Flugzeugsitzvorrichtung 400a verschieden voneinander ausgebildet. Des Weiteren sind dadurch die fünfte Flugzeugsitzvorrichtung 500a, die sechste Flugzeugsitzvorrichtung 600a, die siebte Flugzeugsitzvorrichtung 700a und die achte Flugzeugsitzvorrichtung 800a verschieden voneinander ausgebildet. Insbesondere eine Anordnung und eine Ausrichtung der Flugzeugsitze 120a, 220a, 320a, 420a in den jeweiligen Flugzeugsitzbereichen unterscheiden sich bei der ersten Flugzeugsitzvorrichtung 100a, der zweiten Flugzeugsitzvorrichtung 200a, der dritten Flugzeugsitzvorrichtung 300a und der vierten Flugzeugsitzvorrichtung 400a. Des Weiteren unterscheiden sich insbesondere eine Anordnung und eine Ausrichtung der Flugzeugsitze 520a, 620a, 720a, 820a in den jeweiligen Flugzeugsitzbereichen bei der fünften Flugzeugsitzvorrichtung 500a, der sechsten Flugzeugsitzvorrichtung 600a, der siebten Flugzeugsitzvorrichtung 700a und der achten Flugzeugsitzvorrichtung 800a.

Im vorliegenden Fall weist die Flugzeugkabine 12a in dem Flugzeugkabinenabschnitt 26a zwei Flugzeugkabinengänge 32a, 34a auf. Die Flugzeugkabine 12a weist einen ersten Flugzeugkabinengang 32a und einen zweiten Flugzeugkabinengang 34a auf. Alternativ wäre auch denkbar, dass die Flugzeugkabine 12a lediglich einen Flugzeugkabinengang aufweist. Die Flugzeugkabinengänge 32a, 34a erstrecken sich jeweils zumindest im Wesentlichen entlang einer nicht näher dargestellten Flugzeuglängsachse. Jede der mehreren Flugzeugsitzvorrichtungen 100a, 200a, 300a, 400a, 500a, 600a, 700a, 800a hat jeweils einen direkten Zugang zu dem ersten Flugzeugkabinengang 32a oder zu dem zweiten Flugzeugkabinengang 34a. Die erste Flugzeugsitzvorrichtung 100a hat einen direkten Zugang zu dem ersten Flugzeugkabinengang 32a. Die zweite Flugzeugsitzvorrichtung 200a hat einen direkten Zugang zu dem ersten Flugzeugkabinengang 32a. Die dritte Flugzeugsitzvorrichtung 300a hat einen direkten Zugang zu dem ersten Flugzeugkabinengang 32a. Die vierte Flugzeugsitzvorrichtung 400a hat einen direkten Zugang zu dem ersten Flugzeugkabinengang 32a. Die fünfte Flugzeugsitzvorrichtung 500a hat einen direkten Zugang zu dem zweiten Flugzeugkabinengang 34a. Die sechste Flugzeugsitzvorrichtung 600a hat einen direkten Zugang zu dem zweiten Flugzeugkabinengang 34a. Die siebte Flugzeugsitzvorrichtung 700a hat einen direkten Zugang zu dem zweiten Flugzeugkabinengang 34a. Die achte Flugzeugsitzvorrichtung 800a hat einen direkten Zugang zu dem zweiten Flugzeugkabinengang 34a. Die Flugzeugsitzbereiche sind jeweils von dem ersten Flugzeugkabinengang 32a oder dem zweiten Flugzeugkabinengang 34a zugänglich.

Im vorliegenden Fall umfasst die Flugzeugsitzanordnung 14a vier Sitzspalten 36a, 38a, 40a, 42a. Alternativ wäre auch denkbar, dass die Flugzeugsitzanordnung 14a lediglich zwei oder drei Sitzspalten aufweist. Die Flugzeugsitzanordnung 14a umfasst eine erste äußere Sitzspalte 36a und eine erste innere Sitzspalte 38a. Die erste äußere Sitzspalte 36a und die erste innere Sitzspalte 38a sind durch den ersten Flugzeugkabinengang 32a voneinander beabstandet. Die Flugzeugsitzanordnung 14a umfasst eine zweite innere Sitzspalte 40a und eine zweite äußere Sitzspalte 42a. Die zweite äußere Sitzspalte 42a und die zweite innere Sitzspalte 40a sind durch den zweiten Flugzeugkabinengang 34a voneinander beabstandet. Im vorliegenden Fall ist die erste innere Sitzspalte 38a über die Flugzeugkabinenmittelachse 16a symmetrisch zu der zweiten inneren Sitzspalte 40a ausgebildet. Im vorliegenden Fall ist die erste äußere Sitzspalte 36a über die Flugzeugkabinenmittelachse 16a symmetrisch zu der zweiten äußeren Sitzspalte 42a ausgebildet. Die erste innere Sitzspalte 38a und die zweite innere Sitzspalte 40a sind unmittelbar nebeneinander angeordnet. Die Flugzeugkabine 12a weist einen Mittelbereich 44a auf. Der Mittelbereich 44a ist von den zwei Flugzeugkabinengängen 32a, 34a begrenzt. Die erste innere Sitzspalte 38a und die zweite innere Sitzspalte 40a sind in dem Mittelbereich 44a angeordnet. Die erste innere Sitzspalte 38a und die zweite innere Sitzspalte 40a bilden eine Doppelsitzspalte aus. Die erste Konsole 130a und die fünfte Konsole 530a sind in dem Mittelbereich 44a unmittelbar nebeneinander angeordnet und insbesondere nicht durch einen Flugzeugsitz voneinander beabstandet. Die erste Konsole 130a und die fünfte Konsole 530a sind in dem Mittelbereich 44a unmittelbar nebeneinander angeordnet und insbesondere nicht durch einen Flugzeugsitz voneinander beabstandet. Grundsätzlich wäre es auch denkbar, dass lediglich eine Sitzspalte in dem Mittelbereich 44a angeordnet ist. Grundsätzlich ist es auch denkbar, dass die erste innere Sitzspalte 38a mit der zweiten äußeren Sitzspalte 42a und/oder die zweite innere Sitzspalte 40a mit der ersten äußeren Sitzspalte 36a tauschbar ist.

Die erste Flugzeugsitzvorrichtung 100a und die fünfte Flugzeugsitzvorrichtung 500a sind unmittelbar nebeneinander angeordnet. Die zweite Flugzeugsitzvorrichtung 200a und die sechste Flugzeugsitzvorrichtung 600a sind unmittelbar nebeneinander angeordnet. Die dritte Flugzeugsitzvorrichtung 300a und die siebte Flugzeugsitzvorrichtung 700a sind unmittelbar nebeneinander angeordnet. Die vierte Flugzeugsitzvorrichtung 400a und die achte Flugzeugsitzvorrichtung 800a sind unmittelbar nebeneinander angeordnet.

Im vorliegenden Fall umfasst die Flugzeugsitzanordnung 14a mehrere weitere erste Flugzeugsitzvorrichtungen 100'a, die zumindest im Wesentlichen identisch zu der ersten Flugzeugsitzvorrichtung 100a ausgebildet sind. Unter "zumindest im Wesentlichen identisch" soll in diesem Zusammenhang insbesondere verstanden werden, dass die jeweiligen weiteren Flugzeugsitzvorrichtungen bis auf eine mögliche veränderte Ausformung einer Umhausung, einer Konsole und/oder eines Flugzeugsitzes bedingt durch eine Kontur einer Flugzeugkabinenaußenwand 18a, 20a identisch zu der entsprechenden, in dem Mittelbereich 44a der Flugzeugkabine 12a angeordneten Flugzeugsitzvorrichtung ausgebildet sind. Die weiteren ersten Flugzeugsitzvorrichtungen 100'a sind jeweils in der ersten inneren Sitzspalte 38a oder in der zweiten äußeren Sitzspalte 42a angeordnet. Im vorliegenden Fall umfasst die Flugzeugsitzanordnung 14a mehrere weitere zweite Flugzeugsitzvorrichtungen 200'a, die zumindest im Wesentlichen identisch zu der zweiten Flugzeugsitzvorrichtung 200a ausgebildet sind. Die weiteren zweiten Flugzeugsitzvorrichtungen 200'a sind jeweils in der ersten inneren Sitzspalte 38a oder in der zweiten äußeren Sitzspalte 42a angeordnet. Im vorliegenden Fall umfasst die Flugzeugsitzanordnung 14a mehrere weitere dritte Flugzeugsitzvorrichtungen 300'a, die zumindest im Wesentlichen identisch zu der dritten Flugzeugsitzvorrichtung 300a ausgebildet sind. Die weiteren dritten Flugzeugsitzvorrichtungen 300'a sind jeweils in der ersten inneren Sitzspalte 38a oder in der zweiten äußeren Sitzspalte 42a angeordnet. Im vorliegenden Fall umfasst die Flugzeugsitzanordnung 14a mehrere weitere vierte Flugzeugsitzvorrichtungen 400'a, die zumindest im Wesentlichen identisch zu der vierten Flugzeugsitzvorrichtung 400a ausgebildet sind. Die weiteren vierten Flugzeugsitzvorrichtungen 400'a sind jeweils in der ersten inneren Sitzspalte 38a oder in der zweiten äußeren Sitzspalte 42a angeordnet. Im vorliegenden Fall umfasst die Flugzeugsitzanordnung 14a mehrere weitere fünfte Flugzeugsitzvorrichtungen 500'a, die zumindest im Wesentlichen identisch zu der fünften Flugzeugsitzvorrichtung 500a ausgebildet sind. Die weiteren fünften Flugzeugsitzvorrichtungen 500'a sind jeweils in der zweiten inneren Sitzspalte 40a oder in der ersten äußeren Sitzspalte 36a angeordnet. Im vorliegenden Fall umfasst die Flugzeugsitzanordnung 14a mehrere weitere sechste Flugzeugsitzvorrichtungen 600'a, die zumindest im Wesentlichen identisch zu der sechsten Flugzeugsitzvorrichtung 600a ausgebildet sind. Die weiteren sechsten Flugzeugsitzvorrichtungen 600'a sind jeweils in der zweiten inneren Sitzspalte 40a oder in der ersten äußeren Sitzspalte 36a angeordnet. Im vorliegenden Fall umfasst die Flugzeugsitzanordnung 14a mehrere weitere siebte Flugzeugsitzvorrichtungen 700'a, die zumindest im Wesentlichen identisch zu der siebten Flugzeugsitzvorrichtung 700a ausgebildet sind. Die weiteren siebten Flugzeugsitzvorrichtungen 700'a sind jeweils in der zweiten inneren Sitzspalte 40a oder in der ersten äußeren Sitzspalte 36a angeordnet. Im vorliegenden Fall umfasst die Flugzeugsitzanordnung 14a mehrere weitere achte Flugzeugsitzvorrichtungen 800'a, die zumindest im Wesentlichen identisch zu der achten Flugzeugsitzvorrichtung 800a ausgebildet sind. Die weiteren achten Flugzeugsitzvorrichtungen 800'a sind jeweils in der zweiten inneren Sitzspalte 40a oder in der ersten äußeren Sitzspalte 36a angeordnet. Aus Gründen der Übersichtlichkeit ist in der Figur 2 lediglich eine Auswahl an weiteren Flugzeugsitzvorrichtungen 100'a, 200'a, 300'a, 400'a, 500'a, 600'a, 700'a, 800'a mit einem Bezugszeichen versehen.

In dem Flugzeugkabinenabschnitt 26a ist in der ersten inneren Sitzspalte 38a die Sitzrichtung 110a der ersten Flugzeugsitzvorrichtung 100a der mehreren Flugzeugsitzvorrichtungen 100a, 200a, 300a, 400a, 500a, 600a, 700a, 800a zumindest im Wesentlichen parallel zu der Flugzeugkabinenmittelachse 16a ausgerichtet. Der erste Flugzeugsitz 120a der ersten Flugzeugsitzvorrichtung 100a der in dem Flugzeugkabinenabschnitt 26a in der ersten inneren Sitzspalte 38a angeordneten Flugzeugsitzvorrichtungen 100a, 200a, 300a, 400a ist gangseitig angeordnet.

In dem Flugzeugkabinenabschnitt 26a ist in der ersten inneren Sitzspalte 38a die Sitzrichtung 210a der zweiten Flugzeugsitzvorrichtung 200a der mehreren Flugzeugsitzvorrichtungen 100a, 200a, 300a, 400a in einem Winkel von mindestens 18 Grad abgewinkelt zu der Flugzeugkabinenmittelachse 16a angeordnet. Im vorliegenden Fall ist in dem Flugzeugkabinenabschnitt 26a in der ersten inneren Sitzspalte 38a die Sitzrichtung 210a der zweiten Flugzeugsitzvorrichtung 200a der mehreren Flugzeugsitzvorrichtungen 100a, 200a, 300a, 400a, 500a, 600a, 700a, 800a in einem Winkel von 30 Grad abgewinkelt zu der Flugzeugkabinenmittelachse 16a angeordnet. In dem Flugzeugkabinenabschnitt 26a ist in der ersten inneren Sitzspalte 38a die Sitzrichtung 210a der zweiten Flugzeugsitzvorrichtung 200a der mehreren Flugzeugsitzvorrichtungen 100a, 200a, 300a, 400a, 500a, 600a, 700a, 800a von dem unmittelbar angrenzenden ersten Flugzeugkabinengang 32a weggerichtet. Der zweite Flugzeugsitz 220a der zweiten Flugzeugsitzvorrichtung 200a der in dem Flugzeugkabinenabschnitt 26a in der ersten inneren Sitzspalte 38a angeordneten Flugzeugsitzvorrichtungen 100a, 200a, 300a, 400a ist gangseitig angeordnet.

In dem Flugzeugkabinenabschnitt 26a ist in der ersten inneren Sitzspalte 38a die Sitzrichtung 310a der dritten Flugzeugsitzvorrichtung 300a der mehreren Flugzeugsitzvorrichtungen 100a, 200a, 300a, 400a, 500a, 600a, 700a, 800a zumindest im Wesentlichen parallel zu der Flugzeugkabinenmittelachse 16a ausgerichtet. Der dritte Flugzeugsitz 320a der dritten Flugzeugsitzvorrichtung 300a der in ersten inneren Sitzspalte 38a angeordneten Flugzeugsitzvorrichtungen 100a, 200a, 300a, 400a ist gangabgewandt angeordnet.

In dem Flugzeugkabinenabschnitt 26a ist in der ersten inneren Sitzspalte 38a die Sitzrichtung 410a der vierten Flugzeugsitzvorrichtung 400a der mehreren Flugzeugsitzvorrichtungen 100a, 200a, 300a, 400a, 500a, 600a, 700a, 800a in einem Winkel von mindestens 18 Grad abgewinkelt zu der Flugzeugkabinenmittelachse 16a angeordnet. Im vorliegenden Fall ist in dem Flugzeugkabinenabschnitt 26a in der ersten inneren Sitzspalte 38a die Sitzrichtung 410a der vierten Flugzeugsitzvorrichtung 400a der mehreren Flugzeugsitzvorrichtungen 100a, 200a, 300a, 400a, 500a, 600a, 700a, 800a in einem Winkel von 30 Grad abgewinkelt zu der Flugzeugkabinenmittelachse 16a angeordnet. In dem Flugzeugkabinenabschnitt 26a ist in der ersten inneren Sitzspalte 38a die Sitzrichtung 410a der vierten Flugzeugsitzvorrichtung 400a der mehreren Flugzeugsitzvorrichtungen 100a, 200a, 300a, 400a, 500a, 600a, 700a, 800a zu dem unmittelbar angrenzenden ersten Flugzeugkabinengang 32a gerichtet. Der vierte Flugzeugsitz 420a der vierten Flugzeugsitzvorrichtung 400a der in der ersten inneren Sitzspalte 38a angeordneten Flugzeugsitzvorrichtungen 100a, 200a, 300a, 400a ist gangabgewandt angeordnet.

Die Sitzrichtungen 210a, 410a der zweiten Flugzeugsitzvorrichtung 200a und der vierten Flugzeugsitzvorrichtung 400a sind in der ersten inneren Sitzspalte 38a um einen betragsmäßig zumindest im Wesentlichen gleichen Winkel zu einer Flugzeuglängsachse abgewinkelt angeordnet, wobei die Sitzrichtungen 210a, 410a der zweiten Flugzeugsitzvorrichtung 200a und der vierten Flugzeugsitzvorrichtung 400a zu dieser Flugzeuglängsachse gespiegelt ausgebildet sind. Die erste Flugzeugsitzvorrichtung 100a und die dritte Flugzeugsitzvorrichtung 300a sind durch die zweite Flugzeugsitzvorrichtung 200a voneinander beabstandet. Die zweite Flugzeugsitzvorrichtung 200a und die vierte Flugzeugsitzvorrichtung 400a sind durch die dritte Flugzeugsitzvorrichtung 300a voneinander beabstandet.

In dem Flugzeugkabinenabschnitt 26a weisen in der ersten inneren Sitzspalte 38a die erste Flugzeugsitzvorrichtung 100a und die zweite Flugzeugsitzvorrichtung 200a je einen Flugzeugsitz 120a, 220a auf, der gangseitig angeordnet ist, und die dritte Flugzeugsitzvorrichtung 300a und die vierte Flugzeugsitzvorrichtung 400a, die in der Flugrichtung 24a betrachtet unmittelbar hinter oder vor den zwei Flugzeugsitzvorrichtungen 100a, 200a angeordnet sind, je einen Flugzeugsitz 320a, 420a auf, der gangabgewandt angeordnet ist. Die Flugzeugsitze 120a, 320a der Flugzeugsitzvorrichtungen 100a, 300a, deren Sitzrichtungen 110a, 310a zumindest im Wesentlichen parallel zu der Flugzeugkabinenmittelachse 16a angeordnet sind, weisen unterschiedliche Abstände zu dem ersten Flugzeugkabinengang 32a auf. Die Flugzeugsitze 220a, 420a der Flugzeugsitzvorrichtungen 200a, 400a, deren Sitzrichtungen 210a, 410a abgewinkelt zu der Flugzeugkabinenmittelachse 16a angeordnet sind, weisen unterschiedliche Abstände zu dem ersten Flugzeugkabinengang 32a auf.

In dem Flugzeugkabinenabschnitt 26a sind in der ersten inneren Sitzspalte 38a zumindest drei Flugzeugsitzvorrichtungen der mehreren Flugzeugsitzvorrichtungen 100a, 200a, 300a, 400a, 500a, 600a, 700a, 800a, nämlich zumindest die erste Flugzeugsitzvorrichtung 100a, die zweite Flugzeugsitzvorrichtung 200a und die dritte Flugzeugsitzvorrichtung 300a, angeordnet, wobei die Sitzrichtungen 110a, 310a der ersten Flugzeugsitzvorrichtung 100a und der dritten Flugzeugsitzvorrichtung 300a zumindest im Wesentlich parallel zu der Flugzeugkabinenmittelachse 16a angeordnet sind und die Sitzrichtung 210a der zweiten Flugzeugsitzvorrichtung 200a abgewinkelt zu der Flugzeugkabinenmittelachse 16a angeordnet ist. In dem Flugzeugkabinenabschnitt 26a sind in der ersten inneren Sitzspalte 38a die zumindest drei Flugzeugsitzvorrichtungen der mehreren Flugzeugsitzvorrichtungen 100a, 200a, 300a, 400a, 500a, 600a, 700a, 800a, nämlich zumindest die erste Flugzeugsitzvorrichtung 100a, die zweite Flugzeugsitzvorrichtung 200a und die dritte Flugzeugsitzvorrichtung 300a, unmittelbar hintereinander angeordnet, wobei die Sitzrichtungen 110a, 310a der ersten Flugzeugsitzvorrichtung 100a und der dritten Flugzeugsitzvorrichtung 300a zumindest im Wesentlich parallel zu der Flugzeugkabinenmittelachse 16a angeordnet sind und die Sitzrichtung 210a der zweiten Flugzeugsitzvorrichtung 200a abgewinkelt zu der Flugzeugkabinenmittelachse 16a angeordnet ist.

In dem Flugzeugkabinenabschnitt 26a sind in der ersten inneren Sitzspalte 38a zumindest drei Flugzeugsitzvorrichtungen der mehreren Flugzeugsitzvorrichtungen 100a, 200a, 300a, 400a, 500a, 600a, 700a, 800a, nämlich zumindest die zweite Flugzeugsitzvorrichtung 200a, die dritte Flugzeugsitzvorrichtung 300a und die vierte Flugzeugsitzvorrichtung 400a, angeordnet, wobei die Sitzrichtung 310a der dritten Flugzeugsitzvorrichtung 300a zumindest im Wesentlichen parallel zu der Flugzeugkabinenmittelachse 16a angeordnet ist und Sitzrichtungen 210a, 410a der zweiten Flugzeugsitzvorrichtung 200a und der vierten Flugzeugsitzvorrichtung 400a abgewinkelt zu der Flugzeugkabinenmittelachse 16a angeordnet sind. In dem Flugzeugkabinenabschnitt 26a sind in der ersten inneren Sitzspalte 38a die zumindest drei Flugzeugsitzvorrichtungen der mehreren Flugzeugsitzvorrichtungen 100a, 200a, 300a, 400a, 500a, 600a, 700a, 800a, nämlich zumindest die zweite Flugzeugsitzvorrichtung 200a, die dritte Flugzeugsitzvorrichtung 300a und die vierte Flugzeugsitzvorrichtung 400a, unmittelbar hintereinander angeordnet, wobei die Sitzrichtung 310a der dritten Flugzeugsitzvorrichtung 300a zumindest im Wesentlichen parallel zu der Flugzeugkabinenmittelachse 16a angeordnet ist und Sitzrichtungen 210a, 410a der zweiten Flugzeugsitzvorrichtung 200a und der vierten Flugzeugsitzvorrichtung 400a abgewinkelt zu der Flugzeugkabinenmittelachse 16a angeordnet sind.

In dem Flugzeugkabinenabschnitt 26a sind in der ersten inneren Sitzspalte 38a zumindest drei Flugzeugsitzvorrichtungen der mehreren Flugzeugsitzvorrichtungen 100a, 200a, 300a, 400a, 500a, 600a, 700a, 800a, nämlich zumindest eine der weiteren vierten Flugzeugsitzvorrichtungen 400'a, die erste Flugzeugsitzvorrichtung 100a und die zweite Flugzeugsitzvorrichtung 200a, angeordnet, wobei die Sitzrichtung 110a der ersten Flugzeugsitzvorrichtung 100a zumindest im Wesentlichen parallel zu der Flugzeugkabinenmittelachse 16a angeordnet ist und Sitzrichtungen der zweiten Flugzeugsitzvorrichtung 200a und der weiteren vierten Flugzeugsitzvorrichtung 400'a abgewinkelt zu der Flugzeugkabinenmittelachse 16a angeordnet sind. In dem Flugzeugkabinenabschnitt 26a sind in der ersten inneren Sitzspalte 38a die zumindest drei Flugzeugsitzvorrichtungen der mehreren Flugzeugsitzvorrichtungen 100a, 200a, 300a, 400a, 500a, 600a, 700a, 800a, nämlich zumindest eine der weiteren vierten Flugzeugsitzvorrichtungen 400'a, die erste Flugzeugsitzvorrichtung 100a und die zweite Flugzeugsitzvorrichtung 200a, unmittelbar hintereinander angeordnet, wobei die Sitzrichtung 110a der ersten Flugzeugsitzvorrichtung 100a zumindest im Wesentlichen parallel zu der Flugzeugkabinenmittelachse 16a angeordnet ist und Sitzrichtungen der zweiten Flugzeugsitzvorrichtung 200a und der weiteren vierten Flugzeugsitzvorrichtung 400'a abgewinkelt zu der Flugzeugkabinenmittelachse 16a angeordnet sind.

In dem Flugzeugkabinenabschnitt 26a sind in der ersten inneren Sitzspalte 38a zumindest drei Flugzeugsitzvorrichtungen der mehreren Flugzeugsitzvorrichtungen 100a, 200a, 300a, 400a, 500a, 600a, 700a, 800a, nämlich zumindest die erste Flugzeugsitzvorrichtung 100a, eine der weiteren vierten Flugzeugsitzvorrichtungen 400'a und eine der weiteren dritten Flugzeugsitzvorrichtungen 300'a, angeordnet, wobei Sitzrichtungen der ersten Flugzeugsitzvorrichtung 100a und der weiteren dritten Flugzeugsitzvorrichtung 300'a zumindest im Wesentlich parallel zu der Flugzeugkabinenmittelachse 16a angeordnet sind und eine Sitzrichtung der weiteren vierten Flugzeugsitzvorrichtung 400'a abgewinkelt zu der Flugzeugkabinenmittelachse 16a angeordnet ist. In dem Flugzeugkabinenabschnitt 26a sind in der ersten inneren Sitzspalte 38a die zumindest drei Flugzeugsitzvorrichtungen der mehreren Flugzeugsitzvorrichtungen 100a, 200a, 300a, 400a, 500a, 600a, 700a, 800a, nämlich zumindest die erste Flugzeugsitzvorrichtung 100a, eine der weiteren vierten Flugzeugsitzvorrichtungen 400'a und eine der weiteren dritten Flugzeugsitzvorrichtungen 300'a, unmittelbar hintereinander angeordnet, wobei Sitzrichtungen der ersten Flugzeugsitzvorrichtung 100a und der weiteren dritten Flugzeugsitzvorrichtung 300'a zumindest im Wesentlich parallel zu der Flugzeugkabinenmittelachse 16a angeordnet sind und eine Sitzrichtung der weiteren vierten Flugzeugsitzvorrichtung 400'a abgewinkelt zu der Flugzeugkabinenmittelachse 16a angeordnet ist.

In dem Flugzeugkabinenabschnitt 26a sind in der ersten inneren Sitzspalte 38a vier voneinander unterschiedlich ausgebildete, unmittelbar hintereinander angeordnete Flugzeugsitzvorrichtungen 100a, 200a, 300a, 400a der mehreren Flugzeugsitzvorrichtungen 100a, 200a, 300a, 400a, 500a, 600a, 700a, 800a angeordnet. Die vier voneinander unterschiedlich ausgebildeten, in der ersten inneren Sitzspalte 38a angeordneten Flugzeugsitzvorrichtungen 100a, 200a, 300a, 400a der mehreren Flugzeugsitzvorrichtungen 100a, 200a, 300a, 400a, 500a, 600a, 700a, 800a sind in Flugrichtung 24a unmittelbar aufeinander folgend angeordnet.

In dem Flugzeugkabinenabschnitt 26a sind in der ersten inneren Sitzspalte 38a die erste Flugzeugsitzvorrichtung 100a, die zweite Flugzeugsitzvorrichtung 200a und die dritte Flugzeugsitzvorrichtung 300a unmittelbar hintereinander angeordnet. In dem Flugzeugkabinenabschnitt 26a sind in der ersten inneren Sitzspalte 38a die zweite Flugzeugsitzvorrichtung 200a, die dritte Flugzeugsitzvorrichtung 300a und die vierte Flugzeugsitzvorrichtung 400a unmittelbar hintereinander angeordnet. In dem Flugzeugkabinenabschnitt 26a in der ersten inneren Sitzspalte 38a ist die erste Flugzeugsitzvorrichtung 100a in Flugrichtung 24a betrachtet unmittelbar hinter der zweiten Flugzeugsitzvorrichtung 200a angeordnet. In dem Flugzeugkabinenabschnitt 26a in der ersten inneren Sitzspalte 38a ist die zweite Flugzeugsitzvorrichtung 200a in Flugrichtung 24a betrachtet unmittelbar hinter der dritten Flugzeugsitzvorrichtung 300a angeordnet. In dem Flugzeugkabinenabschnitt 26a in der ersten inneren Sitzspalte 38a ist die dritte Flugzeugsitzvorrichtung 300a in Flugrichtung 24a betrachtet unmittelbar hinter der vierten Flugzeugsitzvorrichtung 400a angeordnet. Grundsätzlich kann die vierte Flugzeugsitzvorrichtung 400a in dem Flugzeugkabinenabschnitt 26a in der ersten inneren Sitzspalte 38a in Flugrichtung 24a betrachtet unmittelbar hinter der ersten Flugzeugsitzvorrichtung 100a angeordnet sein.

In dem Flugzeugkabinenabschnitt 26a sind in der ersten inneren Sitzspalte 38a vier unterschiedlich voneinander ausgebildete Flugzeugsitzvorrichtungen, nämlich die erste Flugzeugsitzvorrichtung 100a, die zweite Flugzeugsitzvorrichtung 200a, die dritte Flugzeugsitzvorrichtung 300a und die vierte Flugzeugsitzvorrichtung 400a, der mehreren Flugzeugsitzvorrichtungen 100a, 100'a, 200a, 200'a, 300a, 300'a, 400a, 400'a, 500a, 500'a, 600a, 600'a, 700a, 700'a, 800a, 800'a unmittelbar hintereinander angeordnet, wobei Sitzrichtungen 110a, 310a zweier Flugzeugsitzvorrichtungen der vier Flugzeugsitzvorrichtungen 100a, 200a, 300a, 400a, nämlich der ersten Flugzeugsitzvorrichtung 100a und der dritten Flugzeugsitzvorrichtung 300a, zumindest im Wesentlichen parallel zu der Flugzeugkabinenmittelachse 16a angeordnet sind, wobei der erste Flugzeugsitz 120a der ersten Flugzeugsitzvorrichtung 100a gangseitig angeordnet ist und der dritte Flugzeugsitz 320a der dritten Flugzeugsitzvorrichtung 300a gangabgewandt angeordnet ist, und Sitzrichtungen 210a, 410a zweier weiterer Flugzeugsitzvorrichtungen der vier Flugzeugsitzvorrichtungen 100a, 200a, 300a, 400a, nämlich der zweiten Flugzeugsitzvorrichtung 200a und der vierten Flugzeugsitzvorrichtung 400a, abgewinkelt zu der Flugzeugkabinenmittelachse 16a angeordnet sind, wobei der zweite Flugzeugsitz 220a der zweiten Flugzeugsitzvorrichtung 200a gangseitig angeordnet ist und der vierte Flugzeugsitz 420a der vierten Flugzeugsitzvorrichtung 400a gangabgewandt angeordnet ist.

In dem Flugzeugkabinenabschnitt 26a ist in der zweiten inneren Sitzspalte 40a die Sitzrichtung 510a der fünften Flugzeugsitzvorrichtung 500a der mehreren Flugzeugsitzvorrichtungen 100a, 200a, 300a, 400a, 500a, 600a, 700a, 800a zumindest im Wesentlichen parallel zu der Flugzeugkabinenmittelachse 16a ausgerichtet. Der fünfte Flugzeugsitz 520a der fünften Flugzeugsitzvorrichtung 500a der in dem Flugzeugkabinenabschnitt 26a in der zweiten inneren Sitzspalte 40a angeordneten Flugzeugsitzvorrichtungen 500a, 600a, 700a, 800a ist gangseitig angeordnet.

In dem Flugzeugkabinenabschnitt 26a ist in der zweiten inneren Sitzspalte 40a die Sitzrichtung 610a der sechsten Flugzeugsitzvorrichtung 600a der mehreren Flugzeugsitzvorrichtungen 100a, 200a, 300a, 400a, 500a, 600a, 700a, 800a in einem Winkel von mindestens 18 Grad abgewinkelt zu der Flugzeugkabinenmittelachse 16a angeordnet. Im vorliegenden Fall ist in dem Flugzeugkabinenabschnitt 26a in der zweiten inneren Sitzspalte 40a die Sitzrichtung 610a der sechsten Flugzeugsitzvorrichtung 600a der mehreren Flugzeugsitzvorrichtungen 100a, 200a, 300a, 400a, 500a, 600a, 700a, 800a in einem Winkel von 30 Grad abgewinkelt zu der Flugzeugkabinenmittelachse 16a angeordnet. In dem Flugzeugkabinenabschnitt 26a ist in der zweiten inneren Sitzspalte 40a die Sitzrichtung 610a der sechsten Flugzeugsitzvorrichtung 600a der mehreren Flugzeugsitzvorrichtungen 100a, 200a, 300a, 400a, 500a, 600a, 700a, 800a von dem unmittelbar angrenzenden zweiten Flugzeugkabinengang 34a weggerichtet. Der sechste Flugzeugsitz 620a der sechsten Flugzeugsitzvorrichtung 600a der in dem Flugzeugkabinenabschnitt 26a in der zweiten inneren Sitzspalte 40a angeordneten Flugzeugsitzvorrichtungen 500a, 600a, 700a, 800a ist gangseitig angeordnet.

In dem Flugzeugkabinenabschnitt 26a ist in der zweiten inneren Sitzspalte 40a die Sitzrichtung 710a der siebten Flugzeugsitzvorrichtung 700a der mehreren Flugzeugsitzvorrichtungen 100a, 200a, 300a, 400a, 500a, 600a, 700a, 800a zumindest im Wesentlichen parallel zu der Flugzeugkabinenmittelachse 16a ausgerichtet. Der siebte Flugzeugsitz 720a der siebten Flugzeugsitzvorrichtung 700a der in zweiten inneren Sitzspalte 40a angeordneten Flugzeugsitzvorrichtungen 500a, 600a, 700a, 800a ist gangabgewandt angeordnet.

In dem Flugzeugkabinenabschnitt 26a ist in der zweiten inneren Sitzspalte 40a die Sitzrichtung 810a der achten Flugzeugsitzvorrichtung 800a der mehreren Flugzeugsitzvorrichtungen 100a, 200a, 300a, 400a, 500a, 600a, 700a, 800a in einem Winkel von mindestens 18 Grad abgewinkelt zu der Flugzeugkabinenmittelachse 16a angeordnet. Im vorliegenden Fall ist in dem Flugzeugkabinenabschnitt 26a in der zweiten inneren Sitzspalte 40a die Sitzrichtung 810a der achten Flugzeugsitzvorrichtung 800a der mehreren Flugzeugsitzvorrichtungen 100a, 200a, 300a, 400a, 500a, 600a, 700a, 800a in einem Winkel von 30 Grad abgewinkelt zu der Flugzeugkabinenmittelachse 16a angeordnet. In dem Flugzeugkabinenabschnitt 26a ist in der zweiten inneren Sitzspalte 40a die Sitzrichtung 810a der achten Flugzeugsitzvorrichtung 800a der mehreren Flugzeugsitzvorrichtungen 100a, 200a, 300a, 400a, 500a, 600a, 700a, 800a zu dem unmittelbar angrenzenden zweiten Flugzeugkabinengang 34a gerichtet. Der achte Flugzeugsitz 820a der achten Flugzeugsitzvorrichtung 800a der in der zweiten inneren Sitzspalte 40a angeordneten Flugzeugsitzvorrichtungen 500a, 600a, 700a, 800a ist gangabgewandt angeordnet.

Die Sitzrichtungen 610a, 810a der sechsten Flugzeugsitzvorrichtung 600a und der achten Flugzeugsitzvorrichtung 800a sind in der zweiten inneren Sitzspalte 40a um einen betragsmäßig zumindest im Wesentlichen gleichen Winkel zu einer Flugzeuglängsachse abgewinkelt angeordnet, wobei die Sitzrichtungen 610a, 810a der sechsten Flugzeugsitzvorrichtung 600a und der achten Flugzeugsitzvorrichtung 800a zu dieser Flugzeuglängsachse gespiegelt ausgebildet sind. Die fünfte Flugzeugsitzvorrichtung 500a und die siebte Flugzeugsitzvorrichtung 700a sind durch die sechste Flugzeugsitzvorrichtung 600a voneinander beabstandet. Die sechste Flugzeugsitzvorrichtung 600a und die achte Flugzeugsitzvorrichtung 800a sind durch die siebte Flugzeugsitzvorrichtung 700a voneinander beabstandet.

In dem Flugzeugkabinenabschnitt 26a weisen in der zweiten inneren Sitzspalte 40a die fünfte Flugzeugsitzvorrichtung 500a und die sechste Flugzeugsitzvorrichtung 600a je einen Flugzeugsitz 520a, 620a auf, der gangseitig angeordnet ist, und die siebte Flugzeugsitzvorrichtung 700a und die achte Flugzeugsitzvorrichtung 800a, die in der Flugrichtung 24a betrachtet unmittelbar hinter oder vor den zwei Flugzeugsitzvorrichtungen 500a, 600a angeordnet sind, je einen Flugzeugsitz 720a, 820a auf, der gangabgewandt angeordnet ist. Die Flugzeugsitze 520a, 720a der Flugzeugsitzvorrichtungen 500a, 700a, deren Sitzrichtungen 510a, 710a zumindest im Wesentlichen parallel zu der Flugzeugkabinenmittelachse 16a angeordnet sind, weisen unterschiedliche Abstände zu dem zweiten Flugzeugkabinengang 34a auf. Die Flugzeugsitze 620a, 820a der Flugzeugsitzvorrichtungen 600a, 800a, deren Sitzrichtungen 610a, 810a abgewinkelt zu der Flugzeugkabinenmittelachse 16a angeordnet sind, weisen unterschiedliche Abstände zu dem zweiten Flugzeugkabinengang 34a auf.

In dem Flugzeugkabinenabschnitt 26a sind in der zweiten inneren Sitzspalte 40a zumindest drei Flugzeugsitzvorrichtungen der mehreren Flugzeugsitzvorrichtungen 100a, 200a, 300a, 400a, 500a, 600a, 700a, 800a, nämlich zumindest die fünfte Flugzeugsitzvorrichtung 500a, die sechste Flugzeugsitzvorrichtung 600a und die siebte Flugzeugsitzvorrichtung 700a, angeordnet, wobei die Sitzrichtungen 510a, 710a der fünften Flugzeugsitzvorrichtung 500a und der siebten Flugzeugsitzvorrichtung 700a zumindest im Wesentlich parallel zu der Flugzeugkabinenmittelachse 16a angeordnet sind und die Sitzrichtung 610a der sechsten Flugzeugsitzvorrichtung 600a abgewinkelt zu der Flugzeugkabinenmittelachse 16a angeordnet ist. In dem Flugzeugkabinenabschnitt 26a sind in der zweiten inneren Sitzspalte 40a die zumindest drei Flugzeugsitzvorrichtungen der mehreren Flugzeugsitzvorrichtungen 100a, 200a, 300a, 400a, 500a, 600a, 700a, 800a, nämlich zumindest die fünfte Flugzeugsitzvorrichtung 500a, die sechste Flugzeugsitzvorrichtung 600a und die siebte Flugzeugsitzvorrichtung 700a, unmittelbar hintereinander angeordnet, wobei die Sitzrichtungen 510a, 710a der fünften Flugzeugsitzvorrichtung 500a und der siebten Flugzeugsitzvorrichtung 700a zumindest im Wesentlich parallel zu der Flugzeugkabinenmittelachse 16a angeordnet sind und die Sitzrichtung 610a der sechsten Flugzeugsitzvorrichtung 600a abgewinkelt zu der Flugzeugkabinenmittelachse 16a angeordnet ist.

In dem Flugzeugkabinenabschnitt 26a sind in der zweiten inneren Sitzspalte 40a zumindest drei Flugzeugsitzvorrichtungen der mehreren Flugzeugsitzvorrichtungen 100a, 200a, 300a, 400a, 500a, 600a, 700a, 800a, nämlich zumindest die sechste Flugzeugsitzvorrichtung 600a, die siebte Flugzeugsitzvorrichtung 700a und die achte Flugzeugsitzvorrichtung 800a, angeordnet, wobei die Sitzrichtung 710a der siebten Flugzeugsitzvorrichtung 700a zumindest im Wesentlichen parallel zu der Flugzeugkabinenmittelachse 16a angeordnet ist und Sitzrichtungen 610a, 810a der sechsten Flugzeugsitzvorrichtung 600a und der achten Flugzeugsitzvorrichtung 800a abgewinkelt zu der Flugzeugkabinenmittelachse 16a angeordnet sind. In dem Flugzeugkabinenabschnitt 26a sind in der zweiten inneren Sitzspalte 40a die zumindest drei Flugzeugsitzvorrichtungen der mehreren Flugzeugsitzvorrichtungen 100a, 200a, 300a, 400a, 500a, 600a, 700a, 800a, nämlich zumindest die sechste Flugzeugsitzvorrichtung 600a, die siebte Flugzeugsitzvorrichtung 700a und die achte Flugzeugsitzvorrichtung 800a, unmittelbar hintereinander angeordnet, wobei die Sitzrichtung 710a der siebten Flugzeugsitzvorrichtung 700a zumindest im Wesentlichen parallel zu der Flugzeugkabinenmittelachse 16a angeordnet ist und Sitzrichtungen 610a, 810a der sechsten Flugzeugsitzvorrichtung 600a und der achten Flugzeugsitzvorrichtung 800a abgewinkelt zu der Flugzeugkabinenmittelachse 16a angeordnet sind.

In dem Flugzeugkabinenabschnitt 26a sind in der zweiten inneren Sitzspalte 40a zumindest drei Flugzeugsitzvorrichtungen der mehreren Flugzeugsitzvorrichtungen 100a, 200a, 300a, 400a, 500a, 600a, 700a, 800a, nämlich zumindest eine der weiteren achten Flugzeugsitzvorrichtungen 800'a, die fünfte Flugzeugsitzvorrichtung 500a und die sechste Flugzeugsitzvorrichtung 600a, angeordnet, wobei die Sitzrichtung 510a der fünften Flugzeugsitzvorrichtung 500a zumindest im Wesentlichen parallel zu der Flugzeugkabinenmittelachse 16a angeordnet ist und Sitzrichtungen der sechsten Flugzeugsitzvorrichtung 600a und der weiteren achten Flugzeugsitzvorrichtung 800'a abgewinkelt zu der Flugzeugkabinenmittelachse 16a angeordnet sind. In dem Flugzeugkabinenabschnitt 26a sind in der zweiten inneren Sitzspalte 40a die zumindest drei Flugzeugsitzvorrichtungen der mehreren Flugzeugsitzvorrichtungen 100a, 200a, 300a, 400a, 500a, 600a, 700a, 800a, nämlich zumindest eine der weiteren achten Flugzeugsitzvorrichtungen 800'a, die fünfte Flugzeugsitzvorrichtung 500a und die sechste Flugzeugsitzvorrichtung 600a, unmittelbar hintereinander angeordnet, wobei die Sitzrichtung 510a der fünften Flugzeugsitzvorrichtung 500a zumindest im Wesentlichen parallel zu der Flugzeugkabinenmittelachse 16a angeordnet ist und Sitzrichtungen der sechsten Flugzeugsitzvorrichtung 600a und der weiteren achten Flugzeugsitzvorrichtung 800'a abgewinkelt zu der Flugzeugkabinenmittelachse 16a angeordnet sind.

In dem Flugzeugkabinenabschnitt 26a sind in der zweiten inneren Sitzspalte 40a zumindest drei Flugzeugsitzvorrichtungen der mehreren Flugzeugsitzvorrichtungen 100a, 200a, 300a, 400a, 500a, 600a, 700a, 800a, nämlich zumindest die fünfte Flugzeugsitzvorrichtung 500a, eine der weiteren achten Flugzeugsitzvorrichtungen 800'a und eine der weiteren siebten Flugzeugsitzvorrichtungen 700'a, angeordnet, wobei Sitzrichtungen der fünften Flugzeugsitzvorrichtung 500a und der weiteren siebten Flugzeugsitzvorrichtung 700'a zumindest im Wesentlichen parallel zu der Flugzeugkabinenmittelachse 16a angeordnet sind und eine Sitzrichtung der weiteren achten Flugzeugsitzvorrichtung 800'a abgewinkelt zu der Flugzeugkabinenmittelachse 16a angeordnet ist. In dem Flugzeugkabinenabschnitt 26a sind in der zweiten inneren Sitzspalte 40a die zumindest drei Flugzeugsitzvorrichtungen der mehreren Flugzeugsitzvorrichtungen 100a, 200a, 300a, 400a, 500a, 600a, 700a, 800a, nämlich zumindest die fünfte Flugzeugsitzvorrichtung 500a, eine der weiteren achten Flugzeugsitzvorrichtungen 800'a und eine der weiteren siebten Flugzeugsitzvorrichtungen 700'a, unmittelbar hintereinander angeordnet, wobei Sitzrichtungen der fünften Flugzeugsitzvorrichtung 500a und der weiteren siebten Flugzeugsitzvorrichtung 700'a zumindest im Wesentlichen parallel zu der Flugzeugkabinenmittelachse 16a angeordnet sind und eine Sitzrichtung der weiteren achten Flugzeugsitzvorrichtung 800'a abgewinkelt zu der Flugzeugkabinenmittelachse 16a angeordnet ist.

In dem Flugzeugkabinenabschnitt 26a sind in der zweiten inneren Sitzspalte 40a vier voneinander unterschiedlich ausgebildete, unmittelbar hintereinander angeordnete Flugzeugsitzvorrichtungen 500a, 600a, 700a, 800a der mehreren Flugzeugsitzvorrichtungen 100a, 200a, 300a, 400a, 500a, 600a, 700a, 800a angeordnet. Die vier voneinander unterschiedlich ausgebildeten, in der zweiten inneren Sitzspalte 40a angeordneten Flugzeugsitzvorrichtungen 500a, 600a, 700a, 800a der mehreren Flugzeugsitzvorrichtungen 100a, 200a, 300a, 400a, 500a, 600a, 700a, 800a sind in Flugrichtung 24a unmittelbar aufeinander folgend angeordnet.

In dem Flugzeugkabinenabschnitt 26a sind in der zweiten inneren Sitzspalte 40a die fünfte Flugzeugsitzvorrichtung 500a, die sechste Flugzeugsitzvorrichtung 600a und die siebte Flugzeugsitzvorrichtung 700a unmittelbar hintereinander angeordnet. In dem Flugzeugkabinenabschnitt 26a sind in der zweiten inneren Sitzspalte 40a die sechste Flugzeugsitzvorrichtung 600a, die siebte Flugzeugsitzvorrichtung 700a und die achte Flugzeugsitzvorrichtung 800a unmittelbar hintereinander angeordnet. In dem Flugzeugkabinenabschnitt 26a in der zweiten inneren Sitzspalte 40a ist die fünfte Flugzeugsitzvorrichtung 500a in Flugrichtung 24a betrachtet unmittelbar hinter der sechsten Flugzeugsitzvorrichtung 600a angeordnet. In dem Flugzeugkabinenabschnitt 26a in der zweiten inneren Sitzspalte 40a ist die sechste Flugzeugsitzvorrichtung 600a in Flugrichtung 24a betrachtet unmittelbar hinter der siebten Flugzeugsitzvorrichtung 700a angeordnet. In dem Flugzeugkabinenabschnitt 26a in der zweiten inneren Sitzspalte 40a ist die siebte Flugzeugsitzvorrichtung 700a in Flugrichtung 24a betrachtet unmittelbar hinter der achten Flugzeugsitzvorrichtung 800a angeordnet. Grundsätzlich kann die achte Flugzeugsitzvorrichtung 800a in dem Flugzeugkabinenabschnitt 26a in der zweiten inneren Sitzspalte 40a in Flugrichtung 24a betrachtet unmittelbar hinter der fünften Flugzeugsitzvorrichtung 500a angeordnet sein.

In dem Flugzeugkabinenabschnitt 26a sind in der zweiten inneren Sitzspalte 40a vier unterschiedlich voneinander ausgebildete Flugzeugsitzvorrichtungen, nämlich die fünfte Flugzeugsitzvorrichtung 500a, die sechste Flugzeugsitzvorrichtung 600a, die siebte Flugzeugsitzvorrichtung 700a und die achte Flugzeugsitzvorrichtung 800a, der mehreren Flugzeugsitzvorrichtungen 100a, 100'a, 200a, 200'a, 300a, 300'a, 400a, 400'a, 500a, 500'a, 600a, 600'a, 700a, 700'a, 800a, 800'a unmittelbar hintereinander angeordnet, wobei Sitzrichtungen 510a, 710a zweier Flugzeugsitzvorrichtungen der vier Flugzeugsitzvorrichtungen 500a, 600a, 700a, 800a, nämlich der fünften Flugzeugsitzvorrichtung 500a und der siebten Flugzeugsitzvorrichtung 700a, zumindest im Wesentlichen parallel zu der Flugzeugkabinenmittelachse 16a angeordnet sind, wobei der fünfte Flugzeugsitz 520a der fünften Flugzeugsitzvorrichtung 500a gangseitig angeordnet ist und der siebte Flugzeugsitz 720a der siebten Flugzeugsitzvorrichtung 700a gangabgewandt angeordnet ist, und Sitzrichtungen 610a, 810a zweier weiterer Flugzeugsitzvorrichtungen der vier Flugzeugsitzvorrichtungen 500a, 600a, 700a, 800a, nämlich der sechsten Flugzeugsitzvorrichtung 600a und der achten Flugzeugsitzvorrichtung 800a, abgewinkelt zu der Flugzeugkabinenmittelachse 16a angeordnet sind, wobei der sechste Flugzeugsitz 620a der sechsten Flugzeugsitzvorrichtung 600a gangseitig angeordnet ist und der achte Flugzeugsitz 820a der achten Flugzeugsitzvorrichtung 800a gangabgewandt angeordnet ist.

In dem Flugzeugkabinenabschnitt 26a sind in der ersten äußeren Sitzspalte 36a vier voneinander unterschiedlich ausgebildete, unmittelbar hintereinander angeordnete Flugzeugsitzvorrichtungen 500'a, 600'a, 700'a, 800'a der mehreren weiteren Flugzeugsitzvorrichtungen 100'a, 200'a, 300'a, 400'a, 500'a, 600'a, 700'a, 800'a angeordnet. Die vier voneinander unterschiedlich ausgebildeten, in der ersten äußeren Sitzspalte 36a angeordneten Flugzeugsitzvorrichtungen 500'a, 600'a, 700'a, 800'a der mehreren weiteren Flugzeugsitzvorrichtungen 100'a, 200'a, 300'a, 400'a, 500'a, 600'a, 700'a, 800'a sind in Flugrichtung 24a unmittelbar aufeinander folgend angeordnet.

In dem Flugzeugkabinenabschnitt 26a sind in der zweiten äußeren Sitzspalte 42a vier voneinander unterschiedlich ausgebildete, unmittelbar hintereinander angeordnete Flugzeugsitzvorrichtungen 100'a, 200'a, 300'a, 400'a der mehreren weiteren Flugzeugsitzvorrichtungen 100'a, 200'a, 300'a, 400'a, 500'a, 600'a, 700'a, 800'a angeordnet. Die vier voneinander unterschiedlich ausgebildeten, in der zweiten äußeren Sitzspalte 42a angeordneten Flugzeugsitzvorrichtungen 100'a, 200'a, 300'a, 400'a der mehreren Flugzeugsitzvorrichtungen 100'a, 200'a, 300'a, 400'a, 500'a, 600'a, 700'a, 800'a sind in Flugrichtung 24a unmittelbar aufeinander folgend angeordnet.

Grundsätzlich sind die vorhergehenden Beschreibungen der ersten inneren Sitzspalte 38a auch für die zweite äußere Sitzspalte 42a gültig. Grundsätzlich sind die vorhergehenden Beschreibungen der zweiten inneren Sitzspalte 40a auch für die erste äußere Sitzspalte 36a gültig.

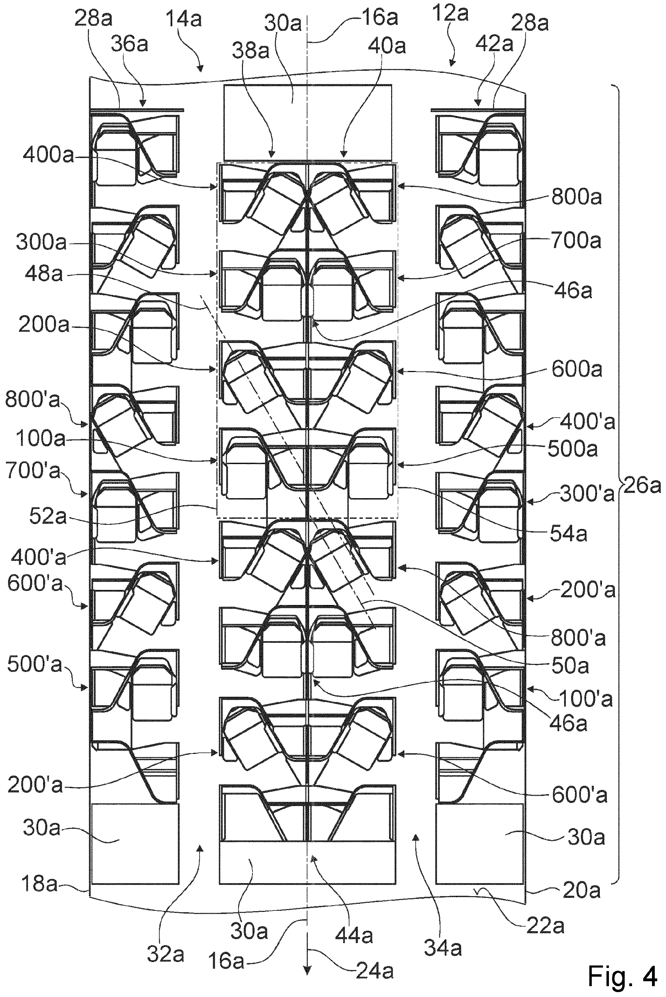

In dem Flugzeugkabinenabschnitt 26a bilden zwei Flugzeugsitzvorrichtungen der mehreren Flugzeugsitzvorrichtungen 100a, 200a, 300a, 400a, 500a, 600a, 700a, 800a, nämlich die dritte Flugzeugsitzvorrichtung 300a und die siebte Flugzeugsitzvorrichtung 700a, in zwei unmittelbar nebeneinander angeordneten Sitzspalten, nämlich der ersten inneren Sitzspalte 38a und der zweiten inneren Sitzspalte 40a, ein Sitzpaar 46a aus, wobei Sitzrichtungen 310a, 710a der zwei Flugzeugsitzvorrichtungen 300a, 700a zumindest im Wesentlichen parallel zu der Flugzeugkabinenmittelachse 16a angeordnet sind und die Flugzeugsitze 320a, 720a der zwei Flugzeugsitzvorrichtungen 300a, 700a gangabgewandt angeordnet sind, wobei in den zwei unmittelbar nebeneinander angeordneten Sitzspalten 38a, 40a zumindest zwei der Sitzpaare 46a angeordnet sind (Fig. 4). Dadurch können in dem Flugzeugkabinenabschnitt 26a vorteilhaft Bereiche für paarweise reisende Passagiere geschaffen werden. Die zwei unmittelbar nebeneinander angeordneten Flugzeugsitzvorrichtungen, nämlich die dritte Flugzeugsitzvorrichtung 300a und die siebte Flugzeugsitzvorrichtung 700a, sind über die Flugzeugkabinenmittelachse 16a zueinander gespiegelt ausgebildet. Die zwei Flugzeugsitzvorrichtungen 300a, 700a der mehreren Flugzeugsitzvorrichtungen 100a, 200a, 300a, 400a, 500a, 600a, 700a, 800a, die das Sitzpaar 46a ausbilden, sind, in einer Ebene parallel zu dem Flugzeugkabinenboden 22a betrachtet, in Flugrichtung 24a bündig zueinander angeordnet. Die zwei Flugzeugsitzvorrichtungen 300a, 700a der mehreren Flugzeugsitzvorrichtungen 100a, 200a, 300a, 400a, 500a, 600a, 700a, 800a, die das Sitzpaar 46a ausbilden, sind in dem Mittelbereich 44a der Flugzeugkabine 12a angeordnet. Grundsätzlich ist es denkbar, dass die dritte Flugzeugsitzvorrichtung 300a und die siebte Flugzeugsitzvorrichtung 700a, die das Sitzpaar 46a ausbilden, eine gemeinsame Matratze, insbesondere in der Liegestellung des dritten Flugzeugsitzes 320a und des siebten Flugzeugsitzes 720a, aufweisen.

In der ersten inneren Sitzspalte 38a weist der zweite Flugzeugsitz 220a eine zweite Achse 48a auf, die parallel zu dem Flugzeugkabinenboden 22a ausgerichtet ist, die einen Sitzboden des zweiten Flugzeugsitzes 220a der zweiten Flugzeugsitzvorrichtung 200a schneidet und die parallel zu der Sitzrichtung 210a der zweiten Flugzeugsitzvorrichtung 200a ausgerichtet ist, wobei die zweite Achse 48a einen Sitzboden eines weiteren achten Flugzeugsitzes einer der weiteren achten Flugzeugsitzvorrichtungen 800'a in der zweiten inneren Sitzspalte 40a schneidet, wobei der weitere achte Flugzeugsitz eine weitere achte Achse 50a aufweist, die parallel zu einer Sitzrichtung dieser weiteren achten Flugzeugsitzvorrichtung 800'a und parallel zu der zweiten Achse 48a ausgerichtet ist (Fig. 4).

Die Flugzeugsitzanordnung 14a weist eine erste Sitzgruppierung 52a von vier in dem Flugzeugkabinenabschnitt 26a in der ersten inneren Sitzspalte 38a unmittelbar hintereinander angeordneten Flugzeugsitzvorrichtungen, nämlich der ersten Flugzeugsitzvorrichtung 100a, der zweiten Flugzeugsitzvorrichtung 200a, der dritten Flugzeugsitzvorrichtung 300a und der vierten Flugzeugsitzvorrichtung 400a, auf, die jeweils unterschiedliche Sitzrichtungen 110a, 210a, 310a ,410a aufweisen und deren Flugzeugsitze 120a, 220a, 320a, 420a gangseitig oder gangabgewandt angeordnet sind (Fig. 3 und 4). Die Sitzrichtungen 110a, 210a, 310a, 410a der unmittelbar hintereinander angeordneten Flugzeugsitzvorrichtungen 100a, 200a, 300a, 400a sind innerhalb der ersten Sitzgruppierung 52a abwechselnd zumindest im Wesentlichen parallel und abgewinkelt zu der Flugzeugkabinenmittelachse 16a angeordnet. Die erste Sitzgruppierung 52a bildet eine periodisch wiederholbare Abfolge aus. Dabei können mehrere identische erste Sitzgruppierungen 52a entlang einer Flugzeuglängsachse unmittelbar hintereinander angeordnet werden.

In Flugrichtung 24a betrachtet ist vor und hinter der ersten Flugzeugsitzvorrichtung 100a, deren Sitzrichtung 110a zumindest im Wesentlichen parallel zu der Flugzeugkabinenmittelachse 16a angeordnet ist, jeweils eine Flugzeugsitzvorrichtung angeordnet, deren Sitzrichtung abgewinkelt zu der Flugzeugkabinenmittelachse 16a angeordnet ist. In Flugrichtung 24a betrachtet ist vor und hinter der zweiten Flugzeugsitzvorrichtung 200a, deren Sitzrichtung 210a abgewinkelt zu der Flugzeugkabinenmittelachse 16a angeordnet ist, jeweils eine Flugzeugsitzvorrichtung angeordnet, deren Sitzrichtung zumindest im Wesentlichen parallel zu der Flugzeugkabinenmittelachse 16a angeordnet ist. In Flugrichtung 24a betrachtet ist vor und hinter der dritten Flugzeugsitzvorrichtung 300a, deren Sitzrichtung 310a zumindest im Wesentlichen parallel zu der Flugzeugkabinenmittelachse 16a angeordnet ist, jeweils eine Flugzeugsitzvorrichtung angeordnet, deren Sitzrichtung abgewinkelt zu der Flugzeugkabinenmittelachse 16a angeordnet ist. In Flugrichtung 24a betrachtet ist hinter der vierten Flugzeugsitzvorrichtung 400a, deren Sitzrichtung 410a abgewinkelt zu der Flugzeugkabinenmittelachse 16a angeordnet ist, jeweils eine Flugzeugsitzvorrichtung angeordnet, deren Sitzrichtung zumindest im Wesentlichen parallel zu der Flugzeugkabinenmittelachse 16a angeordnet ist. Grundsätzlich kann in Flugrichtung 24a betrachtet vor und hinter der vierten Flugzeugsitzvorrichtung 400a, deren Sitzrichtung 410a abgewinkelt zu der Flugzeugkabinenmittelachse 16a angeordnet ist, jeweils eine Flugzeugsitzvorrichtung angeordnet sein, deren Sitzrichtung zumindest im Wesentlichen parallel zu der Flugzeugkabinenmittelachse 16a angeordnet ist.

Die Flugzeugsitzanordnung 14a weist eine zweite Sitzgruppierung 54a von vier in dem Flugzeugkabinenabschnitt 26a in der zweiten inneren Sitzspalte 40a unmittelbar hintereinander angeordneten Flugzeugsitzvorrichtungen, nämlich der fünften Flugzeugsitzvorrichtung 500a, der sechsten Flugzeugsitzvorrichtung 600a, der siebten Flugzeugsitzvorrichtung 700a und der achten Flugzeugsitzvorrichtung 800a, auf, die jeweils unterschiedliche Sitzrichtungen 510a, 610a, 710a, 810a aufweisen und deren Flugzeugsitze 520a, 620a, 720a, 820a gangseitig oder gangabgewandt angeordnet sind (Fig. 4). Die Sitzrichtungen 510a, 610a, 710a, 810a der unmittelbar hintereinander angeordneten Flugzeugsitzvorrichtungen 500a, 600a, 700a, 800a sind innerhalb der zweiten Sitzgruppierung 54a abwechselnd zumindest im Wesentlichen parallel und abgewinkelt zu der Flugzeugkabinenmittelachse 16a angeordnet. Die zweite Sitzgruppierung 54a bildet eine periodisch wiederholbare Abfolge aus. Dabei können mehrere identische zweite Sitzgruppierungen 54a entlang der Flugzeugkabinenmittelachse 16a unmittelbar hintereinander angeordnet werden.

In Flugrichtung 24a betrachtet ist vor und hinter der fünften Flugzeugsitzvorrichtung 500a, deren Sitzrichtung 510a zumindest im Wesentlichen parallel zu der Flugzeugkabinenmittelachse 16a angeordnet ist, jeweils eine Flugzeugsitzvorrichtung angeordnet, deren Sitzrichtung abgewinkelt zu der Flugzeugkabinenmittelachse 16a angeordnet ist. In Flugrichtung 24a betrachtet ist vor und hinter der sechsten Flugzeugsitzvorrichtung 600a, deren Sitzrichtung 610a abgewinkelt zu der Flugzeugkabinenmittelachse 16a angeordnet ist, jeweils eine Flugzeugsitzvorrichtung angeordnet, deren Sitzrichtung zumindest im Wesentlichen parallel zu der Flugzeugkabinenmittelachse 16a angeordnet ist. In Flugrichtung 24a betrachtet ist vor und hinter der siebten Flugzeugsitzvorrichtung 700a, deren Sitzrichtung 710a zumindest im Wesentlichen parallel zu der Flugzeugkabinenmittelachse 16a angeordnet ist, jeweils eine Flugzeugsitzvorrichtung angeordnet, deren Sitzrichtung abgewinkelt zu der Flugzeugkabinenmittelachse 16a angeordnet ist. In Flugrichtung 24a betrachtet ist hinter der achten Flugzeugsitzvorrichtung 800a, deren Sitzrichtung 810a abgewinkelt zu der Flugzeugkabinenmittelachse 16a angeordnet ist, jeweils eine Flugzeugsitzvorrichtung angeordnet, deren Sitzrichtung zumindest im Wesentlichen parallel zu der Flugzeugkabinenmittelachse 16a angeordnet ist. Grundsätzlich kann in Flugrichtung 24a betrachtet vor und hinter der achten Flugzeugsitzvorrichtung 800a, deren Sitzrichtung 810a abgewinkelt zu der Flugzeugkabinenmittelachse 16a angeordnet ist, jeweils eine Flugzeugsitzvorrichtung angeordnet sein, deren Sitzrichtung zumindest im Wesentlichen parallel zu der Flugzeugkabinenmittelachse 16a angeordnet ist.

Die erste Flugzeugsitzvorrichtung 100a, die zweite Flugzeugsitzvorrichtung 200a, die dritte Flugzeugsitzvorrichtung 300a und die vierte Flugzeugsitzvorrichtung 400a in dem Flugzeugkabinenabschnitt 26a unterscheiden sich in zumindest einer Komfortkategorie, wobei die Flugzeugsitzvorrichtungen 100a, 200a, 300a, 400a für die zumindest eine Komfortkategorie jeweils einen zueinander unterschiedlichen Wert aufweisen, der durch eine unterschiedliche Anordnung der Flugzeugsitze 120a, 220a, 320a, 420a und durch die zumindest teilweise unterschiedliche Ausbildung der Flugzeugsitzvorrichtungen 100a, 200a, 300a, 400a bedingt ist. Die fünfte Flugzeugsitzvorrichtung 500a, die sechste Flugzeugsitzvorrichtung 600a, die siebte Flugzeugsitzvorrichtung 700a und die achte Flugzeugsitzvorrichtung 800a in dem Flugzeugkabinenabschnitt 26a unterscheiden sich in zumindest einer Komfortkategorie, wobei die Flugzeugsitzvorrichtungen 500a, 600a, 700a, 800a für die zumindest eine Komfortkategorie jeweils einen zueinander unterschiedlichen Wert aufweisen, der durch eine unterschiedliche Anordnung der Flugzeugsitze 520a, 620a, 720a, 820a und durch die zumindest teilweise unterschiedliche Ausbildung der Flugzeugsitzvorrichtungen 500a, 600a, 700a, 800a bedingt ist.

Grundsätzlich müssen sich mindestens zwei Flugzeugsitzvorrichtungen der ersten Flugzeugsitzvorrichtung 100a, der zweiten Flugzeugsitzvorrichtung 200a, der dritten Flugzeugsitzvorrichtung 300a, der vierten Flugzeugsitzvorrichtung 400a, der fünften Flugzeugsitzvorrichtung 500a, der sechsten Flugzeugsitzvorrichtung 600a, der siebten Flugzeugsitzvorrichtung 700a und der achten Flugzeugsitzvorrichtung 800a, aber insbesondere nicht alle Flugzeugsitzvorrichtungen, in dem Flugzeugkabinenabschnitt 26a in zumindest einer Komfortkategorie unterscheiden. Grundsätzlich müssen sich die Flugzeugsitzvorrichtungen 100a, 200a, 300a, 400a, 500a, 600a, 700a, 800a nicht in sämtlichen Werten, insbesondere für mehrere Komfortkategorien, voneinander unterscheiden.

Die zumindest eine Komfortkategorie beschreibt einen Livingspace.

Im vorliegenden Fall ist eine erste Komfortkategorie als eine maximale Bettlänge eines Flugzeugsitzes in der Liegestellung ausgebildet. Je größer ein Wert für die maximale Bettlänge ist, desto höher ist ein Komfort für einen Passagier. Der Wert für die maximale Bettlänge ist als eine Länge ausgebildet. Die zweite Flugzeugsitzvorrichtung 200a weist für eine maximale Bettlänge des zweiten Flugzeugsitzes 220a einen Wert auf, der größer ist als ein Wert der ersten Flugzeugsitzvorrichtung 100a für eine maximale Bettlänge des ersten Flugzeugsitzes 120a. Im vorliegenden Fall ist der Wert der zweiten Flugzeugsitzvorrichtung 200a für die maximale Bettlänge des zweiten Flugzeugsitzes 220a um 5 % größer als der Wert der ersten Flugzeugsitzvorrichtung 100a für die maximale Bettlänge des ersten Flugzeugsitzes 120a. Die erste Flugzeugsitzvorrichtung 100a und die zweite Flugzeugsitzvorrichtung 200a unterscheiden sich in ihren maximalen Bettlängen. Die vierte Flugzeugsitzvorrichtung 400a weist für eine maximale Bettlänge des vierten Flugzeugsitzes 420a einen Wert auf, der größer ist als ein Wert der dritten Flugzeugsitzvorrichtung 300a für eine maximale Bettlänge des dritten Flugzeugsitzes 320a. Im vorliegenden Fall ist der Wert der vierten Flugzeugsitzvorrichtung 400a für die maximale Bettlänge des vierten Flugzeugsitzes 420a um 5 % größer als der Wert der dritten Flugzeugsitzvorrichtung 300a für die maximale Bettlänge des dritten Flugzeugsitzes 320a. Die dritte Flugzeugsitzvorrichtung 300a und die vierte Flugzeugsitzvorrichtung 400a unterscheiden sich in ihren maximalen Bettlängen.

Im vorliegenden Fall ist eine zweite Komfortkategorie als eine minimale Durchgangsbreite in zumindest einem Bereich eines Flugzeugsitzbereichs ausgebildet. Die Durchgangsbreite ist als eine minimale Breite des direkten Zugangs in einem Bereich zwischen dem ersten Flugzeugkabinengang 32a oder dem zweiten Flugzeugkabinengang 34a und einem Bereich, der in Sitzrichtung der entsprechenden Flugzeugsitzvorrichtung betrachtet unmittelbar hinter einem Sitzboden eines Flugzeugsitzes dieser Flugzeugsitzvorrichtung angeordnet ist, ausgebildet. Je größer ein Wert für die minimale Durchgangsbreite ist, desto höher ist ein Komfort für einen Passagier. Der Wert für die minimale Durchgangsbereite in zumindest einem Bereich eines Flugzeugsitzbereichs ist als eine Länge ausgebildet. Die erste Flugzeugsitzvorrichtung 100a weist für eine minimale Durchgangsbreite in zumindest einem Bereich eines Flugzeugsitzbereichs der ersten Flugzeugsitzvorrichtung 100a einen Wert auf, der größer ist als ein Wert für eine minimale Durchgangsbreite in zumindest einem Bereich eines Flugzeugsitzbereichs der zweiten Flugzeugsitzvorrichtung 200a. Die dritte Flugzeugsitzvorrichtung 300a weist für eine minimale Durchgangsbreite in zumindest einem Bereich eines Flugzeugsitzbereichs der dritten Flugzeugsitzvorrichtung 300a einen Wert auf, der größer ist als der Wert für die minimale Durchgangsbreite in dem zumindest einen Bereich des Flugzeugsitzbereichs der ersten Flugzeugsitzvorrichtung 100a. Die vierte Flugzeugsitzvorrichtung 400a weist für eine minimale Durchgangsbreite in zumindest einem Bereich eines Flugzeugsitzbereichs der vierten Flugzeugsitzvorrichtung 400a einen Wert auf, der größer ist als der Wert für die minimale Durchgangsbreite in dem zumindest einen Bereich des Flugzeugsitzbereichs der dritten Flugzeugsitzvorrichtung 300a.

Grundsätzlich kann zumindest eine weitere Komfortkategorie als eine Grundfläche einer Flugzeugsitzvorrichtung, als eine Ablagefläche einer Flugzeugsitzvorrichtung, insbesondere einer Konsole, als eine Tischfläche einer Flugzeugsitzvorrichtung, als eine, insbesondere minimale oder maximale, Armfreiheit für einen Passagier, insbesondere einem begrenzenden, maximalen Bewegungswinkel ausgehend von der Sitzrichtung in der Sitzstellung, als eine, insbesondere maximale, Abstützfläche eines Flugzeugsitzes für einen Passagier, insbesondere in der Sitzstellung oder in der Liegestellung, als eine, insbesondere maximale, Bettbreite des Flugzeugsitzes in der Liegestellung und/oder als ein, insbesondere maximales, Fußraumvolumen ausgebildet sein.

Grundsätzlich kann die zumindest eine Komfortkategorie auch eine Qualität, einen Lärm und/oder eine Beleuchtung beschreiben. Die Qualität kann insbesondere eine Sitzpolsterung, beispielsweise einen Schaumstoffkern oder einen Federkern, oder ein Kontaktmaterial, beispielsweise Stoff oder Leder, beschreiben. Der Lärm kann insbesondere eine Abschirmung des Flugzeugsitzes gegenüber Umgebungsgeräuschen aus der Flugzeugkabine beschreiben. Die Beleuchtung kann insbesondere eine Anzahl an Beleuchtungsmitteln und eine Eigenschaft der Beleuchtungsmittel beschreiben.

In der ersten inneren Sitzspalte 38a ist eine der weiteren zweiten Flugzeugsitzvorrichtungen 200'a in einer entgegen der Flugrichtung 24a betrachtet ersten Sitzreihe des Flugzeugkabinenabschnitts 26a angeordnet (Fig. 4). In Flugrichtung 24a betrachtet ist unmittelbar hinter der in der ersten Sitzreihe des Flugzeugkabinenabschnitts 26a angeordneten weiteren zweiten Flugzeugsitzvorrichtung 200'a in dem Mittelbereich 44a eines der mehreren Flugzeugkabinenmodule 30a angeordnet. Dadurch kann in der ersten Sitzreihe verglichen mit der zweiten Flugzeugsitzvorrichtung 200a ein höherer Komfort erreicht werden, da in der ersten Sitzreihe mehr Platz zur Verfügung steht. Die in der ersten Sitzreihe in dem Flugzeugkabinenabschnitt 26a angeordnete weitere zweite Flugzeugsitzvorrichtung 200'a kann sich grundsätzlich in zumindest einer Komfortkategorie von zumindest einer Flugzeugsitzvorrichtung der mehreren Flugzeugsitzvorrichtungen 100a, 200a, 300a, 400a, 500a, 600a, 700a, 800a unterscheiden. Im vorliegenden Fall kann das in dem Mittelbereich 44a angeordnete Flugzeugkabinenmodul 30a als ein Front-Row-Monument ausgebildet sein. Grundsätzlich kann das Flugzeugkabinenmodul 30a auch Teil der weiteren zweiten Flugzeugsitzvorrichtung 200'a sein.

In der zweiten inneren Sitzspalte 40a ist eine der weiteren sechsten Flugzeugsitzvorrichtungen 600'a in der entgegen der Flugrichtung 24a betrachtet ersten Sitzreihe des Flugzeugkabinenabschnitts 26a angeordnet (Fig. 4). In Flugrichtung 24a betrachtet ist unmittelbar hinter der in der ersten Sitzreihe des Flugzeugkabinenabschnitts 26a angeordneten weiteren sechsten Flugzeugsitzvorrichtung 600'a in dem Mittelbereich 44a das zuvor genannte Flugzeugkabinenmodul 30a angeordnet. Die in der ersten Sitzreihe in dem Flugzeugkabinenabschnitt 26a angeordnete weitere sechste Flugzeugsitzvorrichtung 600'a kann sich grundsätzlich in zumindest einer Komfortkategorie von zumindest einer Flugzeugsitzvorrichtung der mehreren Flugzeugsitzvorrichtungen 100a, 200a, 300a, 400a, 500a, 600a, 700a, 800a unterscheiden. Grundsätzlich kann das Flugzeugkabinenmodul 30a auch Teil der weiteren sechsten Flugzeugsitzvorrichtung 600'a sein.

In der ersten äußeren Sitzspalte 36a ist eine der weiteren fünften Flugzeugsitzvorrichtungen 500'a in der entgegen der Flugrichtung 24a betrachtet ersten Sitzreihe des Flugzeugkabinenabschnitts 26a angeordnet (Fig. 4). In Flugrichtung 24a betrachtet ist unmittelbar hinter der in der ersten Sitzreihe des Flugzeugkabinenabschnitts 26a angeordneten weiteren fünften Flugzeugsitzvorrichtung 500'a in der ersten äußeren Sitzspalte 36a ein weiteres der Flugzeugkabinenmodule 30a angeordnet. Die in der ersten Sitzreihe in dem Flugzeugkabinenabschnitt 26a in der ersten Sitzspalte 36a angeordnete weitere fünfte Flugzeugsitzvorrichtung 500'a kann sich grundsätzlich in zumindest einer Komfortkategorie von zumindest einer Flugzeugsitzvorrichtung der mehreren Flugzeugsitzvorrichtungen 100a, 200a, 300a, 400a, 500a, 600a, 700a, 800a unterscheiden. Grundsätzlich kann das weitere Flugzeugkabinenmodul 30a auch Teil der weiteren sechsten Flugzeugsitzvorrichtung 600'a sein.

In der zweiten äußeren Sitzspalte 42a ist eine der weiteren ersten Flugzeugsitzvorrichtungen 100'a in der entgegen der Flugrichtung 24a betrachtet ersten Sitzreihe des Flugzeugkabinenabschnitts 26a angeordnet (Fig. 4). In Flugrichtung 24a betrachtet ist unmittelbar hinter der in der ersten Sitzreihe des Flugzeugkabinenabschnitts 26a angeordneten weiteren ersten Flugzeugsitzvorrichtung 100'a in der zweiten äußeren Sitzspalte 42a ein anderes der Flugzeugkabinenmodule 30a angeordnet. Die in der ersten Sitzreihe in dem Flugzeugkabinenabschnitt 26a in der zweiten äußeren Sitzspalte 42a angeordnete weitere erste Flugzeugsitzvorrichtung 100'a kann sich grundsätzlich in zumindest einer Komfortkategorie von zumindest einer Flugzeugsitzvorrichtung der mehreren Flugzeugsitzvorrichtungen 100a, 200a, 300a, 400a, 500a, 600a, 700a, 800a unterscheiden. Grundsätzlich kann das andere Flugzeugkabinenmodul 30a auch Teil der weiteren ersten Flugzeugsitzvorrichtung 100'a sein.

Grundsätzlich ist die in den Figuren 2 und 3 dargestellte Flugzeugsitzanordnung 14a nicht auf die gezeigte Anzahl an Flugzeugsitzvorrichtungen beschränkt. Die Flugzeugsitzanordnung 14a kann dabei weniger oder mehr als die dargestellten Flugzeugsitzvorrichtungen 100a, 100'a, 200a, 200'a, 300a, 300'a, 400a, 400'a, 500a, 500'a, 600a, 600'a, 700a, 700'a, 800a, 800'a aufweisen. Grundsätzlich wäre es auch denkbar, dass die in den Figuren 2 bis 4 gezeigte Flugzeugsitzanordnung 14a insgesamt oder teilweise, insbesondere zumindest eine der Sitzspalten 36a, 38a, 40a, 42a, um eine Achse gespiegelt in der Flugzeugkabine 12a angeordnet ist, wobei die Achse senkrecht zu der Flugzeugkabinenmittelachse 16a und parallel zu dem Flugzeugkabinenboden 22a ausgerichtet ist.

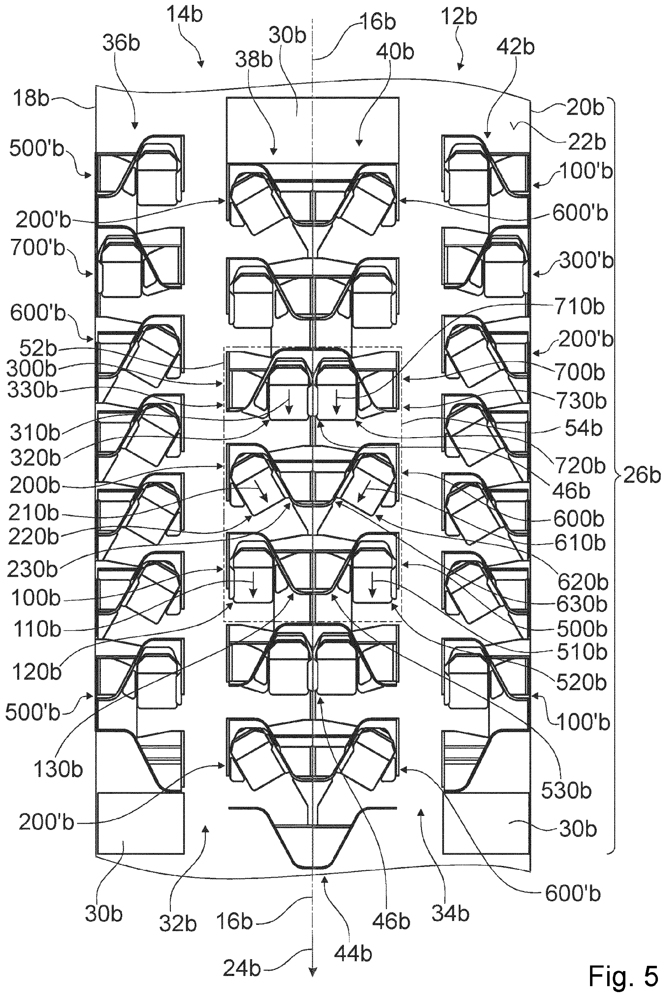

In den Figuren 5 bis 10 sind sechs weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in Figuren 1 bis 4 nachgestellt. In den Ausführungsbeispielen der Figuren 5 bis 10 ist der Buchstabe a durch die Buchstaben b bis g ersetzt.

Die Figur 5 zeigt eine Flugzeugsitzanordnung 14b in einem zweiten Ausführungsbeispiel. Die Flugzeugsitzanordnung 14b ist zur Verwendung in einer teilweise dargestellten Flugzeugkabine 12b eines Flugzeugs vorgesehen. Die Flugzeugkabine 12b weist eine Flugzeugkabinenmittelachse 16b auf. Die Flugzeugkabinenmittelachse 16b ist als eine Flugzeuglängsachse ausgebildet. Die Flugzeugkabine 12b weist zwei sich gegenüberliegende Flugzeugkabinenaußenwände 18b, 20b auf. Die Flugzeugkabinenmittelachse 16b ist parallel zu einem Flugzeugkabinenboden 22b der Flugzeugkabine 12b ausgerichtet. Das Flugzeug weist in zumindest einem Betriebszustand eine Flugrichtung 24b auf. Die Flugrichtung 24b ist im vorliegenden Fall idealisiert parallel zu der Flugzeugkabinenmittelachse 16b ausgerichtet. Die Flugzeugkabine 12b weist entlang der Flugzeugkabinenmittelachse 16b einen Flugzeugkabinenabschnitt 26b auf. Der Flugzeugkabinenabschnitt 26b ist im vorliegenden Fall durch mehrere schematisch dargestellte Flugzeugkabinenmodule 30b entlang der Flugzeugkabinenmittelachse 16b begrenzt. Die Flugzeugkabine 12b weist in dem Flugzeugkabinenabschnitt 26b einen ersten Flugzeugkabinengang 32b und einen zweiten Flugzeugkabinengang 34b auf. Die Flugzeugsitzanordnung 14b umfasst eine erste äußere Sitzspalte 36b. Die Flugzeugsitzanordnung 14b umfasst eine erste innere Sitzspalte 38b. Die Flugzeugsitzanordnung 14b umfasst eine zweite innere Sitzspalte 40b. Die Flugzeugsitzanordnung 14b umfasst eine zweite äußere Sitzspalte 42b. Im vorliegenden Fall ist die erste innere Sitzspalte 38b über die Flugzeugkabinenmittelachse 16b symmetrisch zu der zweiten inneren Sitzspalte 40b ausgebildet. Im vorliegenden Fall ist die erste äußere Sitzspalte 36b über die Flugzeugkabinenmittelachse 16b symmetrisch zu der zweiten äußeren Sitzspalte 42b ausgebildet. Die erste innere Sitzspalte 38b und die zweite innere Sitzspalte 40b sind unmittelbar nebeneinander angeordnet. Die Flugzeugkabine 12b weist einen Mittelbereich 44b auf.

Die Flugzeugsitzanordnung 14b umfasst mehrere in dem Flugzeugkabinenabschnitt 26b angeordnete Flugzeugsitzvorrichtungen 100b, 200b, 300b, 500b, 600b, 700b. Die mehreren Flugzeugsitzvorrichtungen 100b, 200b, 300b, 500b, 600b, 700b sind unterschiedlich voneinander ausgebildet. Die Flugzeugsitzvorrichtungen 100b, 200b, 300b, 500b, 600b, 700b weisen jeweils einen Flugzeugsitz auf. Die Flugzeugsitzvorrichtungen 100b, 200b, 300b, 500b, 600b, 700b weisen jeweils eine Konsole auf. Die Flugzeugsitzanordnung 14b umfasst eine erste Flugzeugsitzvorrichtung 100b der mehreren Flugzeugsitzvorrichtungen 100b, 200b, 300b, 500b, 600b, 700b. Die erste Flugzeugsitzvorrichtung 100b weist eine Sitzrichtung 110b auf. Die Sitzrichtung 110b der ersten Flugzeugsitzvorrichtung 100b entspricht der Flugrichtung 24b. Die erste Flugzeugsitzvorrichtung 100b weist einen ersten Flugzeugsitz 120b auf. Die erste Flugzeugsitzvorrichtung 100b weist eine erste Konsole 130b auf. Die erste Flugzeugsitzvorrichtung 100b hat einen direkten Zugang zu dem ersten Flugzeugkabinengang 32b. Die Flugzeugsitzanordnung 14b umfasst eine zweite Flugzeugsitzvorrichtung 200b der mehreren Flugzeugsitzvorrichtungen 100b, 200b, 300b, 500b, 600b, 700b. Die zweite Flugzeugsitzvorrichtung 200b weist eine Sitzrichtung 210b auf. Die Sitzrichtung 210b der zweiten Flugzeugsitzvorrichtung 200b weicht von der Flugrichtung 24b ab. Die zweite Flugzeugsitzvorrichtung 200b weist einen zweiten Flugzeugsitz 220b auf. Die zweite Flugzeugsitzvorrichtung 200b weist eine zweite Konsole 230b auf. Die zweite Flugzeugsitzvorrichtung 200b hat einen direkten Zugang zu dem ersten Flugzeugkabinengang 32b. Die Flugzeugsitzanordnung 14b umfasst eine dritte Flugzeugsitzvorrichtung 300b der mehreren Flugzeugsitzvorrichtungen 100b, 200b, 300b, 500b, 600b, 700b. Die dritte Flugzeugsitzvorrichtung 300b weist eine Sitzrichtung 310b auf. Die Sitzrichtung 310b der dritten Flugzeugsitzvorrichtung 300b entspricht der Flugrichtung 24b. Die dritte Flugzeugsitzvorrichtung 300b weist einen dritten Flugzeugsitz 320b auf. Die dritte Flugzeugsitzvorrichtung 300b weist eine dritte Konsole 330b auf. Die dritte Flugzeugsitzvorrichtung 300b hat einen direkten Zugang zu dem ersten Flugzeugkabinengang 32b. Die erste Flugzeugsitzvorrichtung 100b, die zweite Flugzeugsitzvorrichtung 200b und die dritte Flugzeugsitzvorrichtung 300b sind unterschiedlich voneinander ausgebildet. Die Flugzeugsitzanordnung 14b umfasst eine fünfte Flugzeugsitzvorrichtung 500b der mehreren Flugzeugsitzvorrichtungen 100b, 200b, 300b, 500b, 600b, 700b. Die fünfte Flugzeugsitzvorrichtung 500b ist über eine Flugzeuglängsachse, insbesondere über die Flugzeugkabinenmittelachse 16b, gespiegelt zu der ersten Flugzeugsitzvorrichtung 100b ausgebildet. Die fünfte Flugzeugsitzvorrichtung 500b weist eine Sitzrichtung 510b auf. Die Sitzrichtung 510b der fünften Flugzeugsitzvorrichtung 500b entspricht der Flugrichtung 24b. Die fünfte Flugzeugsitzvorrichtung 500b weist einen fünften Flugzeugsitz 520b auf. Die fünfte Flugzeugsitzvorrichtung 500b weist eine fünfte Konsole 530b auf. Die fünfte Flugzeugsitzvorrichtung 500b hat einen direkten Zugang zu dem zweiten Flugzeugkabinengang 34b. Die Flugzeugsitzanordnung 14b umfasst eine sechste Flugzeugsitzvorrichtung 600b der mehreren Flugzeugsitzvorrichtungen 100b, 200b, 300b, 400b, 500b, 600b, 700b, 800b. Die sechste Flugzeugsitzvorrichtung 600b ist über eine Flugzeuglängsachse, insbesondere über die Flugzeugkabinenmittelachse 16b, gespiegelt zu der zweiten Flugzeugsitzvorrichtung 200b ausgebildet. Die sechste Flugzeugsitzvorrichtung 600b weist eine Sitzrichtung 610b auf. Die Sitzrichtung 610b der sechsten Flugzeugsitzvorrichtung 600b weicht von der Flugrichtung 24b ab. Die sechste Flugzeugsitzvorrichtung 600b weist einen sechsten Flugzeugsitz 620b auf. Die sechste Flugzeugsitzvorrichtung 600b weist eine sechste Konsole 630b auf. Die sechste Flugzeugsitzvorrichtung 600b hat einen direkten Zugang zu dem zweiten Flugzeugkabinengang 34b. Die Flugzeugsitzanordnung 14b umfasst eine siebte Flugzeugsitzvorrichtung 700b der mehreren Flugzeugsitzvorrichtungen 100b, 200b, 300b, 500b, 600b, 700b. Die siebte Flugzeugsitzvorrichtung 700b ist über eine Flugzeuglängsachse, insbesondere über die Flugzeugkabinenmittelachse 16b, gespiegelt zu der dritten Flugzeugsitzvorrichtung 300b ausgebildet. Die siebte Flugzeugsitzvorrichtung 700b weist eine Sitzrichtung 710b auf. Die Sitzrichtung 710b der siebten Flugzeugsitzvorrichtung 700b entspricht der Flugrichtung 24b. Die siebte Flugzeugsitzvorrichtung 700b weist einen siebten Flugzeugsitz 720b auf. Die siebte Flugzeugsitzvorrichtung 700b weist eine siebte Konsole 730b auf. Die siebte Flugzeugsitzvorrichtung 700b hat einen direkten Zugang zu dem zweiten Flugzeugkabinengang 34b. Die fünfte Flugzeugsitzvorrichtung 500b, die sechste Flugzeugsitzvorrichtung 600b und die siebte Flugzeugsitzvorrichtung 700b sind unterschiedlich voneinander ausgebildet. Die Flugzeugsitze 120b, 220b, 320b, 520b, 620b, 720b sind jeweils als ein Full-Flat-Sitz ausgebildet. Die Flugzeugsitze 120b, 220b, 320b, 520b, 620b, 720b sind jeweils zwischen einer Sitzstellung und einer Liegestellung verstellbar. Im vorliegenden Fall umfasst die Flugzeugsitzanordnung 14b sechs unterschiedlich ausgebildete Flugzeugsitzvorrichtungen 100b, 200b, 300b, 500b, 600b, 700b, die jeweils zumindest einmal in der Flugzeugsitzanordnung 14b vorhanden sind. Die erste Flugzeugsitzvorrichtung 100b, die zweite Flugzeugsitzvorrichtung 200b, die dritte Flugzeugsitzvorrichtung 300b, die fünfte Flugzeugsitzvorrichtung 500b, die sechste Flugzeugsitzvorrichtung 600b und die siebte Flugzeugsitzvorrichtung 700b sind unterschiedlich voneinander ausgebildet. In dem Flugzeugkabinenabschnitt 26b sind im vorliegenden Fall sechs unterschiedlich voneinander ausgebildete Flugzeugsitzvorrichtungen 100b, 200b, 300b, 500b, 600b, 700b angeordnet. Die Flugzeugsitzvorrichtungen 100b, 200b, 300b, 500b, 600b, 700b bilden jeweils einen Flugzeugsitzbereich aus. Die Flugzeugsitzvorrichtungen 100b, 200b, 300b, 500b, 600b, 700b weisen unterschiedlich ausgeformte und/oder unterschiedlich angeordnete Bauteile in den entsprechenden Flugzeugsitzbereichen auf. Insbesondere eine Anordnung und eine Ausrichtung der Flugzeugsitze 120b, 220b, 320b in den jeweiligen Flugzeugsitzbereichen unterscheiden sich bei der ersten Flugzeugsitzvorrichtung 100b, der zweiten Flugzeugsitzvorrichtung 200b und der dritten Flugzeugsitzvorrichtung 300b. Des Weiteren unterscheiden sich insbesondere eine Anordnung und eine Ausrichtung der Flugzeugsitze 520b, 620b, 720b in den jeweiligen Flugzeugsitzbereichen bei der fünften Flugzeugsitzvorrichtung 500b, der sechsten Flugzeugsitzvorrichtung 600b und der siebten Flugzeugsitzvorrichtung 700b. Die erste Flugzeugsitzvorrichtung 100b und die fünfte Flugzeugsitzvorrichtung 500b sind unmittelbar nebeneinander angeordnet. Die zweite Flugzeugsitzvorrichtung 200b und die sechste Flugzeugsitzvorrichtung 600b sind unmittelbar nebeneinander angeordnet. Die dritte Flugzeugsitzvorrichtung 300b und die siebte Flugzeugsitzvorrichtung 700b sind unmittelbar nebeneinander angeordnet.

Im vorliegenden Fall umfasst die Flugzeugsitzanordnung 14b mehrere weitere erste Flugzeugsitzvorrichtungen 100'b, die zumindest im Wesentlichen identisch zu der ersten Flugzeugsitzvorrichtung 100b ausgebildet sind. Die weiteren ersten Flugzeugsitzvorrichtungen 100'b sind jeweils in der ersten inneren Sitzspalte 38b oder in der zweiten äußeren Sitzspalte 42b angeordnet. Im vorliegenden Fall umfasst die Flugzeugsitzanordnung 14b mehrere weitere zweite Flugzeugsitzvorrichtungen 200'b, die zumindest im Wesentlichen identisch zu der zweiten Flugzeugsitzvorrichtung 200b ausgebildet sind. Die weiteren zweiten Flugzeugsitzvorrichtungen 200'b sind jeweils in der ersten inneren Sitzspalte 38b oder in der zweiten äußeren Sitzspalte 42b angeordnet. Im vorliegenden Fall umfasst die Flugzeugsitzanordnung 14b mehrere weitere dritte Flugzeugsitzvorrichtungen 300'b, die zumindest im Wesentlichen identisch zu der dritten Flugzeugsitzvorrichtung 300b ausgebildet sind. Die weiteren dritten Flugzeugsitzvorrichtungen 300'b sind jeweils in der ersten inneren Sitzspalte 38b oder in der zweiten äußeren Sitzspalte 42b angeordnet. Im vorliegenden Fall umfasst die Flugzeugsitzanordnung 14b mehrere weitere fünfte Flugzeugsitzvorrichtungen 500'b, die zumindest im Wesentlichen identisch zu der fünften Flugzeugsitzvorrichtung 500b ausgebildet sind. Die weiteren fünften Flugzeugsitzvorrichtungen 500'b sind jeweils in der zweiten inneren Sitzspalte 40b oder in der ersten äußeren Sitzspalte 36b angeordnet. Im vorliegenden Fall umfasst die Flugzeugsitzanordnung 14b mehrere weitere sechste Flugzeugsitzvorrichtungen 600'b, die zumindest im Wesentlichen identisch zu der sechsten Flugzeugsitzvorrichtung 600b ausgebildet sind. Die weiteren sechsten Flugzeugsitzvorrichtungen 600'b sind jeweils in der zweiten inneren Sitzspalte 40b oder in der ersten äußeren Sitzspalte 36b angeordnet. Im vorliegenden Fall umfasst die Flugzeugsitzanordnung 14b mehrere weitere siebte Flugzeugsitzvorrichtungen 700'b, die zumindest im Wesentlichen identisch zu der siebten Flugzeugsitzvorrichtung 700b ausgebildet sind. Die weiteren siebten Flugzeugsitzvorrichtungen 700'b sind jeweils in der zweiten inneren Sitzspalte 40b oder in der ersten äußeren Sitzspalte 36b angeordnet. Aus Gründen der Übersichtlichkeit ist in der Figur 5 lediglich eine Auswahl an weiteren Flugzeugsitzvorrichtungen 100'a, 200'a, 300'a, 500'a, 600'a, 700'a mit einem Bezugszeichen versehen.

In dem Flugzeugkabinenabschnitt 26b ist in der ersten inneren Sitzspalte 38b die Sitzrichtung 110b der ersten Flugzeugsitzvorrichtung 100b der mehreren Flugzeugsitzvorrichtungen 100b, 200b, 300b, 500b, 600b, 700b zumindest im Wesentlichen parallel zu der Flugzeugkabinenmittelachse 16b ausgerichtet. Der erste Flugzeugsitz 120b der ersten Flugzeugsitzvorrichtung 100b der in dem Flugzeugkabinenabschnitt 26b in der ersten inneren Sitzspalte 38b angeordneten Flugzeugsitzvorrichtungen 100b, 200b, 300b ist gangseitig angeordnet. In dem Flugzeugkabinenabschnitt 26b ist in der ersten inneren Sitzspalte 38b die Sitzrichtung 210b der zweiten Flugzeugsitzvorrichtung 200b der mehreren Flugzeugsitzvorrichtungen 100b, 200b, 300b in einem Winkel von mindestens 18 Grad abgewinkelt zu der Flugzeugkabinenmittelachse 16b angeordnet. Im vorliegenden Fall ist in dem Flugzeugkabinenabschnitt 26b in der ersten inneren Sitzspalte 38b die Sitzrichtung 210b der zweiten Flugzeugsitzvorrichtung 200b der mehreren Flugzeugsitzvorrichtungen 100b, 200b, 300b, 500b, 600b, 700b in einem Winkel von 30 Grad abgewinkelt zu der Flugzeugkabinenmittelachse 16b angeordnet. In dem Flugzeugkabinenabschnitt 26b ist in der ersten inneren Sitzspalte 38b die Sitzrichtung 210b der zweiten Flugzeugsitzvorrichtung 200b der mehreren Flugzeugsitzvorrichtungen 100b, 200b, 300b, 500b, 600b, 700b von dem unmittelbar angrenzenden ersten Flugzeugkabinengang 32b weggerichtet. Der zweite Flugzeugsitz 220b der zweiten Flugzeugsitzvorrichtung 200b der in dem Flugzeugkabinenabschnitt 26b in der ersten inneren Sitzspalte 38b angeordneten Flugzeugsitzvorrichtungen 100b, 200b, 300b ist gangseitig angeordnet. In dem Flugzeugkabinenabschnitt 26b ist in der ersten inneren Sitzspalte 38b die Sitzrichtung 310b der dritten Flugzeugsitzvorrichtung 300b der mehreren Flugzeugsitzvorrichtungen 100b, 200b, 300b, 500b, 600b, 700b zumindest im Wesentlichen parallel zu der Flugzeugkabinenmittelachse 16b ausgerichtet. Der dritte Flugzeugsitz 320b der dritten Flugzeugsitzvorrichtung 300b der in ersten inneren Sitzspalte 38b angeordneten Flugzeugsitzvorrichtungen 100b, 200b, 300b ist gangabgewandt angeordnet. Die erste Flugzeugsitzvorrichtung 100b und die dritte Flugzeugsitzvorrichtung 300b sind durch die zweite Flugzeugsitzvorrichtung 200b voneinander beabstandet. In dem Flugzeugkabinenabschnitt 26b weisen in der ersten inneren Sitzspalte 38b die erste Flugzeugsitzvorrichtung 100b und die zweite Flugzeugsitzvorrichtung 200b je einen Flugzeugsitz 120b, 220b auf, der gangseitig angeordnet ist, und die dritte Flugzeugsitzvorrichtung 300b, die in der Flugrichtung 24b betrachtet unmittelbar hinter oder vor den zwei Flugzeugsitzvorrichtungen 100b, 200b angeordnet ist, den Flugzeugsitz 320b auf, der gangabgewandt angeordnet ist. Die Flugzeugsitze 120b, 320b der Flugzeugsitzvorrichtungen 100b, 300b, deren Sitzrichtungen 110b, 310b zumindest im Wesentlichen parallel zu der Flugzeugkabinenmittelachse 16b angeordnet sind, weisen unterschiedliche Abstände zu dem ersten Flugzeugkabinengang 32b auf. In dem Flugzeugkabinenabschnitt 26b sind in der ersten inneren Sitzspalte 38b drei Flugzeugsitzvorrichtungen der mehreren Flugzeugsitzvorrichtungen 100b, 200b, 300b, 500b, 600b, 700b, nämlich die erste Flugzeugsitzvorrichtung 100b, die zweite Flugzeugsitzvorrichtung 200b und die dritte Flugzeugsitzvorrichtung 300b, angeordnet, wobei die Sitzrichtungen 110b, 310b der ersten Flugzeugsitzvorrichtung 100b und der dritten Flugzeugsitzvorrichtung 300b zumindest im Wesentlich parallel zu der Flugzeugkabinenmittelachse 16b angeordnet sind und die Sitzrichtung 210b der zweiten Flugzeugsitzvorrichtung 200b abgewinkelt zu der Flugzeugkabinenmittelachse 16b angeordnet ist. In dem Flugzeugkabinenabschnitt 26b sind in der ersten inneren Sitzspalte 38b die drei Flugzeugsitzvorrichtungen der mehreren Flugzeugsitzvorrichtungen 100b, 200b, 300b, 500b, 600b, 700b, nämlich die erste Flugzeugsitzvorrichtung 100b, die zweite Flugzeugsitzvorrichtung 200b und die dritte Flugzeugsitzvorrichtung 300b, unmittelbar hintereinander angeordnet, wobei die Sitzrichtungen 110b, 310b der ersten Flugzeugsitzvorrichtung 100b und der dritten Flugzeugsitzvorrichtung 300b zumindest im Wesentlich parallel zu der Flugzeugkabinenmittelachse 16b angeordnet sind und die Sitzrichtung 210b der zweiten Flugzeugsitzvorrichtung 200b abgewinkelt zu der Flugzeugkabinenmittelachse 16b angeordnet ist. In dem Flugzeugkabinenabschnitt 26b sind in der ersten inneren Sitzspalte 38b drei Flugzeugsitzvorrichtungen der mehreren Flugzeugsitzvorrichtungen 100b, 200b, 300b, 500b, 600b, 700b, nämlich zumindest eine der weiteren dritten Flugzeugsitzvorrichtungen 300'b, die erste Flugzeugsitzvorrichtung 100b und die zweite Flugzeugsitzvorrichtung 200b, angeordnet, wobei Sitzrichtungen der ersten Flugzeugsitzvorrichtung 100b und der weiteren dritten Flugzeugsitzvorrichtung 300'b zumindest im Wesentlichen parallel zu der Flugzeugkabinenmittelachse 16b angeordnet sind und die Sitzrichtung 210b der zweiten Flugzeugsitzvorrichtung 200b abgewinkelt zu der Flugzeugkabinenmittelachse 16b angeordnet ist. In dem Flugzeugkabinenabschnitt 26b sind in der ersten inneren Sitzspalte 38b die drei Flugzeugsitzvorrichtungen der mehreren Flugzeugsitzvorrichtungen 100b, 200b, 300b, 500b, 600b, 700b, nämlich zumindest eine der weiteren dritten Flugzeugsitzvorrichtungen 300'b, die erste Flugzeugsitzvorrichtung 100b und die zweite Flugzeugsitzvorrichtung 200b, unmittelbar hintereinander angeordnet, wobei Sitzrichtungen der ersten Flugzeugsitzvorrichtung 100b und der weiteren dritten Flugzeugsitzvorrichtung 300'b zumindest im Wesentlichen parallel zu der Flugzeugkabinenmittelachse 16b angeordnet sind und die Sitzrichtung 210b der zweiten Flugzeugsitzvorrichtung 200b abgewinkelt zu der Flugzeugkabinenmittelachse 16b angeordnet ist. In dem Flugzeugkabinenabschnitt 26b sind in der ersten inneren Sitzspalte 38b drei voneinander unterschiedlich ausgebildete, unmittelbar hintereinander angeordnete Flugzeugsitzvorrichtungen 100b, 200b, 300b der mehreren Flugzeugsitzvorrichtungen 100b, 200b, 300b, 500b, 600b, 700b angeordnet. Die drei voneinander unterschiedlich ausgebildeten, in der ersten inneren Sitzspalte 38b angeordneten Flugzeugsitzvorrichtungen 100b, 200b, 300b der mehreren Flugzeugsitzvorrichtungen 100b, 200b, 300b, 500b, 600b, 700b sind in Flugrichtung 24b unmittelbar aufeinander folgend angeordnet. In dem Flugzeugkabinenabschnitt 26b sind in der ersten inneren Sitzspalte 38b die erste Flugzeugsitzvorrichtung 100b, die zweite Flugzeugsitzvorrichtung 200b und die dritte Flugzeugsitzvorrichtung 300b unmittelbar hintereinander angeordnet. In dem Flugzeugkabinenabschnitt 26b in der ersten inneren Sitzspalte 38b ist die erste Flugzeugsitzvorrichtung 100b in Flugrichtung 24b betrachtet unmittelbar hinter der zweiten Flugzeugsitzvorrichtung 200b angeordnet. In dem Flugzeugkabinenabschnitt 26b in der ersten inneren Sitzspalte 38b ist die zweite Flugzeugsitzvorrichtung 200b in Flugrichtung 24b betrachtet unmittelbar hinter der dritten Flugzeugsitzvorrichtung 300b angeordnet. Grundsätzlich kann die dritte Flugzeugsitzvorrichtung 300b in dem Flugzeugkabinenabschnitt 26b in der ersten inneren Sitzspalte 38b in Flugrichtung 24b betrachtet unmittelbar hinter der ersten Flugzeugsitzvorrichtung 100b angeordnet sein.

In dem Flugzeugkabinenabschnitt 26b ist in der zweiten inneren Sitzspalte 40b die Sitzrichtung 510b der fünften Flugzeugsitzvorrichtung 500b der mehreren Flugzeugsitzvorrichtungen 100b, 200b, 300b, 500b, 600b, 700b zumindest im Wesentlichen parallel zu der Flugzeugkabinenmittelachse 16b ausgerichtet. Der fünfte Flugzeugsitz 520b der fünften Flugzeugsitzvorrichtung 500b der in dem Flugzeugkabinenabschnitt 26b in der zweiten inneren Sitzspalte 40b angeordneten Flugzeugsitzvorrichtungen 500b, 600b, 700b ist gangseitig angeordnet. In dem Flugzeugkabinenabschnitt 26b ist in der zweiten inneren Sitzspalte 40b die Sitzrichtung 610b der sechsten Flugzeugsitzvorrichtung 600b der mehreren Flugzeugsitzvorrichtungen 100b, 200b, 300b, 500b, 600b, 700b in einem Winkel von mindestens 18 Grad abgewinkelt zu der Flugzeugkabinenmittelachse 16b angeordnet. Im vorliegenden Fall ist in dem Flugzeugkabinenabschnitt 26b in der zweiten inneren Sitzspalte 40b die Sitzrichtung 610b der sechsten Flugzeugsitzvorrichtung 600b der mehreren Flugzeugsitzvorrichtungen 100b, 200b, 300b, 500b, 600b, 700b in einem Winkel von 30 Grad abgewinkelt zu der Flugzeugkabinenmittelachse 16b angeordnet. In dem Flugzeugkabinenabschnitt 26b ist in der zweiten inneren Sitzspalte 40b die Sitzrichtung 610b der sechsten Flugzeugsitzvorrichtung 600b der mehreren Flugzeugsitzvorrichtungen 100b, 200b, 300b, 500b, 600b, 700b von dem unmittelbar angrenzenden zweiten Flugzeugkabinengang 34b weggerichtet. Der sechste Flugzeugsitz 620b der sechsten Flugzeugsitzvorrichtung 600b der in dem Flugzeugkabinenabschnitt 26b in der zweiten inneren Sitzspalte 40b angeordneten Flugzeugsitzvorrichtungen 500b, 600b, 700b ist gangseitig angeordnet. In dem Flugzeugkabinenabschnitt 26b ist in der zweiten inneren Sitzspalte 40b die Sitzrichtung 710b der siebten Flugzeugsitzvorrichtung 700b der mehreren Flugzeugsitzvorrichtungen 100b, 200b, 300b, 500b, 600b, 700b zumindest im Wesentlichen parallel zu der Flugzeugkabinenmittelachse 16b ausgerichtet. Der siebte Flugzeugsitz 720b der siebten Flugzeugsitzvorrichtung 700b der in der zweiten inneren Sitzspalte 40b angeordneten Flugzeugsitzvorrichtungen 500b, 600b, 700b ist gangabgewandt angeordnet. Die fünfte Flugzeugsitzvorrichtung 500b und die siebte Flugzeugsitzvorrichtung 700b sind durch die sechste Flugzeugsitzvorrichtung 600b voneinander beabstandet. In dem Flugzeugkabinenabschnitt 26b weisen in der zweiten inneren Sitzspalte 40b die fünfte Flugzeugsitzvorrichtung 500b und die sechste Flugzeugsitzvorrichtung 600b je einen Flugzeugsitz 520b, 620b auf, der gangseitig angeordnet ist, und die siebte Flugzeugsitzvorrichtung 700b, die in der Flugrichtung 24b betrachtet unmittelbar hinter oder vor den zwei Flugzeugsitzvorrichtungen 500b, 600b angeordnet ist, den Flugzeugsitz 720b auf, der gangabgewandt angeordnet ist. Die Flugzeugsitze 520b, 720b der Flugzeugsitzvorrichtungen 500b, 700b, deren Sitzrichtungen 510b, 710b zumindest im Wesentlichen parallel zu der Flugzeugkabinenmittelachse 16b angeordnet sind, weisen unterschiedliche Abstände zu dem zweiten Flugzeugkabinengang 34b auf. In dem Flugzeugkabinenabschnitt 26b sind in der zweiten inneren Sitzspalte 40b drei Flugzeugsitzvorrichtungen der mehreren Flugzeugsitzvorrichtungen 100b, 200b, 300b, 500b, 600b, 700b, nämlich die fünfte Flugzeugsitzvorrichtung 500b, die sechste Flugzeugsitzvorrichtung 600b und die siebte Flugzeugsitzvorrichtung 700b, angeordnet, wobei die Sitzrichtungen 510b, 710b der fünften Flugzeugsitzvorrichtung 500b und der siebten Flugzeugsitzvorrichtung 700b zumindest im Wesentlich parallel zu der Flugzeugkabinenmittelachse 16b angeordnet sind und die Sitzrichtung 610b der sechsten Flugzeugsitzvorrichtung 600b abgewinkelt zu der Flugzeugkabinenmittelachse 16b angeordnet ist. In dem Flugzeugkabinenabschnitt 26b sind in der zweiten inneren Sitzspalte 40b die drei Flugzeugsitzvorrichtungen der mehreren Flugzeugsitzvorrichtungen 100b, 200b, 300b, 500b, 600b, 700b, nämlich die fünfte Flugzeugsitzvorrichtung 500b, die sechste Flugzeugsitzvorrichtung 600b und die siebte Flugzeugsitzvorrichtung 700b, unmittelbar hintereinander angeordnet, wobei die Sitzrichtungen 510b, 710b der fünften Flugzeugsitzvorrichtung 500b und der siebten Flugzeugsitzvorrichtung 700b zumindest im Wesentlich parallel zu der Flugzeugkabinenmittelachse 16b angeordnet sind und die Sitzrichtung 610b der sechsten Flugzeugsitzvorrichtung 600b abgewinkelt zu der Flugzeugkabinenmittelachse 16b angeordnet ist. In dem Flugzeugkabinenabschnitt 26b sind in der zweiten inneren Sitzspalte 40b drei Flugzeugsitzvorrichtungen der mehreren Flugzeugsitzvorrichtungen 100b, 200b, 300b, 500b, 600b, 700b, nämlich eine der weiteren siebten Flugzeugsitzvorrichtungen 700'b, die fünfte Flugzeugsitzvorrichtung 500b und die sechste Flugzeugsitzvorrichtung 600b, angeordnet, wobei Sitzrichtungen der fünften Flugzeugsitzvorrichtung 500b zumindest im Wesentlichen parallel zu der Flugzeugkabinenmittelachse 16b angeordnet sind und die Sitzrichtung 610b der sechsten Flugzeugsitzvorrichtung 600b abgewinkelt zu der Flugzeugkabinenmittelachse 16b angeordnet ist. In dem Flugzeugkabinenabschnitt 26b sind in der zweiten inneren Sitzspalte 40b die drei Flugzeugsitzvorrichtungen der mehreren Flugzeugsitzvorrichtungen 100b, 200b, 300b, 500b, 600b, 700b, nämlich eine der weiteren siebten Flugzeugsitzvorrichtungen 700'b, die fünfte Flugzeugsitzvorrichtung 500b und die sechste Flugzeugsitzvorrichtung 600b, unmittelbar hintereinander angeordnet, wobei die Sitzrichtungen der fünften Flugzeugsitzvorrichtung 500b und der weiteren siebten Flugzeugsitzvorrichtung 700'b zumindest im Wesentlichen parallel zu der Flugzeugkabinenmittelachse 16b angeordnet sind und die Sitzrichtung der sechsten Flugzeugsitzvorrichtung 600b abgewinkelt zu der Flugzeugkabinenmittelachse 16b angeordnet ist. In dem Flugzeugkabinenabschnitt 26b sind in der zweiten inneren Sitzspalte 40b drei voneinander unterschiedlich ausgebildete, unmittelbar hintereinander angeordnete Flugzeugsitzvorrichtungen 500b, 600b, 700b der mehreren Flugzeugsitzvorrichtungen 100b, 200b, 300b, 500b, 600b, 700b angeordnet. Die drei voneinander unterschiedlich ausgebildeten, in der zweiten inneren Sitzspalte 40b angeordneten Flugzeugsitzvorrichtungen 500b, 600b, 700b der mehreren Flugzeugsitzvorrichtungen 100b, 200b, 300b, 500b, 600b, 700b sind in Flugrichtung 24b unmittelbar aufeinander folgend angeordnet. In dem Flugzeugkabinenabschnitt 26b sind in der zweiten inneren Sitzspalte 40b die fünfte Flugzeugsitzvorrichtung 500b, die sechste Flugzeugsitzvorrichtung 600b und die siebte Flugzeugsitzvorrichtung 700b unmittelbar hintereinander angeordnet. In dem Flugzeugkabinenabschnitt 26b in der zweiten inneren Sitzspalte 40b ist die fünfte Flugzeugsitzvorrichtung 500b in Flugrichtung 24b betrachtet unmittelbar hinter der sechsten Flugzeugsitzvorrichtung 600b angeordnet. In dem Flugzeugkabinenabschnitt 26b in der zweiten inneren Sitzspalte 40b ist die sechste Flugzeugsitzvorrichtung 600b in Flugrichtung 24b betrachtet unmittelbar hinter der siebten Flugzeugsitzvorrichtung 700b angeordnet. Grundsätzlich kann die siebte Flugzeugsitzvorrichtung 700b in dem Flugzeugkabinenabschnitt 26b in der zweiten inneren Sitzspalte 40b in Flugrichtung 24b betrachtet unmittelbar hinter der fünften Flugzeugsitzvorrichtung 500b angeordnet sein.

In dem Flugzeugkabinenabschnitt 26b sind in der ersten äußeren Sitzspalte 36b drei voneinander unterschiedlich ausgebildete, unmittelbar hintereinander angeordnete Flugzeugsitzvorrichtungen 500'b, 600'b, 700'b der mehreren weiteren Flugzeugsitzvorrichtungen 100'b, 200'b, 300'b, 500'b, 600'b, 700'b angeordnet. Die drei voneinander unterschiedlich ausgebildeten, in der ersten äußeren Sitzspalte 36b angeordneten Flugzeugsitzvorrichtungen 500'b, 600'b, 700'b der mehreren weiteren Flugzeugsitzvorrichtungen 100'b, 200'b, 300'b, 500'b, 600'b, 700'b sind in Flugrichtung 24b unmittelbar aufeinander folgend angeordnet. Im vorliegenden Fall ist in der zweiten äußeren Sitzspalte 42b in Flugrichtung 24b betrachtet vor einer weiteren zweiten Flugzeugsitzvorrichtung 200'b eine weitere dritte Flugzeugsitzvorrichtung 300'b angeordnet, wobei in der zweiten äußeren Sitzspalte 42b in Flugrichtung 24b betrachtet hinter der weiteren zweiten Flugzeugsitzvorrichtung 200'b drei zusätzliche weitere zweite Flugzeugsitzvorrichtungen 200'b angeordnet sind.

In dem Flugzeugkabinenabschnitt 26b sind in der zweiten äußeren Sitzspalte 42b drei voneinander unterschiedlich ausgebildete, unmittelbar hintereinander angeordnete Flugzeugsitzvorrichtungen 100'b, 200'b, 300'b der mehreren weiteren Flugzeugsitzvorrichtungen 100'b, 200'b, 300'b, 500'b, 600'b, 700'b angeordnet. Die drei voneinander unterschiedlich ausgebildeten, in der zweiten äußeren Sitzspalte 42b angeordneten Flugzeugsitzvorrichtungen 100'b, 200'b, 300'b der mehreren Flugzeugsitzvorrichtungen 100'b, 200'b, 300'b, 500'b, 600'b, 700'b sind in Flugrichtung 24b unmittelbar aufeinander folgend angeordnet. Im vorliegenden Fall ist in der ersten äußeren Sitzspalte 36b in Flugrichtung 24b betrachtet vor einer weiteren sechsten Flugzeugsitzvorrichtung 600'b eine weitere siebte Flugzeugsitzvorrichtung 700'b angeordnet, wobei in der ersten äußeren Sitzspalte 36b in Flugrichtung 24b betrachtet hinter der weiteren sechsten Flugzeugsitzvorrichtung 600'b drei zusätzliche weitere sechste Flugzeugsitzvorrichtungen 600'b angeordnet sind.

Grundsätzlich sind die vorhergehenden Beschreibungen der ersten inneren Sitzspalte 38b auch für die zweite äußere Sitzspalte 42b gültig. Grundsätzlich sind die vorhergehenden Beschreibungen der zweiten inneren Sitzspalte 40b auch für die erste äußere Sitzspalte 36b gültig.

In dem Flugzeugkabinenabschnitt 26b bilden zwei Flugzeugsitzvorrichtungen der mehreren Flugzeugsitzvorrichtungen 100b, 200b, 300b, 500b, 600b, 700b, nämlich die dritte Flugzeugsitzvorrichtung 300b und die siebte Flugzeugsitzvorrichtung 700b, in zwei unmittelbar nebeneinander angeordneten Sitzspalten, nämlich der ersten inneren Sitzspalte 38b und der zweiten inneren Sitzspalte 40b, ein Sitzpaar 46b aus, wobei die Sitzrichtungen 310b, 710b der zwei Flugzeugsitzvorrichtungen 300b, 700b zumindest im Wesentlichen parallel zu der Flugzeugkabinenmittelachse 16b angeordnet sind und die Flugzeugsitze 320b, 720b der zwei Flugzeugsitzvorrichtungen 300b, 700b gangabgewandt angeordnet sind, wobei in den zwei unmittelbar nebeneinander angeordneten Sitzspalten 38b, 40b zumindest zwei der Sitzpaare 46b angeordnet sind.

Die Flugzeugsitzanordnung 14b weist eine erste Sitzgruppierung 52b von drei in dem Flugzeugkabinenabschnitt 26b in der ersten inneren Sitzspalte 38b unmittelbar hintereinander angeordneten Flugzeugsitzvorrichtungen, nämlich der ersten Flugzeugsitzvorrichtung 100b, der zweiten Flugzeugsitzvorrichtung 200b und der dritten Flugzeugsitzvorrichtung 300b, auf, die jeweils unterschiedliche Sitzrichtungen 110b, 210b, 310b aufweisen und deren Flugzeugsitze 120b, 220b, 320b gangseitig oder gangabgewandt angeordnet sind. Die Sitzrichtungen 110b, 210b, 310b der unmittelbar hintereinander angeordneten Flugzeugsitzvorrichtungen 100b, 200b, 300b sind innerhalb der ersten Sitzgruppierung 52b abwechselnd zumindest im Wesentlichen parallel und abgewinkelt zu der Flugzeugkabinenmittelachse 16b angeordnet. Die erste Sitzgruppierung 52b bildet eine periodisch wiederholbare Abfolge aus. Dabei können mehrere identische erste Sitzgruppierungen 52b entlang einer Flugzeuglängsachse unmittelbar hintereinander angeordnet werden. In Flugrichtung 24b betrachtet ist hinter der ersten Flugzeugsitzvorrichtung 100b, deren Sitzrichtung 110b zumindest im Wesentlichen parallel zu der Flugzeugkabinenmittelachse 16b angeordnet ist, eine Flugzeugsitzvorrichtung angeordnet, deren Sitzrichtung zumindest im Wesentlichen parallel zu der Flugzeugkabinenmittelachse 16b angeordnet ist. In Flugrichtung 24b betrachtet ist vor der ersten Flugzeugsitzvorrichtung 100b, deren Sitzrichtung 110b zumindest im Wesentlichen parallel zu der Flugzeugkabinenmittelachse 16b angeordnet ist, eine Flugzeugsitzvorrichtung angeordnet, deren Sitzrichtung abgewinkelt zu der Flugzeugkabinenmittelachse 16a angeordnet ist. In Flugrichtung 24b betrachtet ist vor und hinter der zweiten Flugzeugsitzvorrichtung 200b, deren Sitzrichtung 210b abgewinkelt zu der Flugzeugkabinenmittelachse 16b angeordnet ist, jeweils eine Flugzeugsitzvorrichtung angeordnet, deren Sitzrichtung zumindest im Wesentlichen parallel zu der Flugzeugkabinenmittelachse 16b angeordnet ist. In Flugrichtung 24b betrachtet ist hinter der dritten Flugzeugsitzvorrichtung 300b, deren Sitzrichtung 310b zumindest im Wesentlichen parallel zu der Flugzeugkabinenmittelachse 16b angeordnet ist, eine Flugzeugsitzvorrichtung angeordnet, deren Sitzrichtung abgewinkelt zu der Flugzeugkabinenmittelachse 16b angeordnet ist. In Flugrichtung 24b betrachtet ist vor der dritten Flugzeugsitzvorrichtung 300b, deren Sitzrichtung 310b zumindest im Wesentlichen parallel zu der Flugzeugkabinenmittelachse 16b angeordnet ist, eine Flugzeugsitzvorrichtung angeordnet, deren Sitzrichtung zumindest im Wesentlichen parallel zu der Flugzeugkabinenmittelachse 16b angeordnet ist.

Die Flugzeugsitzanordnung 14b weist eine zweite Sitzgruppierung 54b von drei in dem Flugzeugkabinenabschnitt 26b in der zweiten inneren Sitzspalte 40b unmittelbar hintereinander angeordneten Flugzeugsitzvorrichtungen, nämlich der fünften Flugzeugsitzvorrichtung 500b, der sechsten Flugzeugsitzvorrichtung 600b und der siebten Flugzeugsitzvorrichtung 700b, auf, die jeweils unterschiedliche Sitzrichtungen 510b, 610b, 710b aufweisen und deren Flugzeugsitze 520b, 620b, 720b gangseitig oder gangabgewandt angeordnet sind. Die Sitzrichtungen 510b, 610b, 710b der unmittelbar hintereinander angeordneten Flugzeugsitzvorrichtungen 500b, 600b, 700b sind innerhalb der zweiten Sitzgruppierung 54b abwechselnd zumindest im Wesentlichen parallel und abgewinkelt zu der Flugzeugkabinenmittelachse 16b angeordnet. Die zweite Sitzgruppierung 54b bildet eine periodisch wiederholbare Abfolge aus. Dabei können mehrere identische zweite Sitzgruppierungen 54b entlang der Flugzeugkabinenmittelachse 16b unmittelbar hintereinander angeordnet werden. In Flugrichtung 24b betrachtet ist hinter der fünften Flugzeugsitzvorrichtung 500b, deren Sitzrichtung 510b zumindest im Wesentlichen parallel zu der Flugzeugkabinenmittelachse 16b angeordnet ist, eine Flugzeugsitzvorrichtung angeordnet, deren Sitzrichtung zumindest im Wesentlichen parallel zu der Flugzeugkabinenmittelachse 16b angeordnet ist. In Flugrichtung 24b betrachtet ist vor der fünften Flugzeugsitzvorrichtung 500b, deren Sitzrichtung 510b zumindest im Wesentlichen parallel zu der Flugzeugkabinenmittelachse 16b angeordnet ist, eine Flugzeugsitzvorrichtung angeordnet, deren Sitzrichtung abgewinkelt zu der Flugzeugkabinenmittelachse 16b angeordnet ist. In Flugrichtung 24b betrachtet ist vor und hinter der sechsten Flugzeugsitzvorrichtung 600b, deren Sitzrichtung 610b abgewinkelt zu der Flugzeugkabinenmittelachse 16b angeordnet ist, jeweils eine Flugzeugsitzvorrichtung angeordnet, deren Sitzrichtung zumindest im Wesentlichen parallel zu der Flugzeugkabinenmittelachse 16b angeordnet ist. In Flugrichtung 24b betrachtet ist hinter der siebten Flugzeugsitzvorrichtung 700b, deren Sitzrichtung 710b zumindest im Wesentlichen parallel zu der Flugzeugkabinenmittelachse 16b angeordnet ist, eine Flugzeugsitzvorrichtung angeordnet, deren Sitzrichtung abgewinkelt zu der Flugzeugkabinenmittelachse 16b angeordnet ist. In Flugrichtung 24b betrachtet ist vor der siebten Flugzeugsitzvorrichtung 700b, deren Sitzrichtung 710b zumindest im Wesentlichen parallel zu der Flugzeugkabinenmittelachse 16b angeordnet ist, eine Flugzeugsitzvorrichtung angeordnet, deren Sitzrichtung zumindest im Wesentlichen parallel zu der Flugzeugkabinenmittelachse 16b angeordnet ist.

Die erste Flugzeugsitzvorrichtung 100b, die zweite Flugzeugsitzvorrichtung 200b und die dritte Flugzeugsitzvorrichtung 300b in dem Flugzeugkabinenabschnitt 26b unterscheiden sich in zumindest einer Komfortkategorie, wobei die Flugzeugsitzvorrichtungen 100b, 200b, 300b für die zumindest eine Komfortkategorie jeweils einen zueinander unterschiedlichen Wert aufweisen, der durch eine unterschiedliche Anordnung der Flugzeugsitze 120b, 220b, 320b und durch die zumindest teilweise unterschiedliche Ausbildung der Flugzeugsitzvorrichtungen 100b, 200b, 300b bedingt ist. Die fünfte Flugzeugsitzvorrichtung 500b, die sechste Flugzeugsitzvorrichtung 600b und die siebte Flugzeugsitzvorrichtung 700b in dem Flugzeugkabinenabschnitt 26b unterscheiden sich in zumindest einer Komfortkategorie, wobei die Flugzeugsitzvorrichtungen 500b, 600b, 700b für die zumindest eine Komfortkategorie jeweils einen zueinander unterschiedlichen Wert aufweisen, der durch eine unterschiedliche Anordnung der Flugzeugsitze 520b, 620b, 720b und durch die zumindest teilweise unterschiedliche Ausbildung der Flugzeugsitzvorrichtungen 500b, 600b, 700b bedingt ist. Die zumindest eine Komfortkategorie beschreibt einen Livingspace.

In der ersten inneren Sitzspalte 38b ist eine der weiteren zweiten Flugzeugsitzvorrichtungen 200'b in einer entgegen der Flugrichtung 24b betrachtet ersten Sitzreihe des Flugzeugkabinenabschnitts 26b angeordnet. In Flugrichtung 24b betrachtet kann unmittelbar hinter der in der ersten Sitzreihe des Flugzeugkabinenabschnitts 26b angeordneten weiteren zweiten Flugzeugsitzvorrichtung 200'b in dem Mittelbereich 44b ein weiteres Flugzeugkabinenmodul angeordnet sein. Das weitere Flugzeugkabinenmodul kann hierbei insbesondere als ein Front-Row-Monument ausgebildet sein. Dadurch kann in der ersten Sitzreihe verglichen mit der zweiten Flugzeugsitzvorrichtung 200b ein höherer Komfort erreicht werden, da in der ersten Sitzreihe mehr Platz zur Verfügung steht. Die in der ersten Sitzreihe in dem Flugzeugkabinenabschnitt 26b angeordnete weitere zweite Flugzeugsitzvorrichtung 200'b kann sich grundsätzlich in zumindest einer Komfortkategorie von zumindest einer Flugzeugsitzvorrichtung der mehreren Flugzeugsitzvorrichtungen 100b, 200b, 300b, 500b, 600b, 700b unterscheiden.

In der zweiten inneren Sitzspalte 40b ist eine der weiteren sechsten Flugzeugsitzvorrichtungen 600'b in der entgegen der Flugrichtung 24b betrachtet ersten Sitzreihe des Flugzeugkabinenabschnitts 26b angeordnet. In Flugrichtung 24b betrachtet kann unmittelbar hinter der in der ersten Sitzreihe des Flugzeugkabinenabschnitts 26b angeordneten weiteren sechsten Flugzeugsitzvorrichtung 600'b in dem Mittelbereich 44b ein weiteres Flugzeugkabinenmodul angeordnet sein. Die in der ersten Sitzreihe in dem Flugzeugkabinenabschnitt 26b angeordnete weitere sechste Flugzeugsitzvorrichtung 600'b kann sich grundsätzlich in zumindest einer Komfortkategorie von zumindest einer Flugzeugsitzvorrichtung der mehreren Flugzeugsitzvorrichtungen 100b, 200b, 300b, 500b, 600b, 700b unterscheiden.

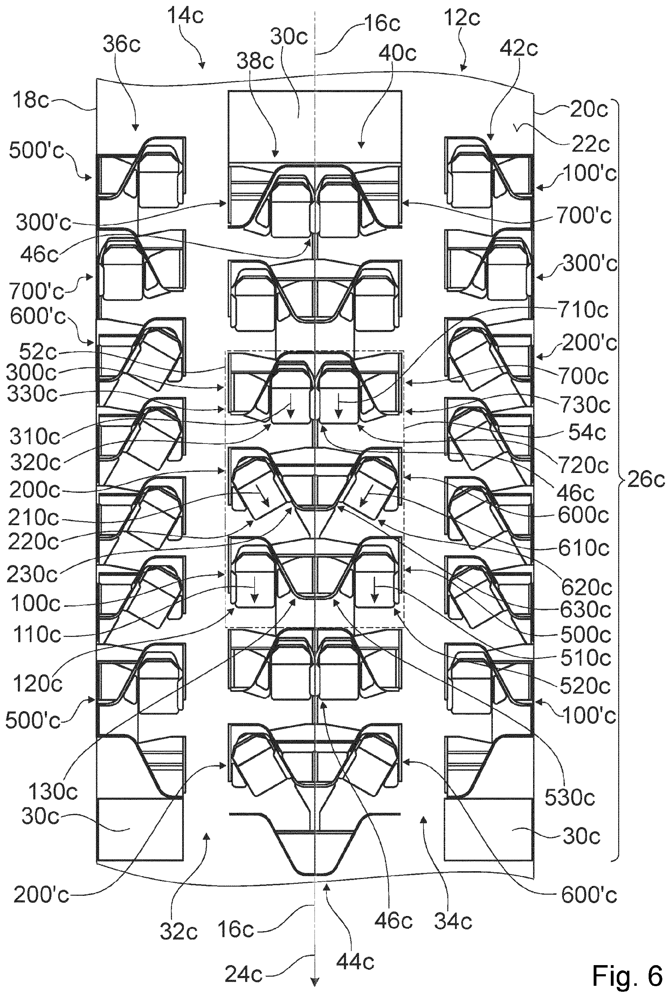

Die Figur 6 zeigt eine nicht beanspruchte Flugzeugsitzanordnung 14c in einem dritten Ausführungsbeispiel. Die Flugzeugsitzanordnung 14c ist zur Verwendung in einer teilweise dargestellten Flugzeugkabine 12c eines Flugzeugs vorgesehen. Die Flugzeugkabine 12c weist eine Flugzeugkabinenmittelachse 16c auf. Die Flugzeugkabinenmittelachse 16c ist als eine Flugzeuglängsachse ausgebildet. Die Flugzeugkabine 12c weist zwei sich gegenüberliegende Flugzeugkabinenaußenwände 18c, 20c auf. Die Flugzeugkabine 12c weist einen Flugzeugkabinenboden 22c auf. Das Flugzeug weist in zumindest einem Betriebszustand eine Flugrichtung 24c auf. Die Flugzeugkabine 12c weist entlang der Flugzeugkabinenmittelachse 16c einen Flugzeugkabinenabschnitt 26c auf. Der Flugzeugkabinenabschnitt 26c ist im vorliegenden Fall durch mehrere schematisch dargestellte Flugzeugkabinenmodule 30c entlang der Flugzeugkabinenmittelachse 16c begrenzt. Die Flugzeugkabine 12c weist in dem Flugzeugkabinenabschnitt 26c einen ersten Flugzeugkabinengang 32c und einen zweiten Flugzeugkabinengang 34c auf. Die Flugzeugsitzanordnung 14c umfasst eine erste äußere Sitzspalte 36c. Die Flugzeugsitzanordnung 14c umfasst eine erste innere Sitzspalte 38c. Die Flugzeugsitzanordnung 14c umfasst eine zweite innere Sitzspalte 40c. Die Flugzeugsitzanordnung 14c umfasst eine zweite äußere Sitzspalte 42c. Die Flugzeugkabine 12c weist einen Mittelbereich 44c auf.

Die Flugzeugsitzanordnung 14c umfasst mehrere in dem Flugzeugkabinenabschnitt 26c angeordnete Flugzeugsitzvorrichtungen 100c, 200c, 300c, 500c, 600c, 700c. Die mehreren Flugzeugsitzvorrichtungen 100c, 200c, 300c, 500c, 600c, 700c sind unterschiedlich voneinander ausgebildet. In dem Flugzeugkabinenabschnitt 26c sind im vorliegenden Fall sechs unterschiedlich voneinander ausgebildete Flugzeugsitzvorrichtungen 100c, 200c, 300c, 500c, 600c, 700c angeordnet. Die Flugzeugsitzvorrichtungen 100c, 200c, 300c, 500c, 600c, 700c weisen jeweils einen Flugzeugsitz auf. Die Flugzeugsitzvorrichtungen 100c, 200c, 300c, 500c, 600c, 700c weisen jeweils eine Konsole auf. Die Flugzeugsitzanordnung 14c umfasst eine erste Flugzeugsitzvorrichtung 100c der mehreren Flugzeugsitzvorrichtungen 100c, 200c, 300c, 500c, 600c, 700c. Die erste Flugzeugsitzvorrichtung 100c weist eine Sitzrichtung 110c auf. Die erste Flugzeugsitzvorrichtung 100c weist einen ersten Flugzeugsitz 120c auf. Die erste Flugzeugsitzvorrichtung 100c weist eine erste Konsole 130c auf. Die Flugzeugsitzanordnung 14c umfasst eine zweite Flugzeugsitzvorrichtung 200c der mehreren Flugzeugsitzvorrichtungen 100c, 200c, 300c, 500c, 600c, 700c. Die zweite Flugzeugsitzvorrichtung 200c weist eine Sitzrichtung 210c auf. Die zweite Flugzeugsitzvorrichtung 200c weist einen zweiten Flugzeugsitz 220c auf. Die zweite Flugzeugsitzvorrichtung 200c weist eine zweite Konsole 230c auf. Die Flugzeugsitzanordnung 14c umfasst eine dritte Flugzeugsitzvorrichtung 300c der mehreren Flugzeugsitzvorrichtungen 100c, 200c, 300c, 500c, 600c, 700c. Die dritte Flugzeugsitzvorrichtung 300c weist eine Sitzrichtung 310c auf. Die dritte Flugzeugsitzvorrichtung 300c weist einen dritten Flugzeugsitz 320c auf. Die dritte Flugzeugsitzvorrichtung 300c weist eine dritte Konsole 330c auf. Die Flugzeugsitzanordnung 14c umfasst eine fünfte Flugzeugsitzvorrichtung 500c der mehreren Flugzeugsitzvorrichtungen 100c, 200c, 300c, 500c, 600c, 700c. Die fünfte Flugzeugsitzvorrichtung 500c weist eine Sitzrichtung 510c auf. Die fünfte Flugzeugsitzvorrichtung 500c weist einen fünften Flugzeugsitz 520c auf. Die fünfte Flugzeugsitzvorrichtung 500c weist eine fünfte Konsole 530c auf. Die Flugzeugsitzanordnung 14c umfasst eine sechste Flugzeugsitzvorrichtung 600c der mehreren Flugzeugsitzvorrichtungen 100c, 200c, 300c, 500c, 600c, 700c. Die sechste Flugzeugsitzvorrichtung 600c weist eine Sitzrichtung 610c auf. Die sechste Flugzeugsitzvorrichtung 600c weist einen sechsten Flugzeugsitz 620c auf. Die sechste Flugzeugsitzvorrichtung 600c weist eine sechste Konsole 630c auf. Die Flugzeugsitzanordnung 14c umfasst eine siebte Flugzeugsitzvorrichtung 700c der mehreren Flugzeugsitzvorrichtungen 100c, 200c, 300c, 500c, 600c, 700c. Die siebte Flugzeugsitzvorrichtung 700c weist eine Sitzrichtung 710c auf. Die siebte Flugzeugsitzvorrichtung 700c weist einen siebten Flugzeugsitz 720c auf. Die siebte Flugzeugsitzvorrichtung 700c weist eine siebte Konsole 730c auf. Die Flugzeugsitzanordnung 14c umfasst mehrere weitere erste Flugzeugsitzvorrichtungen 100'c, die zumindest im Wesentlichen identisch zu der ersten Flugzeugsitzvorrichtung 100c ausgebildet sind. Die Flugzeugsitzanordnung 14c umfasst mehrere weitere zweite Flugzeugsitzvorrichtungen 200'c, die zumindest im Wesentlichen identisch zu der zweiten Flugzeugsitzvorrichtung 200c ausgebildet sind. Die Flugzeugsitzanordnung 14c umfasst mehrere weitere dritte Flugzeugsitzvorrichtungen 300'c, die zumindest im Wesentlichen identisch zu der dritten Flugzeugsitzvorrichtung 300c ausgebildet sind. Die Flugzeugsitzanordnung 14c umfasst mehrere weitere fünfte Flugzeugsitzvorrichtungen 500'c, die zumindest im Wesentlichen identisch zu der fünften Flugzeugsitzvorrichtung 500c ausgebildet sind. Die Flugzeugsitzanordnung 14c umfasst mehrere weitere sechste Flugzeugsitzvorrichtungen 600'c, die zumindest im Wesentlichen identisch zu der sechsten Flugzeugsitzvorrichtung 600c ausgebildet sind. Die Flugzeugsitzanordnung 14c umfasst mehrere weitere siebte Flugzeugsitzvorrichtungen 700'c, die zumindest im Wesentlichen identisch zu der siebten Flugzeugsitzvorrichtung 700c ausgebildet sind.

In dem Flugzeugkabinenabschnitt 26c bilden zwei Flugzeugsitzvorrichtungen der mehreren Flugzeugsitzvorrichtungen 100c, 200c, 300c, 500c, 600c, 700c, nämlich die dritte Flugzeugsitzvorrichtung 300c und die siebte Flugzeugsitzvorrichtung 700c, in zwei unmittelbar nebeneinander angeordneten Sitzspalten, nämlich der ersten inneren Sitzspalte 38c und der zweiten inneren Sitzspalte 40c, ein Sitzpaar 46c aus, wobei die Sitzrichtungen 310c, 710c der zwei Flugzeugsitzvorrichtungen 300c, 700c zumindest im Wesentlichen parallel zu der Flugzeugkabinenmittelachse 16c angeordnet sind und die Flugzeugsitze 320c, 720c der zwei Flugzeugsitzvorrichtungen 300c, 700c gangabgewandt angeordnet sind, wobei in den zwei unmittelbar nebeneinander angeordneten Sitzspalten 38c, 40c zumindest zwei der Sitzpaare 46c angeordnet sind. Die Flugzeugsitzanordnung 14c weist eine erste Sitzgruppierung 52c von drei in dem Flugzeugkabinenabschnitt 26c in der ersten inneren Sitzspalte 38c unmittelbar hintereinander angeordneten Flugzeugsitzvorrichtungen, nämlich der ersten Flugzeugsitzvorrichtung 100c, der zweiten Flugzeugsitzvorrichtung 200c und der dritten Flugzeugsitzvorrichtung 300c, auf, die jeweils unterschiedliche Sitzrichtungen 110c, 210c, 310c aufweisen und deren Flugzeugsitze 120c, 220c, 320c gangseitig oder gangabgewandt angeordnet sind. Die Flugzeugsitzanordnung 14c weist eine zweite Sitzgruppierung 54c von drei in dem Flugzeugkabinenabschnitt 26c in der zweiten inneren Sitzspalte 40c unmittelbar hintereinander angeordneten Flugzeugsitzvorrichtungen, nämlich der fünften Flugzeugsitzvorrichtung 500c, der sechsten Flugzeugsitzvorrichtung 600c und der siebten Flugzeugsitzvorrichtung 700c, auf, die jeweils unterschiedliche Sitzrichtungen 510c, 610c, 710c aufweisen und deren Flugzeugsitze 520c, 620c, 720c gangseitig oder gangabgewandt angeordnet sind.

Die erste Flugzeugsitzvorrichtung 100c, die zweite Flugzeugsitzvorrichtung 200c und die dritte Flugzeugsitzvorrichtung 300c in dem Flugzeugkabinenabschnitt 26c unterscheiden sich in zumindest einer Komfortkategorie, wobei die Flugzeugsitzvorrichtungen 100c, 200c, 300c für die zumindest eine Komfortkategorie jeweils einen zueinander unterschiedlichen Wert aufweisen, der durch eine unterschiedliche Anordnung der Flugzeugsitze 120c, 220c, 320c und durch die zumindest teilweise unterschiedliche Ausbildung der Flugzeugsitzvorrichtungen 100c, 200c, 300c bedingt ist. Die fünfte Flugzeugsitzvorrichtung 500c, die sechste Flugzeugsitzvorrichtung 600c und die siebte Flugzeugsitzvorrichtung 700c in dem Flugzeugkabinenabschnitt 26c unterscheiden sich in zumindest einer Komfortkategorie, wobei die Flugzeugsitzvorrichtungen 500c, 600c, 700c für die zumindest eine Komfortkategorie jeweils einen zueinander unterschiedlichen Wert aufweisen, der durch eine unterschiedliche Anordnung der Flugzeugsitze 520c, 620c, 720c und durch die zumindest teilweise unterschiedliche Ausbildung der Flugzeugsitzvorrichtungen 500c, 600c, 700c bedingt ist.

Im Unterschied zu dem zweiten Ausführungsbeispiel sind in Flugrichtung 24c betrachtet in der ersten inneren Sitzspalte 38c eine weitere der dritten Flugzeugsitzvorrichtungen 300'c und in der zweiten inneren Sitzspalte 40c eine weitere der siebten Flugzeugsitzvorrichtungen 700'c in einer entgegen der Flugrichtung 24c betrachtet letzten Sitzreihe in dem Mittelbereich 44c des Flugzeugkabinenabschnitts 26c angeordnet. In der ersten inneren Sitzspalte 38c sind in Flugrichtung 24c betrachtet unmittelbar hinter der weiteren dritten Flugzeugsitzvorrichtung 300'c zwei Flugzeugsitzvorrichtungen angeordnet, deren Sitzrichtungen zumindest im Wesentlichen parallel zu der Flugzeugkabinenmittelachse 16c angeordnet sind. In der zweiten inneren Sitzspalte 40c sind in Flugrichtung 24c betrachtet unmittelbar hinter der weiteren siebten Flugzeugsitzvorrichtung 700'c zwei Flugzeugsitzvorrichtungen angeordnet, deren Sitzrichtungen zumindest im Wesentlichen parallel zu der Flugzeugkabinenmittelachse 16c angeordnet sind.

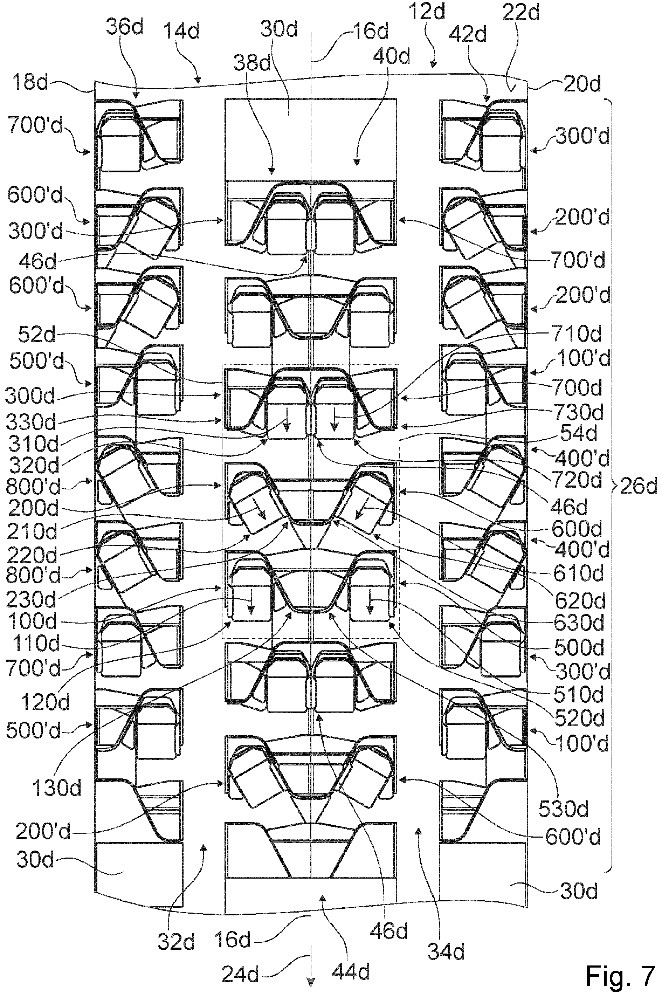

Die Figur 7 zeigt eine nicht beanspruchte Flugzeugsitzanordnung 14d in einem vierten Ausführungsbeispiel.

Die Flugzeugsitzanordnung 14d ist zur Verwendung in einer teilweise dargestellten Flugzeugkabine 12d eines Flugzeugs vorgesehen. Die Flugzeugkabine 12d weist eine Flugzeugkabinenmittelachse 16d auf. Die Flugzeugkabinenmittelachse 16d ist als eine Flugzeuglängsachse ausgebildet. Die Flugzeugkabine 12d weist zwei sich gegenüberliegende Flugzeugkabinenaußenwände 18d, 20d auf. Die Flugzeugkabine 12d weist einen Flugzeugkabinenboden 22d auf. Das Flugzeug weist in zumindest einem Betriebszustand eine Flugrichtung 24d auf. Die Flugzeugkabine 12d weist entlang der Flugzeugkabinenmittelachse 16d einen Flugzeugkabinenabschnitt 26d auf. Der Flugzeugkabinenabschnitt 26d ist im vorliegenden Fall durch mehrere schematisch dargestellte Flugzeugkabinenmodule 30d entlang der Flugzeugkabinenmittelachse 16d begrenzt. Die Flugzeugkabine 12d weist in dem Flugzeugkabinenabschnitt 26d einen ersten Flugzeugkabinengang 32d und einen zweiten Flugzeugkabinengang 34d auf. Die Flugzeugsitzanordnung 14d umfasst eine erste äußere Sitzspalte 36d. Die Flugzeugsitzanordnung 14d umfasst eine erste innere Sitzspalte 38d. Die Flugzeugsitzanordnung 14d umfasst eine zweite innere Sitzspalte 40d. Die Flugzeugsitzanordnung 14d umfasst eine zweite äußere Sitzspalte 42d. Die Flugzeugkabine 12d weist einen Mittelbereich 44d auf.

Die Flugzeugsitzanordnung 14d umfasst mehrere in dem Flugzeugkabinenabschnitt 26d angeordnete Flugzeugsitzvorrichtungen 100d, 200d, 300d, 500d, 600d, 700d. Die mehreren Flugzeugsitzvorrichtungen 100d, 200d, 300d, 500d, 600d, 700d sind unterschiedlich voneinander ausgebildet. In dem Flugzeugkabinenabschnitt 26d sind im vorliegenden Fall sechs unterschiedlich voneinander ausgebildete Flugzeugsitzvorrichtungen 100d, 200d, 300d, 500d, 600d, 700d angeordnet. Die Flugzeugsitzvorrichtungen 100d, 200d, 300d, 500d, 600d, 700d weisen jeweils einen Flugzeugsitz auf. Die Flugzeugsitzvorrichtungen 100d, 200d, 300d, 500d, 600d, 700d weisen jeweils eine Konsole auf. Die Flugzeugsitzanordnung 14d umfasst eine erste Flugzeugsitzvorrichtung 100d der mehreren Flugzeugsitzvorrichtungen 100d, 200d, 300d, 500d, 600d, 700d. Die erste Flugzeugsitzvorrichtung 100d weist eine Sitzrichtung 110d auf. Die erste Flugzeugsitzvorrichtung 100d weist einen ersten Flugzeugsitz 120d auf. Die erste Flugzeugsitzvorrichtung 100d weist eine erste Konsole 130d auf. Die Flugzeugsitzanordnung 14d umfasst eine zweite Flugzeugsitzvorrichtung 200d der mehreren Flugzeugsitzvorrichtungen 100d, 200d, 300d, 500d, 600d, 700d. Die zweite Flugzeugsitzvorrichtung 200d weist eine Sitzrichtung 210d auf. Die zweite Flugzeugsitzvorrichtung 200d weist einen zweiten Flugzeugsitz 220d auf. Die zweite Flugzeugsitzvorrichtung 200d weist eine zweite Konsole 230d auf. Die Flugzeugsitzanordnung 14d umfasst eine dritte Flugzeugsitzvorrichtung 300d der mehreren Flugzeugsitzvorrichtungen 100d, 200d, 300d, 500d, 600d, 700d. Die dritte Flugzeugsitzvorrichtung 300d weist eine Sitzrichtung 310d auf. Die dritte Flugzeugsitzvorrichtung 300d weist einen dritten Flugzeugsitz 320d auf. Die dritte Flugzeugsitzvorrichtung 300d weist eine dritte Konsole 330d auf. Die Flugzeugsitzanordnung 14d umfasst eine fünfte Flugzeugsitzvorrichtung 500d der mehreren Flugzeugsitzvorrichtungen 100d, 200d, 300d, 500d, 600d, 700d. Die fünfte Flugzeugsitzvorrichtung 500d weist eine Sitzrichtung 510d auf. Die fünfte Flugzeugsitzvorrichtung 500d weist einen fünften Flugzeugsitz 520d auf. Die fünfte Flugzeugsitzvorrichtung 500d weist eine fünfte Konsole 530d auf. Die Flugzeugsitzanordnung 14d umfasst eine sechste Flugzeugsitzvorrichtung 600d der mehreren Flugzeugsitzvorrichtungen 100d, 200d, 300d, 500d, 600d, 700d. Die sechste Flugzeugsitzvorrichtung 600d weist eine Sitzrichtung 610d auf. Die sechste Flugzeugsitzvorrichtung 600d weist einen sechsten Flugzeugsitz 620d auf. Die sechste Flugzeugsitzvorrichtung 600d weist eine sechste Konsole 630d auf. Die Flugzeugsitzanordnung 14d umfasst eine siebte Flugzeugsitzvorrichtung 700d der mehreren Flugzeugsitzvorrichtungen 100d, 200d, 300d, 500d, 600d, 700d. Die siebte Flugzeugsitzvorrichtung 700d weist eine Sitzrichtung 710d auf. Die siebte Flugzeugsitzvorrichtung 700d weist einen siebten Flugzeugsitz 720d auf. Die siebte Flugzeugsitzvorrichtung 700d weist eine siebte Konsole 730d auf. Die Flugzeugsitzanordnung 14d umfasst mehrere weitere erste Flugzeugsitzvorrichtungen 100'd, die zumindest im Wesentlichen identisch zu der ersten Flugzeugsitzvorrichtung 100d ausgebildet sind. Die Flugzeugsitzanordnung 14d umfasst mehrere weitere zweite Flugzeugsitzvorrichtungen 200'd, die zumindest im Wesentlichen identisch zu der zweiten Flugzeugsitzvorrichtung 200d ausgebildet sind. Die Flugzeugsitzanordnung 14d umfasst mehrere weitere dritte Flugzeugsitzvorrichtungen 300'd, die zumindest im Wesentlichen identisch zu der dritten Flugzeugsitzvorrichtung 300d ausgebildet sind. Die Flugzeugsitzanordnung 14d umfasst mehrere weitere vierte Flugzeugsitzvorrichtungen 400'd, die zumindest im Wesentlichen identisch zu der vierten Flugzeugsitzvorrichtung 400a aus dem ersten Ausführungsbeispiel ausgebildet sind. Die Flugzeugsitzanordnung 14d umfasst mehrere weitere fünfte Flugzeugsitzvorrichtungen 500'd, die zumindest im Wesentlichen identisch zu der fünften Flugzeugsitzvorrichtung 500d ausgebildet sind. Die Flugzeugsitzanordnung 14d umfasst mehrere weitere sechste Flugzeugsitzvorrichtungen 600'd, die zumindest im Wesentlichen identisch zu der sechsten Flugzeugsitzvorrichtung 600d ausgebildet sind. Die Flugzeugsitzanordnung 14d umfasst mehrere weitere siebte Flugzeugsitzvorrichtungen 700'd, die zumindest im Wesentlichen identisch zu der siebten Flugzeugsitzvorrichtung 700d ausgebildet sind. Die Flugzeugsitzanordnung 14d umfasst mehrere weitere achte Flugzeugsitzvorrichtungen 800'd, die zumindest im Wesentlichen identisch zu der achten Flugzeugsitzvorrichtung 800a aus dem ersten Ausführungsbeispiel ausgebildet sind.

In dem Flugzeugkabinenabschnitt 26d bilden zwei Flugzeugsitzvorrichtungen der mehreren Flugzeugsitzvorrichtungen 100d, 200d, 300d, 500d, 600d, 700d, nämlich die dritte Flugzeugsitzvorrichtung 300d und die siebte Flugzeugsitzvorrichtung 700d, in zwei unmittelbar nebeneinander angeordneten Sitzspalten, nämlich der ersten inneren Sitzspalte 38d und der zweiten inneren Sitzspalte 40d, ein Sitzpaar 46d aus, wobei die Sitzrichtungen 310d, 710d der zwei Flugzeugsitzvorrichtungen 300d, 700d zumindest im Wesentlichen parallel zu der Flugzeugkabinenmittelachse 16d angeordnet sind und die Flugzeugsitze 320d, 720d der zwei Flugzeugsitzvorrichtungen 300d, 700d gangabgewandt angeordnet sind, wobei in den zwei unmittelbar nebeneinander angeordneten Sitzspalten 38d, 40d zumindest zwei der Sitzpaare 46d angeordnet sind. Die Flugzeugsitzanordnung 14d weist eine erste Sitzgruppierung 52d von drei in dem Flugzeugkabinenabschnitt 26d in der ersten inneren Sitzspalte 38d unmittelbar hintereinander angeordneten Flugzeugsitzvorrichtungen, nämlich der ersten Flugzeugsitzvorrichtung 100d, der zweiten Flugzeugsitzvorrichtung 200d und der dritten Flugzeugsitzvorrichtung 300d, auf, die jeweils unterschiedliche Sitzrichtungen 110d, 210d, 310d aufweisen und deren Flugzeugsitze 120d, 220d, 320d gangseitig oder gangabgewandt angeordnet sind. Die Flugzeugsitzanordnung 14d weist eine zweite Sitzgruppierung 54d von drei in dem Flugzeugkabinenabschnitt 26d in der zweiten inneren Sitzspalte 40d unmittelbar hintereinander angeordneten Flugzeugsitzvorrichtungen, nämlich der fünften Flugzeugsitzvorrichtung 500d, der sechsten Flugzeugsitzvorrichtung 600d und der siebten Flugzeugsitzvorrichtung 700d, auf, die jeweils unterschiedliche Sitzrichtungen 510d, 610d, 710d aufweisen und deren Flugzeugsitze 520d, 620d, 720d gangseitig oder gangabgewandt angeordnet sind.

Die erste Flugzeugsitzvorrichtung 100d, die zweite Flugzeugsitzvorrichtung 200d und die dritte Flugzeugsitzvorrichtung 300d in dem Flugzeugkabinenabschnitt 26d unterscheiden sich in zumindest einer Komfortkategorie, wobei die Flugzeugsitzvorrichtungen 100d, 200d, 300d für die zumindest eine Komfortkategorie jeweils einen zueinander unterschiedlichen Wert aufweisen, der durch eine unterschiedliche Anordnung der Flugzeugsitze 120d, 220d, 320d und durch die zumindest teilweise unterschiedliche Ausbildung der Flugzeugsitzvorrichtungen 100d, 200d, 300d bedingt ist. Die fünfte Flugzeugsitzvorrichtung 500d, die sechste Flugzeugsitzvorrichtung 600d und die siebte Flugzeugsitzvorrichtung 700d in dem Flugzeugkabinenabschnitt 26d unterscheiden sich in zumindest einer Komfortkategorie, wobei die Flugzeugsitzvorrichtungen 500d, 600d, 700d für die zumindest eine Komfortkategorie jeweils einen zueinander unterschiedlichen Wert aufweisen, der durch eine unterschiedliche Anordnung der Flugzeugsitze 520d, 620d, 720d und durch die zumindest teilweise unterschiedliche Ausbildung der Flugzeugsitzvorrichtungen 500d, 600d, 700d bedingt ist.

Im Unterschied zu dem dritten Ausführungsbeispiel sind in dem Flugzeugkabinenabschnitt 26d in der ersten äußeren Sitzspalte 36d vier voneinander unterschiedlich ausgebildete Flugzeugsitzvorrichtungen 500'd, 600'd, 700'd, 800'd der mehreren weiteren Flugzeugsitzvorrichtungen 100'd, 200'd, 300'd, 400'd, 500'd, 600'd, 700'd, 800'd angeordnet. In der ersten äußeren Sitzspalte 36d sind eine weitere fünfte Flugzeugsitzvorrichtung 500'd, eine weitere siebte Flugzeugsitzvorrichtung 700'd und eine weitere achte Flugzeugsitzvorrichtung 800'd unmittelbar hintereinander angeordnet. In der ersten äußeren Sitzspalte 36d sind eine weitere achte Flugzeugsitzvorrichtung 800'd, eine weitere fünfte Flugzeugsitzvorrichtung 500'd und eine weitere sechste Flugzeugsitzvorrichtung 600'd unmittelbar hintereinander angeordnet. Zwischen einer weiteren siebten Flugzeugsitzvorrichtung 700'd und einer weiteren fünften Flugzeugsitzvorrichtung 500'd sind in der ersten äußeren Sitzspalte 36d zwei weitere achte Flugzeugsitzvorrichtungen 800'd angeordnet. Zwischen der weiteren fünften Flugzeugsitzvorrichtung 500'd und einer weiteren siebten Flugzeugsitzvorrichtung 700'd sind in der ersten äußeren Sitzspalte 36d zwei weitere sechste Flugzeugsitzvorrichtungen 600'd angeordnet.

Im Unterschied zu dem dritten Ausführungsbeispiel sind in dem Flugzeugkabinenabschnitt 26d in der zweiten äußeren Sitzspalte 42d vier voneinander unterschiedlich ausgebildete Flugzeugsitzvorrichtungen 100'd, 200'd, 300'd, 400'd der mehreren weiteren Flugzeugsitzvorrichtungen 100'd, 200'd, 300'd, 400'd, 500'd, 600'd, 700'd, 800'd angeordnet. In der zweiten äußeren Sitzspalte 42d sind eine weitere erste Flugzeugsitzvorrichtung 100'd, eine weitere dritte Flugzeugsitzvorrichtung 300'd und eine weitere vierte Flugzeugsitzvorrichtung 400'd unmittelbar hintereinander angeordnet. In der zweiten äußeren Sitzspalte 42d sind eine weitere vierte Flugzeugsitzvorrichtung 400'd, eine weitere erste Flugzeugsitzvorrichtung 100'd und eine weitere zweite Flugzeugsitzvorrichtung 200'd unmittelbar hintereinander angeordnet. Zwischen einer weiteren dritten Flugzeugsitzvorrichtung 300'd und einer weiteren ersten Flugzeugsitzvorrichtung 100'd sind in der zweiten äußeren Sitzspalte 42d zwei weitere vierte Flugzeugsitzvorrichtungen 400'd angeordnet. Zwischen der weiteren ersten Flugzeugsitzvorrichtung 100'd und einer weiteren dritten Flugzeugsitzvorrichtung 300'd sind in der zweiten äußeren Sitzspalte 42d zwei weitere zweite Flugzeugsitzvorrichtungen 200'd angeordnet.

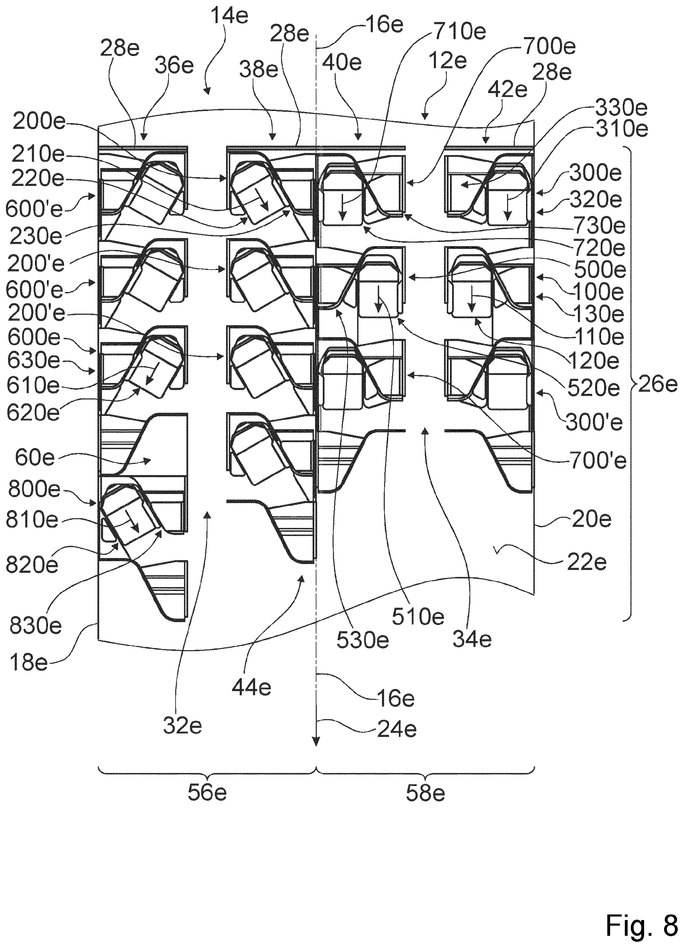

Die Figur 8 zeigt eine Flugzeugsitzanordnung 14e in einem fünften Ausführungsbeispiel. Die Flugzeugsitzanordnung 14e ist zur Verwendung in einer teilweise dargestellten Flugzeugkabine 12e eines Flugzeugs vorgesehen. Die Flugzeugkabine 12e weist eine Flugzeugkabinenmittelachse 16e auf. Die Flugzeugkabinenmittelachse 16e ist als eine Flugzeuglängsachse ausgebildet. Die Flugzeugkabine 12e weist zwei sich gegenüberliegende Flugzeugkabinenaußenwände 18e, 20e auf. Das Flugzeug weist in zumindest einem Betriebszustand eine Flugrichtung 24e auf. Die Flugzeugkabine 12e weist entlang der Flugzeugkabinenmittelachse 16e einen Flugzeugkabinenabschnitt 26e auf. Der Flugzeugkabinenabschnitt 26e ist im vorliegenden Fall durch mehrere Trennelemente 28e entlang der Flugzeugkabinenmittelachse 16e begrenzt. Die Flugzeugkabine 12e weist in dem Flugzeugkabinenabschnitt 26d einen ersten Flugzeugkabinengang 32e und einen zweiten Flugzeugkabinengang 34e auf. Die Flugzeugsitzanordnung 14e umfasst eine erste äußere Sitzspalte 36e. Die Flugzeugsitzanordnung 14e umfasst eine erste innere Sitzspalte 38e. Die Flugzeugsitzanordnung 14e umfasst eine zweite innere Sitzspalte 40e. Die Flugzeugsitzanordnung 14e umfasst eine zweite äußere Sitzspalte 42e. Die Flugzeugkabine 12e weist einen Mittelbereich 44e auf. Die Flugzeugkabine 12e umfasst eine erste Flugzeugkabinenseite 56e und eine zweite Flugzeugkabinenseite 58e.

Die Flugzeugsitzanordnung 14e umfasst mehrere in dem Flugzeugkabinenabschnitt 26e angeordnete Flugzeugsitzvorrichtungen 100e, 200e, 300e, 500e, 600e, 700e, 800e. Die mehreren Flugzeugsitzvorrichtungen 100e, 200e, 300e, 500e, 600e, 700e, 800e sind unterschiedlich voneinander ausgebildet. In dem Flugzeugkabinenabschnitt 26e sind im vorliegenden Fall sieben unterschiedlich voneinander ausgebildete Flugzeugsitzvorrichtungen 100e, 200e, 300e, 500e, 600e, 700e, 800e angeordnet. Die Flugzeugsitzvorrichtungen 100e, 200e, 300e, 500e, 600e, 700e, 800e weisen jeweils einen Flugzeugsitz auf. Die Flugzeugsitzvorrichtungen 100e, 200e, 300e, 500e, 600e, 700e, 800e weisen jeweils eine Konsole auf. Die Flugzeugsitzanordnung 14e umfasst eine erste Flugzeugsitzvorrichtung 100e der mehreren Flugzeugsitzvorrichtungen 100e, 200e, 300e, 500e, 600e, 700e, 800e. Die erste Flugzeugsitzvorrichtung 100e weist eine Sitzrichtung 110e auf. Die erste Flugzeugsitzvorrichtung 100e weist einen ersten Flugzeugsitz 120e auf. Die erste Flugzeugsitzvorrichtung 100e weist eine erste Konsole 130e auf. Die Flugzeugsitzanordnung 14e umfasst eine zweite Flugzeugsitzvorrichtung 200e der mehreren Flugzeugsitzvorrichtungen 100e, 200e, 300e, 500e, 600e, 700e, 800e. Die zweite Flugzeugsitzvorrichtung 200e weist eine Sitzrichtung 210e auf. Die zweite Flugzeugsitzvorrichtung 200e weist einen zweiten Flugzeugsitz 220e auf. Die zweite Flugzeugsitzvorrichtung 200e weist eine zweite Konsole 230e auf. Die Flugzeugsitzanordnung 14e umfasst eine dritte Flugzeugsitzvorrichtung 300e der mehreren Flugzeugsitzvorrichtungen 100e, 200e, 300e, 500e, 600e, 700e, 800e. Die dritte Flugzeugsitzvorrichtung 300e weist eine Sitzrichtung 310e auf. Die dritte Flugzeugsitzvorrichtung 300e weist einen dritten Flugzeugsitz 320e auf. Die dritte Flugzeugsitzvorrichtung 300e weist eine dritte Konsole 330e auf. Die Flugzeugsitzanordnung 14e umfasst eine fünfte Flugzeugsitzvorrichtung 500e der mehreren Flugzeugsitzvorrichtungen 100e, 200e, 300e, 500e, 600e, 700e, 800e. Die fünfte Flugzeugsitzvorrichtung 500e weist eine Sitzrichtung 510e auf. Die fünfte Flugzeugsitzvorrichtung 500e weist einen fünften Flugzeugsitz 520e auf. Die fünfte Flugzeugsitzvorrichtung 500e weist eine fünfte Konsole 530e auf. Die Flugzeugsitzanordnung 14e umfasst eine sechste Flugzeugsitzvorrichtung 600e der mehreren Flugzeugsitzvorrichtungen 100e, 200e, 300e, 500e, 600e, 700e, 800e. Die sechste Flugzeugsitzvorrichtung 600e weist eine Sitzrichtung 610e auf. Die sechste Flugzeugsitzvorrichtung 600e weist einen sechsten Flugzeugsitz 620e auf. Die sechste Flugzeugsitzvorrichtung 600e weist eine sechste Konsole 630e auf. Die Flugzeugsitzanordnung 14e umfasst eine siebte Flugzeugsitzvorrichtung 700e der mehreren Flugzeugsitzvorrichtungen 100e, 200e, 300e, 500e, 600e, 700e, 800e. Die siebte Flugzeugsitzvorrichtung 700e weist eine Sitzrichtung 710e auf. Die siebte Flugzeugsitzvorrichtung 700e weist einen siebten Flugzeugsitz 720e auf. Die siebte Flugzeugsitzvorrichtung 700e weist eine siebte Konsole 730e auf. Die Flugzeugsitzanordnung 14e umfasst eine achte Flugzeugsitzvorrichtung 800e der mehreren Flugzeugsitzvorrichtungen 100e, 200e, 300e, 500e, 600e, 700e, 800e. Die achte Flugzeugsitzvorrichtung 800e weist eine Sitzrichtung 810e auf. Die achte Flugzeugsitzvorrichtung 800e weist einen achten Flugzeugsitz 820e auf. Die achte Flugzeugsitzvorrichtung 800e weist eine achte Konsole 830e auf. Die Flugzeugsitzanordnung 14e kann mehrere weitere erste Flugzeugsitzvorrichtungen umfassen, die zumindest im Wesentlichen identisch zu der ersten Flugzeugsitzvorrichtung 100e ausgebildet sind. Die Flugzeugsitzanordnung 14e umfasst mehrere weitere zweite Flugzeugsitzvorrichtungen 200'e, die zumindest im Wesentlichen identisch zu der zweiten Flugzeugsitzvorrichtung 200e ausgebildet sind. Die Flugzeugsitzanordnung 14e umfasst zumindest eine weitere dritte Flugzeugsitzvorrichtung 300'e, die zumindest im Wesentlichen identisch zu der dritten Flugzeugsitzvorrichtung 300e ausgebildet ist. Die Flugzeugsitzanordnung 14e kann mehrere weitere fünfte Flugzeugsitzvorrichtungen umfassen, die zumindest im Wesentlichen identisch zu der fünften Flugzeugsitzvorrichtung 500e ausgebildet sind. Die Flugzeugsitzanordnung 14e umfasst mehrere weitere sechste Flugzeugsitzvorrichtungen 600'e, die zumindest im Wesentlichen identisch zu der sechsten Flugzeugsitzvorrichtung 600e ausgebildet sind. Die Flugzeugsitzanordnung 14e umfasst zumindest eine weitere siebte Flugzeugsitzvorrichtung 700'e, die zumindest im Wesentlichen identisch zu der siebten Flugzeugsitzvorrichtung 700e ausgebildet ist. Die Flugzeugsitzanordnung 14e kann mehrere weitere achte Flugzeugsitzvorrichtungen umfassen, die zumindest im Wesentlichen identisch zu der achten Flugzeugsitzvorrichtung 800e ausgebildet sind.

Im Unterschied zu dem ersten Ausführungsbeispiel ist eine Anordnung von Flugzeugsitzvorrichtungen 200e, 600e, 800e der mehreren Flugzeugsitzvorrichtungen 100e, 200e, 300e, 500e, 600e, 700e, 800e in dem Flugzeugkabinenabschnitt 26e in der ersten äußeren Sitzspalte 36e und der ersten inneren Sitzspalte 38e auf der ersten Flugzeugkabinenseite 56e asymmetrisch zu einer Anordnung von Flugzeugsitzvorrichtungen 100e, 300e, 500e, 700e der mehreren Flugzeugsitzvorrichtungen 100e, 200e, 300e, 500e, 600e, 700e, 800e in der zweiten inneren Sitzspalte 38e und der zweiten äußeren Sitzspalte 42e auf der zweiten Flugzeugkabinenseite 58e ausgebildet. Die erste Flugzeugkabinenseite 56e ist durch eine gedachte Flugzeugkabinenmittelebene, die senkrecht zu einem Flugzeugkabinenboden 22e der Flugzeugkabine 12e entlang der Flugzeugkabinenmittelachse 16e ausgerichtet ist, von der zweiten Flugzeugkabinenseite 58e getrennt. Eine Anordnung von Flugzeugsitzvorrichtungen 200e, 200'e der mehreren Flugzeugsitzvorrichtungen 100e, 200e, 300e, 500e, 600e, 700e, 800e in der ersten inneren Sitzspalte 38e auf der ersten Flugzeugkabinenseite 56e ist, auf die Flugzeugkabinenmittelachse 16e bezogen, asymmetrisch zu einer Anordnung von Flugzeugsitzvorrichtungen 500e, 700e, 700'e der mehreren Flugzeugsitzvorrichtungen 100e, 200e, 300e, 500e, 600e, 700e, 800e in der zweiten inneren Sitzspalte 38e auf der zweiten Flugzeugkabinenseite 58e ausgebildet. Eine Anordnung von Flugzeugsitzvorrichtungen 500e, 700e, 700'e der mehreren Flugzeugsitzvorrichtungen 100e, 200e, 300e, 500e, 600e, 700e, 800e in der zweiten inneren Sitzspalte 40e auf der zweiten Flugzeugkabinenseite 58e ist symmetrisch zu einer Anordnung von Flugzeugsitzvorrichtungen 100e, 300e, 300'e der mehreren Flugzeugsitzvorrichtungen 100e, 200e, 300e, 500e, 600e, 700e, 800e in der zweiten äußeren Sitzspalte 42e auf der zweiten Flugzeugkabinenseite 58e ausgebildet.

Die erste Flugzeugkabinenseite 56e und die zweite Flugzeugkabinenseite 58e weisen jeweils genau einen der Flugzeugkabinengänge 32e, 34e auf. Der erste Flugzeugkabinengang 32e ist auf der ersten Flugzeugkabinenseite 56e angeordnet. Der zweite Flugzeugkabinengang 34e ist auf der zweiten Flugzeugkabinenseite 58e angeordnet. Grundsätzlich ist es denkbar, dass die Flugzeugkabine 12e in dem Flugzeugkabinenabschnitt 26e zumindest eine Trennwand entlang der Flugzeugkabinenmittelachse 16e aufweist, die die erste Flugzeugkabinenseite 56e von der zweiten Flugzeugkabinenseite 58e abtrennt. Dadurch kann eine Privatsphäre in einem Großraumflugzeug vorteilhaft erhöht werden.

In der ersten äußeren Sitzspalte 36e sind ausschließlich Flugzeugsitzvorrichtungen 600e, 800e der mehreren Flugzeugsitzvorrichtungen 100e, 200e, 300e, 500e, 600e, 700e, 800e angeordnet, deren Sitzrichtungen 610e, 810e abgewinkelt zu der Flugzeugkabinenmittelachse 16e angeordnet sind. In der ersten inneren Sitzspalte 38e sind ausschließlich Flugzeugsitzvorrichtungen 200e, 200'e der mehreren Flugzeugsitzvorrichtungen 100e, 200e, 300e, 500e, 600e, 700e, 800e angeordnet, deren Sitzrichtungen 210e abgewinkelt zu der Flugzeugkabinenmittelachse 16e angeordnet sind. In der ersten inneren Sitzspalte 38e sind ausschließlich Flugzeugsitzvorrichtungen 200e der mehreren Flugzeugsitzvorrichtungen 100e, 200e, 300e, 500e, 600e, 700e, 800e angeordnet, deren Flugzeugsitze 220e gangseitig angeordnet sind. Die erste äußere Sitzspalte 36e ist über den ersten Flugzeugkabinengang 32e teilweise gespiegelt zu der ersten inneren Sitzspalte 38e ausgebildet.

In der zweiten inneren Sitzspalte 40e sind ausschließlich Flugzeugsitzvorrichtungen 500e, 700e der mehreren Flugzeugsitzvorrichtungen 100e, 200e, 300e, 500e, 600e, 700e, 800e angeordnet, deren Sitzrichtungen 510e, 710e zumindest im Wesentlichen parallel zu der Flugzeugkabinenmittelachse 16e angeordnet sind. In der zweiten äußeren Sitzspalte 42e sind ausschließlich Flugzeugsitzvorrichtungen 100e, 300e der mehreren Flugzeugsitzvorrichtungen 100e, 200e, 300e, 500e, 600e, 700e, 800e angeordnet, deren Sitzrichtungen 110e, 310e zumindest im Wesentlichen parallel zu der Flugzeugkabinenmittelachse 16e angeordnet sind. In der zweiten inneren Sitzspalte 40e sind ausschließlich Flugzeugsitzvorrichtungen 500e, 700e der mehreren Flugzeugsitzvorrichtungen 100e, 200e, 300e, 500e, 600e, 700e, 800e angeordnet, deren Flugzeugsitze 220e, 520e abwechselnd gangseitig oder gangabgewandt angeordnet sind. In der zweiten äußeren Sitzspalte 42e sind ausschließlich Flugzeugsitzvorrichtungen 100e, 300e der mehreren Flugzeugsitzvorrichtungen 100e, 200e, 300e, 500e, 600e, 700e, 800e angeordnet, deren Flugzeugsitze 120e, 320e abwechselnd gangseitig oder gangabgewandt angeordnet sind. Die zweite äußere Sitzspalte 42e ist über den zweiten Flugzeugkabinengang 34e gespiegelt zu der zweiten inneren Sitzspalte 40e ausgebildet.

Die Flugzeugsitzanordnung 14e umfasst eine Zwischenraumeinheit 60e. Die Zwischenraumeinheit 60e ist in der ersten äußeren Sitzspalte 36e angeordnet. Die Zwischenraumeinheit 60e ist entlang einer Flugzeuglängsachse zwischen der sechsten Flugzeugsitzvorrichtung 600e und der achten Flugzeugsitzvorrichtung 800e angeordnet. Die Zwischenraumeinheit 60e ist dazu vorgesehen, einen zwischen zwei Flugzeugsitzvorrichtungen vorgesehenen und/oder entstandenen Freiraum funktional auszunutzen. Die Zwischenraumeinheit 60e kann als ein Verstauraum für beispielsweise Jacken, Mäntel, Decken und/oder Amenity Kits ausgebildet sein. Alternativ kann die Zwischenraumeinheit 60e als ein Verstauraum für Handgepäckstücke ausgebildet sein. Die Zwischenraumeinheit 60e kann grundsätzlich auch als eine Bar, als ein Warenautomat und/oder als ein Präsentationsraum für In-Flight-Shopping-Produkte ausgebildet sein. Des Weiteren kann die Zwischenraumeinheit 60e als ein Serverschrank ausgebildet sein, der elektronisch mit zumindest einem Teil der mehreren Flugzeugsitzvorrichtungen 100e, 200e, 300e, 500e, 600e, 700e, 800e in dem Flugzeugkabinenabschnitt 26e verbunden ist. Grundsätzlich kann die Zwischenraumeinheit 60e auch als eine Konsole oder als ein Kabinenmonument ausgebildet sein.

In dem Flugzeugkabinenabschnitt 26e unterscheiden sich die erste Flugzeugsitzvorrichtung 100e, die zweite Flugzeugsitzvorrichtung 200e, die dritte Flugzeugsitzvorrichtung 300e, die fünfte Flugzeugsitzvorrichtung 500e, die sechste Flugzeugsitzvorrichtung 600e, die siebte Flugzeugsitzvorrichtung 700e und die achte Flugzeugsitzvorrichtung 800e in zumindest einer Komfortkategorie, wobei die Flugzeugsitzvorrichtungen 100e, 200e, 300e, 500e, 600e, 700e, 800e für die zumindest eine Komfortkategorie jeweils einen zueinander unterschiedlichen Wert aufweisen, der durch eine unterschiedliche Anordnung der Flugzeugsitze 120e, 220e, 320e, 520e, 620e, 720e, 820e und durch die zumindest teilweise unterschiedliche Ausbildung der Flugzeugsitzvorrichtungen 100e, 200e, 300e, 500e, 600e, 700e, 800e bedingt ist.

Die in der Figur 8 dargestellte Flugzeugsitzanordnung 14e ist grundsätzlich durch weitere Flugzeugsitzvorrichtungen 100'e, 200'e, 300'e, 500'e, 600'e, 700'e, 800'e in Flugrichtung 24e betrachtet erweiterbar.

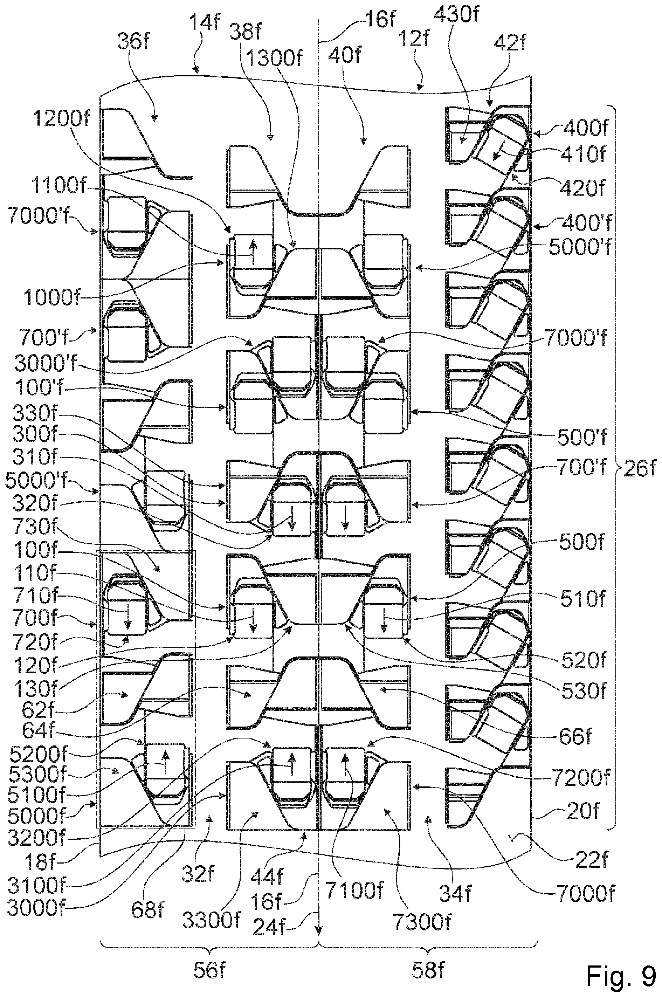

Die Figur 9 zeigt eine Flugzeugsitzanordnung 14f in einem sechsten Ausführungsbeispiel. Die Flugzeugsitzanordnung 14f ist zur Verwendung in einer teilweise dargestellten Flugzeugkabine 12f eines Flugzeugs vorgesehen. Die Flugzeugkabine 12f weist eine Flugzeugkabinenmittelachse 16f auf. Die Flugzeugkabinenmittelachse 16f ist als eine Flugzeuglängsachse ausgebildet. Die Flugzeugkabine 12f weist zwei sich gegenüberliegende Flugzeugkabinenaußenwände 18f, 20f auf. Das Flugzeug weist in zumindest einem Betriebszustand eine Flugrichtung 24f auf. Die Flugzeugkabine 12f weist entlang der Flugzeugkabinenmittelachse 16f einen Flugzeugkabinenabschnitt 26f auf. Die Flugzeugkabine 12f weist in dem Flugzeugkabinenabschnitt 26f einen ersten Flugzeugkabinengang 32f und einen zweiten Flugzeugkabinengang 34f auf. Die Flugzeugsitzanordnung 14f umfasst eine erste äußere Sitzspalte 36f. Die Flugzeugsitzanordnung 14f umfasst eine erste innere Sitzspalte 38f. Die Flugzeugsitzanordnung 14f umfasst eine zweite innere Sitzspalte 40f. Die Flugzeugsitzanordnung 14f umfasst eine zweite äußere Sitzspalte 42f. Die Flugzeugkabine 12f weist einen Mittelbereich 44f auf. Die Flugzeugkabine 12f umfasst eine erste Flugzeugkabinenseite 56f und eine zweite Flugzeugkabinenseite 58f.

Die Flugzeugsitzanordnung 14f umfasst mehrere in dem Flugzeugkabinenabschnitt 26f angeordnete Flugzeugsitzvorrichtungen 100f, 300f, 400f, 500f, 700f. Die mehreren Flugzeugsitzvorrichtungen 100f, 300f, 400f, 500f, 700f sind unterschiedlich voneinander ausgebildet. Die Flugzeugsitzvorrichtungen 100f, 300f, 400f, 500f, 700f weisen jeweils einen Flugzeugsitz auf. Die Flugzeugsitzvorrichtungen 100f, 300f, 400f, 500f, 700f weisen jeweils eine Konsole auf. Die Flugzeugsitzanordnung 14f umfasst eine erste Flugzeugsitzvorrichtung 100f der mehreren Flugzeugsitzvorrichtungen 100f, 300f, 400f, 500f, 700f. Die erste Flugzeugsitzvorrichtung 100f weist eine Sitzrichtung 110f auf. Die erste Flugzeugsitzvorrichtung 100f weist einen ersten Flugzeugsitz 120f auf. Die erste Flugzeugsitzvorrichtung 100f weist eine erste Konsole 130f auf. Die Flugzeugsitzanordnung 14f umfasst eine dritte Flugzeugsitzvorrichtung 300f der mehreren Flugzeugsitzvorrichtungen 100f, 300f, 400f, 500f, 700f. Die dritte Flugzeugsitzvorrichtung 300f weist eine Sitzrichtung 310f auf. Die dritte Flugzeugsitzvorrichtung 300f weist einen dritten Flugzeugsitz 320f auf. Die dritte Flugzeugsitzvorrichtung 300f weist eine dritte Konsole 330f auf. Die Flugzeugsitzanordnung 14f umfasst eine vierte Flugzeugsitzvorrichtung 400f der mehreren Flugzeugsitzvorrichtungen 100f, 300f, 400f, 500f, 700f. Die vierte Flugzeugsitzvorrichtung 400f weist eine Sitzrichtung 410f auf. Die vierte Flugzeugsitzvorrichtung 400f weist einen vierten Flugzeugsitz 420f auf. Die vierte Flugzeugsitzvorrichtung 400f weist eine vierte Konsole 430f auf. Die Flugzeugsitzanordnung 14f umfasst eine fünfte Flugzeugsitzvorrichtung 500f der mehreren Flugzeugsitzvorrichtungen 100f, 300f, 400f, 500f, 700f. Die fünfte Flugzeugsitzvorrichtung 500f weist eine Sitzrichtung 510f auf. Die fünfte Flugzeugsitzvorrichtung 500f weist einen fünften Flugzeugsitz 520f auf. Die fünfte Flugzeugsitzvorrichtung 500f weist eine fünfte Konsole 530f auf. Die Flugzeugsitzanordnung 14f umfasst eine siebte Flugzeugsitzvorrichtung 700f der mehreren Flugzeugsitzvorrichtungen 100f, 300f, 400f, 500f, 700f. Die siebte Flugzeugsitzvorrichtung 700f weist eine Sitzrichtung 710f auf. Die siebte Flugzeugsitzvorrichtung 700f weist einen siebten Flugzeugsitz 720f auf. Die siebte Flugzeugsitzvorrichtung 700f weist eine siebte Konsole 730f auf. Die Flugzeugsitzanordnung 14f umfasst zumindest eine weitere erste Flugzeugsitzvorrichtung 100'f, die zumindest im Wesentlichen identisch zu der ersten Flugzeugsitzvorrichtung 100f ausgebildet ist. Die Flugzeugsitzanordnung 14f kann mehrere weitere dritte Flugzeugsitzvorrichtungen umfassen, die zumindest im Wesentlichen identisch zu der dritten Flugzeugsitzvorrichtung 300f ausgebildet sind. Die Flugzeugsitzanordnung 14f umfasst mehrere weitere vierte Flugzeugsitzvorrichtungen 400'f, die zumindest im Wesentlichen identisch zu der vierten Flugzeugsitzvorrichtung 400f ausgebildet sind. Die Flugzeugsitzanordnung 14f umfasst zumindest eine weitere fünfte Flugzeugsitzvorrichtung 500'f, die zumindest im Wesentlichen identisch zu der fünften Flugzeugsitzvorrichtung 500f ausgebildet ist. Die Flugzeugsitzanordnung 14f umfasst mehrere weitere siebte Flugzeugsitzvorrichtungen 700'f, die zumindest im Wesentlichen identisch zu der siebten Flugzeugsitzvorrichtung 700f ausgebildet sind.

Im Unterschied zu dem fünften Ausführungsbeispiel umfasst die Flugzeugsitzanordnung 14f mehrere alternative Flugzeugsitzvorrichtungen 1000f, 3000f, 5000f, 7000f, die in dem Flugzeugkabinenabschnitt 26f angeordnet sind. Die Flugzeugsitzanordnung 14f umfasst eine alternative erste Flugzeugsitzvorrichtung 1000f. Die alternative erste Flugzeugsitzvorrichtung 1000f weist eine Sitzrichtung 1100f auf. Die Sitzrichtung 1100f der alternativen ersten Flugzeugsitzvorrichtung 1000f ist entgegen der Flugrichtung 24f ausgerichtet. Die Sitzrichtung 1100f der alternativen ersten Flugzeugsitzvorrichtung 1000f ist zumindest im Wesentlichen parallel zu der Flugzeugkabinenmittelachse 16f ausgerichtet. Die alternative erste Flugzeugsitzvorrichtung 1000f weist einen alternativen ersten Flugzeugsitz 1200f auf. Die alternative erste Flugzeugsitzvorrichtung 1000f weist eine alternative erste Konsole 1300f auf. Die alternative erste Flugzeugsitzvorrichtung 1000f ist um eine Achse gespiegelt zu der ersten Flugzeugsitzvorrichtung 100f ausgebildet, wobei die Achse senkrecht zu der Flugzeugkabinenmittelachse 16f und parallel zu einem Flugzeugkabinenboden 22f der Flugzeugkabine 12f ausgerichtet ist. Die Flugzeugsitzanordnung 14f kann zumindest eine weitere alternative erste Flugzeugsitzvorrichtung umfassen, die zumindest im Wesentlichen identisch zu der alternativen ersten Flugzeugsitzvorrichtung 1000f ausgebildet ist. Die Flugzeugsitzanordnung 14f umfasst eine alternative dritte Flugzeugsitzvorrichtung 3000f. Die alternative dritte Flugzeugsitzvorrichtung 3000f weist eine Sitzrichtung 3100f auf. Die Sitzrichtung 3100f der alternativen dritten Flugzeugsitzvorrichtung 3000f ist entgegen der Flugrichtung 24f ausgerichtet. Die Sitzrichtung 3100f der alternativen dritten Flugzeugsitzvorrichtung 3000f ist zumindest im Wesentlichen parallel zu der Flugzeugkabinenmittelachse 16f ausgerichtet. Die alternative dritte Flugzeugsitzvorrichtung 3000f weist einen alternativen dritten Flugzeugsitz 3200f auf. Die alternative dritte Flugzeugsitzvorrichtung 3000f weist eine alternative dritte Konsole 3300f auf. Die alternative dritte Flugzeugsitzvorrichtung 3000f ist um eine Achse gespiegelt zu der dritten Flugzeugsitzvorrichtung 300f ausgebildet, wobei die Achse senkrecht zu der Flugzeugkabinenmittelachse 16f und parallel zu dem Flugzeugkabinenboden 22f ausgerichtet ist. Die Flugzeugsitzanordnung 14f umfasst mehrere weitere alternative dritte Flugzeugsitzvorrichtungen 3000'f, die zumindest im Wesentlichen identisch zu der alternativen dritten Flugzeugsitzvorrichtung 3000f ausgebildet sind. Die Flugzeugsitzanordnung 14f umfasst eine alternative fünfte Flugzeugsitzvorrichtung 5000f. Die alternative fünfte Flugzeugsitzvorrichtung 5000f weist eine Sitzrichtung 5100f auf. Die Sitzrichtung 5100f der alternativen fünften Flugzeugsitzvorrichtung 5000f ist entgegen der Flugrichtung 24f ausgerichtet. Die Sitzrichtung 5100f der alternativen fünften Flugzeugsitzvorrichtung 5000f ist zumindest im Wesentlichen parallel zu der Flugzeugkabinenmittelachse 16f ausgerichtet. Die alternative fünfte Flugzeugsitzvorrichtung 5000f weist einen alternativen fünften Flugzeugsitz 5200f auf. Die alternative fünfte Flugzeugsitzvorrichtung 5000f weist eine alternative fünfte Konsole 5300f auf. Die alternative fünfte Flugzeugsitzvorrichtung 5000f ist um eine Achse gespiegelt zu der fünften Flugzeugsitzvorrichtung 500f ausgebildet, wobei die Achse senkrecht zu der Flugzeugkabinenmittelachse 16f und parallel zu dem Flugzeugkabinenboden 22f ausgerichtet ist. Die Flugzeugsitzanordnung 14f umfasst mehrere weitere alternative fünfte Flugzeugsitzvorrichtungen 5000'f, die zumindest im Wesentlichen identisch zu der alternativen fünften Flugzeugsitzvorrichtung 5000f ausgebildet sind. Die Flugzeugsitzanordnung 14f umfasst eine alternative siebte Flugzeugsitzvorrichtung 7000f. Die alternative siebte Flugzeugsitzvorrichtung 7000f weist eine Sitzrichtung 7100f auf. Die Sitzrichtung 7100f der alternativen siebten Flugzeugsitzvorrichtung 7000f ist entgegen der Flugrichtung 24f ausgerichtet. Die Sitzrichtung 7100f der alternativen siebten Flugzeugsitzvorrichtung 7000f ist zumindest im Wesentlichen parallel zu der Flugzeugkabinenmittelachse 16f ausgerichtet. Die alternative siebte Flugzeugsitzvorrichtung 7000f weist einen alternativen siebten Flugzeugsitz 7200f auf. Die alternative siebte Flugzeugsitzvorrichtung 7000f weist eine alternative siebte Konsole 7300f auf. Die alternative siebte Flugzeugsitzvorrichtung 7000f ist um eine Achse gespiegelt zu der siebten Flugzeugsitzvorrichtung 700f ausgebildet, wobei die Achse senkrecht zu der Flugzeugkabinenmittelachse 16f und parallel zu dem Flugzeugkabinenboden 22f ausgerichtet ist. Die Flugzeugsitzanordnung 14f umfasst mehrere weitere alternative siebte Flugzeugsitzvorrichtungen 7000'f, die zumindest im Wesentlichen identisch zu der alternativen siebten Flugzeugsitzvorrichtung 7000f ausgebildet sind. Im Unterschied zu den vorhergehenden Ausführungsbeispielen sind Sitzrichtungen 3100f, 5100f, 7100f eines Teils der mehreren Flugzeugsitzvorrichtungen 100f, 300f, 400f, 500f, 700f, 1000f, 3000f, 5000f, 7000f in dem Flugzeugkabinenabschnitt 26f zumindest im Wesentlichen entgegengesetzt zu der Flugrichtung 24f ausgerichtet. In dem Flugzeugkabinenabschnitt 26f sind im vorliegenden Fall neun unterschiedlich voneinander ausgebildete Flugzeugsitzvorrichtungen 100f, 300f, 400f, 500f, 700f ,1000f, 3000f, 5000f, 7000f angeordnet.

Eine Anordnung von Flugzeugsitzvorrichtungen 100f, 300f, 3000f, 700f, 7000f der mehreren Flugzeugsitzvorrichtungen 100f, 300f, 400f, 500f, 700f, 3000f, 5000f, 7000f in dem Flugzeugkabinenabschnitt 26f in der ersten äußeren Sitzspalte 36f und der ersten inneren Sitzspalte 38f auf der ersten Flugzeugkabinenseite 56f ist asymmetrisch zu einer Anordnung von Flugzeugsitzvorrichtungen 400f, 500f, 700f, 5000f, 7000f der mehreren Flugzeugsitzvorrichtungen 100f, 300f, 400f, 500f, 700f, 3000f, 5000f, 7000f in der zweiten inneren Sitzspalte 38f und der zweiten äußeren Sitzspalte 42f auf der zweiten Flugzeugkabinenseite 58f ausgebildet.

In der ersten äußeren Sitzspalte 36f sind ausschließlich Flugzeugsitzvorrichtungen 500f, 700f, 5000f, 7000f der mehreren Flugzeugsitzvorrichtungen 100f, 300f, 400f, 500f, 700f angeordnet, deren Sitzrichtungen 510f, 710f, 5100f, 7100f zumindest im Wesentlichen parallel zu der Flugzeugkabinenmittelachse 16f angeordnet sind. In der ersten äußeren Sitzspalte sind die Sitzrichtungen der siebten Flugzeugsitzvorrichtung 700f, der alternativen fünften Flugzeugsitzvorrichtung 5000f, einer der weiteren siebten Flugzeugsitzvorrichtungen 700'f, einer der weiteren alternativen fünften Flugzeugsitzvorrichtungen 5000'f und eine der weiteren alternativen siebten Flugzeugsitzvorrichtungen 7000'f entlang einer Flugzeuglängsachse abwechselnd in der Flugrichtung 24f und entgegengesetzt zu der Flugrichtung 24f ausgerichtet.

Die Flugzeugsitzanordnung 14f umfasst mehrere Zusatzkonsolen 62f, 64f, 66f. In den Zusatzkonsolen 62f, 64f, 66f sind jeweils zwei Fußräume für zwei unmittelbar benachbart zu den entsprechenden Zusatzkonsolen 62f, 64f, 66f angeordneten Flugzeugsitzvorrichtungen 1000f, 3000f, 500f, 7000f, 700f, 5000f angeordnet. Die Zusatzkonsole 62f ist in der ersten äußeren Sitzspalte 36f entlang einer Flugzeuglängsachse betrachtet zwischen der siebten Flugzeugsitzvorrichtung 700f und der alternativen fünften Flugzeugsitzvorrichtung 5000f angeordnet. Die Zusatzkonsole 62f beabstandet die siebte Flugzeugsitzvorrichtung 700f von der alternativen fünften Flugzeugsitzvorrichtung 5000f. Die Sitzrichtungen 710f, 5100f der durch die Zusatzkonsole 62f voneinander beabstandeten Flugzeugsitzvorrichtungen 700f, 5000f sind entgegengesetzt zueinander ausgerichtet.

Die siebte Flugzeugsitzvorrichtung 700f, die Zusatzkonsole 62f und die alternative fünfte Flugzeugsitzvorrichtung 5000f bilden in der ersten äußeren Sitzspalte 36f eine Sitzgruppierung 68f der Flugzeugsitzanordnung 14f aus. Die Sitzgruppierung 68f weist eine zumindest im Wesentlichen rechteckige Grundfläche auf. Die Sitzgruppierung 68f bildet eine periodisch wiederholbare Abfolge aus. Dabei können mehrere identische Sitzgruppierungen 68f entlang einer Flugzeuglängsachse unmittelbar hintereinander angeordnet werden.

In der ersten inneren Sitzspalte 38f sind ausschließlich Flugzeugsitzvorrichtungen 100f, 300f, 1000f, 3000f der mehreren Flugzeugsitzvorrichtungen 100f, 300f, 400f, 500f, 700f angeordnet, deren Sitzrichtungen 110f, 310f, 1100f, 3100f zumindest im Wesentlichen parallel zu der Flugzeugkabinenmittelachse 16f angeordnet sind. In der ersten inneren Sitzspalte 38f sind ausschließlich Flugzeugsitzvorrichtungen 100f, 300f, 1000f, 3000f der mehreren Flugzeugsitzvorrichtungen 100f, 300f, 400f, 500f, 700f angeordnet, deren Flugzeugsitze 120f, 320f, 1200f, 3200f abwechselnd gangseitig oder gangabgewandt angeordnet sind. Die erste Flugzeugsitzvorrichtung 100f, die dritte Flugzeugsitzvorrichtung 300f und die weitere erste Flugzeugsitzvorrichtung 100'f sind unmittelbar hintereinander angeordnet. Die dritte Flugzeugsitzvorrichtung 300f beabstandet die erste Flugzeugsitzvorrichtung 100f von der weiteren ersten Flugzeugsitzvorrichtung 100'f. Die Zusatzkonsole 64f ist in der ersten inneren Sitzspalte 38f entlang einer Flugzeuglängsachse betrachtet zwischen der ersten Flugzeugsitzvorrichtung 100f und der alternativen dritten Flugzeugsitzvorrichtung 3000f angeordnet. Die Zusatzkonsole 64f beabstandet die erste Flugzeugsitzvorrichtung 100f von der alternativen dritten Flugzeugsitzvorrichtung 3000f. Die Sitzrichtungen 110f, 3100f der durch die Zusatzkonsole 64f voneinander beabstandeten Flugzeugsitzvorrichtungen 100f, 3000f sind entgegengesetzt zueinander ausgerichtet.

In der zweiten inneren Sitzspalte 40f sind ausschließlich Flugzeugsitzvorrichtungen 500f, 700'f, 5000'f, 7000f der mehreren Flugzeugsitzvorrichtungen 100f, 300f, 400f, 500f, 700f angeordnet, deren Sitzrichtungen 510f, 710f, 5100f, 7100f zumindest im Wesentlichen parallel zu der Flugzeugkabinenmittelachse 16f angeordnet sind. In der zweiten inneren Sitzspalte 40f sind ausschließlich Flugzeugsitzvorrichtungen 500f, 700'f, 5000'f, 7000f der mehreren Flugzeugsitzvorrichtungen 100f, 300f, 400f, 500f, 700f angeordnet, deren Flugzeugsitze 520f, 720f, 5200f, 7200f abwechselnd gangseitig oder gangabgewandt angeordnet sind.

Die fünfte Flugzeugsitzvorrichtung 500f, eine der weiteren siebten Flugzeugsitzvorrichtungen 700'f und die weitere fünfte Flugzeugsitzvorrichtung 500'f sind unmittelbar hintereinander angeordnet. Die weitere siebte Flugzeugsitzvorrichtung 700'f beabstandet die fünfte Flugzeugsitzvorrichtung 500f von der weiteren fünften Flugzeugsitzvorrichtung 500'f. Die Zusatzkonsole 66f ist in der zweiten inneren Sitzspalte 40f entlang einer Flugzeuglängsachse betrachtet zwischen der fünften Flugzeugsitzvorrichtung 500f und der alternativen siebten Flugzeugsitzvorrichtung 7000f angeordnet. Die Zusatzkonsole 66f beabstandet die fünfte Flugzeugsitzvorrichtung 500f von der alternativen siebten Flugzeugsitzvorrichtung 7000f. Die Sitzrichtungen 510f, 7100f der durch die Zusatzkonsole 66f voneinander beabstandeten Flugzeugsitzvorrichtungen 500f, 7000f sind entgegengesetzt zueinander ausgerichtet. Die erste innere Sitzspalte 38f ist über die Flugzeugkabinenmittelachse 16f gespiegelt zu der zweiten inneren Sitzspalte 40f ausgebildet.

In der zweiten äußeren Sitzspalte 42e sind ausschließlich Flugzeugsitzvorrichtungen 400f, 400'f der mehreren Flugzeugsitzvorrichtungen 100f, 300f, 400f, 500f, 700f angeordnet, deren Flugzeugsitze 420f gangabgewandt angeordnet sind. In der zweiten äußeren Sitzspalte 42e sind ausschließlich Flugzeugsitzvorrichtungen 400f, 400'f der mehreren Flugzeugsitzvorrichtungen 100f, 300f, 400f, 500f, 700f angeordnet, deren Sitzrichtungen abgewinkelt zu der Flugzeugkabinenmittelachse 16f angeordnet sind.

Die in der Figur 9 dargestellte Flugzeugsitzanordnung 14f ist grundsätzlich durch weitere Flugzeugsitzvorrichtungen 100'f, 300'f, 400'f, 500'f, 700'f, 3000'f, 5000'f, 7000'f in Flugrichtung 24f betrachtet erweiterbar.

In dem Flugzeugkabinenabschnitt 26f unterscheiden sich die erste Flugzeugsitzvorrichtung 100f, die dritte Flugzeugsitzvorrichtung 300f, die vierte Flugzeugsitzvorrichtung 400f, die fünfte Flugzeugsitzvorrichtung 500f, die siebte Flugzeugsitzvorrichtung 700f, die alternative erste Flugzeugsitzvorrichtung 1000f, die alternative dritte Flugzeugsitzvorrichtung 3000f, die alternative fünfte Flugzeugsitzvorrichtung und die alternative siebte Flugzeugsitzvorrichtung 7000f in zumindest einer Komfortkategorie, wobei die Flugzeugsitzvorrichtungen 100f, 300f, 400f, 500f, 700f, 1000f, 3000f, 5000f, 7000f für die zumindest eine Komfortkategorie jeweils einen zueinander unterschiedlichen Wert aufweisen, der durch eine unterschiedliche Anordnung der Flugzeugsitze 120f, 320f, 420f, 520f, 720f, 1200f, 3200f, 5200f, 7200f und durch die zumindest teilweise unterschiedliche Ausbildung der Flugzeugsitzvorrichtungen 100f, 300f, 400f, 500f, 700f, 1000f, 3000f, 5000f, 7000f bedingt ist.

Im vorliegenden Fall ist eine Komfortkategorie als eine Flugzeugsitzorientierung ausgebildet. Ein Wert für die Flugzeugsitzorientierung beschreibt eine Winkelabweichung der Sitzrichtung von einer Flugzeuglängsachse. Der Wert für die Flugzeugsitzvorrichtung ist als ein Winkel ausgebildet. Die erste Flugzeugsitzvorrichtung 100f, die dritte Flugzeugsitzvorrichtung 300f, die fünfte Flugzeugsitzvorrichtung 500f, die siebte Flugzeugsitzvorrichtung 700f, die alternative erste Flugzeugsitzvorrichtung 1000f, die alternative dritte Flugzeugsitzvorrichtung 3000f, die alternative fünfte Flugzeugsitzvorrichtung 5000f und die alternative siebte Flugzeugsitzvorrichtung 7000f weisen für die Flugzeugsitzorientierung jeweils einen selben Wert auf. Die vierte Flugzeugsitzvorrichtung 400f weist für die Flugzeugsitzorientierung einen Wert auf, der größer ist als der Wert für die Flugzeugsitzorientierung der ersten Flugzeugsitzvorrichtung 100f. Ein weiterer Wert für die Flugzeugsitzorientierung beschreibt, ob die Sitzrichtung oder eine Richtungskomponente der Sitzrichtung in Flugrichtung 24f oder entgegen der Flugrichtung 24f gerichtet ist. Der weitere Wert ist als "0" oder "1" eines Wertepaars einer booleschen Variable ausgebildet. Der weitere Wert "0" entspricht einer Ausrichtung der Sitzrichtung oder einer Richtungskomponente der Sitzrichtung in Flugrichtung 24f. Der weitere Wert "1" entspricht einer Ausrichtung der Sitzrichtung oder einer Richtungskomponente der Sitzrichtung entgegen der Flugrichtung 24f. Im vorliegenden Fall weisen die erste Flugzeugsitzvorrichtung 100f, die dritte Flugzeugsitzvorrichtung 300f, die fünfte Flugzeugsitzvorrichtung 500f und die siebte Flugzeugsitzvorrichtung 700f für die Flugzeugsitzorientierung jeweils einen weiteren Wert "0" auf. Die alternative erste Flugzeugsitzvorrichtung 1000f, die alternative dritte Flugzeugsitzvorrichtung 3000f, die alternative fünfte Flugzeugsitzvorrichtung 5000f und die alternative siebte Flugzeugsitzvorrichtung 7000f weisen für die Flugzeugsitzorientierung jeweils einen weiteren Wert "1" auf.

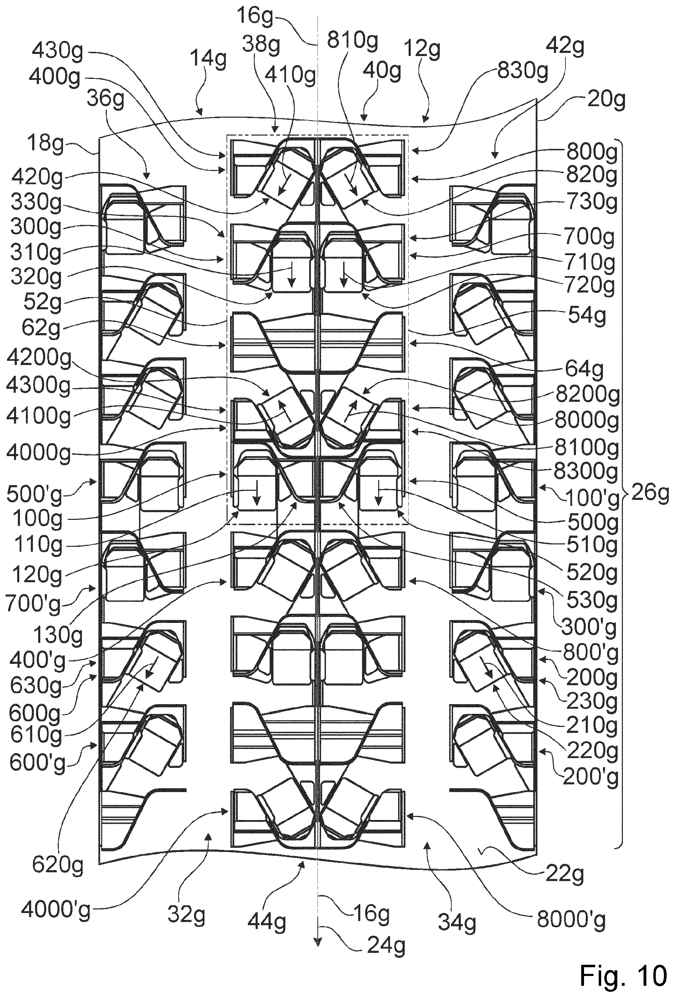

Die Figur 10 zeigt eine Flugzeugsitzanordnung 14g in einem siebten Ausführungsbeispiel. Die Flugzeugsitzanordnung 14g ist zur Verwendung in einer teilweise dargestellten Flugzeugkabine 12g eines Flugzeugs vorgesehen. Die Flugzeugkabine 12g weist eine Flugzeugkabinenmittelachse 16g auf. Die Flugzeugkabinenmittelachse 16g ist als eine Flugzeuglängsachse ausgebildet. Die Flugzeugkabine 12g weist zwei sich gegenüberliegende Flugzeugkabinenaußenwände 18g, 20g auf. Das Flugzeug weist in zumindest einem Betriebszustand eine Flugrichtung 24g auf. Die Flugzeugkabine 12g weist entlang der Flugzeugkabinenmittelachse 16g einen Flugzeugkabinenabschnitt 26g auf. Die Flugzeugkabine 12g weist in dem Flugzeugkabinenabschnitt 26g einen ersten Flugzeugkabinengang 32g und einen zweiten Flugzeugkabinengang 34g auf. Die Flugzeugsitzanordnung 14g umfasst eine erste äußere Sitzspalte 36g. Die Flugzeugsitzanordnung 14g umfasst eine erste innere Sitzspalte 38g. Die Flugzeugsitzanordnung 14g umfasst eine zweite innere Sitzspalte 40g. Die Flugzeugsitzanordnung 14g umfasst eine zweite äußere Sitzspalte 42g. Die Flugzeugkabine 12g weist einen Mittelbereich 44g auf.

Die Flugzeugsitzanordnung 14g umfasst mehrere in dem Flugzeugkabinenabschnitt 26g angeordnete Flugzeugsitzvorrichtungen 100g, 200g, 300g, 400g, 500g, 600g, 700g, 800g. Die mehreren Flugzeugsitzvorrichtungen 100g, 200g, 300g, 400g, 500g, 600g, 700g, 800g sind unterschiedlich voneinander ausgebildet. Die Flugzeugsitzvorrichtungen 100g, 200g, 300g, 400g, 500g, 600g, 700g, 800g weisen jeweils einen Flugzeugsitz auf. Die Flugzeugsitzvorrichtungen 100g, 200g, 300g, 400g, 500g, 600g, 700g, 800g weisen jeweils eine Konsole auf. Die Flugzeugsitzanordnung 14g umfasst eine erste Flugzeugsitzvorrichtung 100g der mehreren Flugzeugsitzvorrichtungen 100g, 200g, 300g, 400g, 500g, 600g, 700g, 800g. Die erste Flugzeugsitzvorrichtung 100g weist eine Sitzrichtung 110g auf. Die erste Flugzeugsitzvorrichtung 100g weist einen ersten Flugzeugsitz 120g auf. Die erste Flugzeugsitzvorrichtung 100g weist eine erste Konsole 130g auf. Die Flugzeugsitzanordnung 14g umfasst eine zweite Flugzeugsitzvorrichtung 200g der mehreren Flugzeugsitzvorrichtungen 100g, 200g, 300g, 400g, 500g, 600g, 700g, 800g. Die zweite Flugzeugsitzvorrichtung 200g weist eine Sitzrichtung 210g auf. Die zweite Flugzeugsitzvorrichtung 200g weist einen zweiten Flugzeugsitz 220g auf. Die zweite Flugzeugsitzvorrichtung 200g weist eine zweite Konsole 230g auf. Die Flugzeugsitzanordnung 14g umfasst eine dritte Flugzeugsitzvorrichtung 300g der mehreren Flugzeugsitzvorrichtungen 100g, 200g, 300g, 400g, 500g, 600g, 700g, 800g.

Die dritte Flugzeugsitzvorrichtung 300g weist eine Sitzrichtung 310g auf. Die dritte Flugzeugsitzvorrichtung 300g weist einen dritten Flugzeugsitz 320g auf. Die dritte Flugzeugsitzvorrichtung 300g weist eine dritte Konsole 330g auf. Die Flugzeugsitzanordnung 14g umfasst eine vierte Flugzeugsitzvorrichtung 400g der mehreren Flugzeugsitzvorrichtungen 100g, 200g, 300g, 400g, 500g, 600g, 700g, 800g. Die vierte Flugzeugsitzvorrichtung 400g weist eine Sitzrichtung 410g auf. Die vierte Flugzeugsitzvorrichtung 400g weist einen vierten Flugzeugsitz 420g auf. Die vierte Flugzeugsitzvorrichtung 400g weist eine vierte Konsole 430g auf. Die Flugzeugsitzanordnung 14g umfasst eine fünfte Flugzeugsitzvorrichtung 500g der mehreren Flugzeugsitzvorrichtungen 100g, 200g, 300g, 400g, 500g, 600g, 700g, 800g. Die fünfte Flugzeugsitzvorrichtung 500g weist eine Sitzrichtung 510g auf. Die fünfte Flugzeugsitzvorrichtung 500g weist einen fünften Flugzeugsitz 520g auf. Die fünfte Flugzeugsitzvorrichtung 500g weist eine fünfte Konsole 530g auf. Die Flugzeugsitzanordnung 14g umfasst eine sechste Flugzeugsitzvorrichtung 600g der mehreren Flugzeugsitzvorrichtungen 100g, 200g, 300g, 400g, 500g, 600g, 700g, 800g. Die sechste Flugzeugsitzvorrichtung 600g weist eine Sitzrichtung 610g auf. Die sechste Flugzeugsitzvorrichtung 600g weist einen sechsten Flugzeugsitz 620g auf. Die sechste Flugzeugsitzvorrichtung 600g weist eine sechste Konsole 630g auf. Die Flugzeugsitzanordnung 14g umfasst eine siebte Flugzeugsitzvorrichtung 700g der mehreren Flugzeugsitzvorrichtungen 100g, 200g, 300g, 400g, 500g, 600g, 700g, 800g. Die siebte Flugzeugsitzvorrichtung 700g weist eine Sitzrichtung 710g auf. Die siebte Flugzeugsitzvorrichtung 700g weist einen siebten Flugzeugsitz 720g auf. Die siebte Flugzeugsitzvorrichtung 700g weist eine siebte Konsole 730g auf. Die Flugzeugsitzanordnung 14g umfasst eine achte Flugzeugsitzvorrichtung 800g der mehreren Flugzeugsitzvorrichtungen 100g, 200g, 300g, 400g, 500g, 600g, 700g, 800g. Die achte Flugzeugsitzvorrichtung 800g weist eine Sitzrichtung 810g auf. Die achte Flugzeugsitzvorrichtung 800g weist einen achten Flugzeugsitz 820g auf. Die achte Flugzeugsitzvorrichtung 800g weist eine achte Konsole 830g auf.

Die Flugzeugsitzanordnung 14g umfasst zumindest eine weitere erste Flugzeugsitzvorrichtung 100'g, die zumindest im Wesentlichen identisch zu der ersten Flugzeugsitzvorrichtung 100g ausgebildet ist. Die Flugzeugsitzanordnung 14g umfasst mehrere weitere zweite Flugzeugsitzvorrichtungen 200'g, die zumindest im Wesentlichen identisch zu der zweiten Flugzeugsitzvorrichtung 200g ausgebildet sind. Die Flugzeugsitzanordnung 14g umfasst mehrere weitere dritte Flugzeugsitzvorrichtungen 300'g, die zumindest im Wesentlichen identisch zu der dritten Flugzeugsitzvorrichtung 300g ausgebildet sind. Die Flugzeugsitzanordnung 14g umfasst zumindest eine weitere vierte Flugzeugsitzvorrichtung 400'g, die zumindest im Wesentlichen identisch zu der vierten Flugzeugsitzvorrichtung 400g ausgebildet ist. Die Flugzeugsitzanordnung 14g umfasst zumindest eine weitere fünfte Flugzeugsitzvorrichtung 500'g, die zumindest im Wesentlichen identisch zu der fünften Flugzeugsitzvorrichtung 500g ausgebildet ist. Die Flugzeugsitzanordnung 14g umfasst mehrere weitere sechste Flugzeugsitzvorrichtungen 600'g, die zumindest im Wesentlichen identisch zu der sechsten Flugzeugsitzvorrichtung 600g ausgebildet sind. Die Flugzeugsitzanordnung 14g umfasst mehrere weitere siebte Flugzeugsitzvorrichtungen 700'g, die zumindest im Wesentlichen identisch zu der siebten Flugzeugsitzvorrichtung 700g ausgebildet sind. Die Flugzeugsitzanordnung 14g umfasst zumindest eine weitere achte Flugzeugsitzvorrichtung 800'g, die zumindest im Wesentlichen identisch zu der achten Flugzeugsitzvorrichtung 800g ausgebildet ist.

Im Unterschied zu dem ersten Ausführungsbeispiel umfasst die Flugzeugsitzanordnung 14g mehrere alternative Flugzeugsitzvorrichtungen 4000g, 8000g, die in dem Flugzeugkabinenabschnitt 26g angeordnet sind. Die Flugzeugsitzanordnung 14g umfasst eine alternative vierte Flugzeugsitzvorrichtung 4000g. Die alternative vierte Flugzeugsitzvorrichtung 4000g weist eine Sitzrichtung 4100g auf. Die Sitzrichtung 4100g der alternativen vierten Flugzeugsitzvorrichtung 4000g weist eine Richtungskomponente entgegen der Flugrichtung 24g auf. Die Sitzrichtung 4100g der alternativen vierten Flugzeugsitzvorrichtung 4000g weicht von der Flugrichtung 24g ab. Die Sitzrichtung 4100g der alternativen vierten Flugzeugsitzvorrichtung 4000g ist im vorliegenden Fall um 30 Grad abgewinkelt zu der Flugzeugkabinenmittelachse 16g ausgerichtet. Die alternative vierte Flugzeugsitzvorrichtung 4000g weist einen alternativen vierten Flugzeugsitz 4200g auf. Die alternative vierte Flugzeugsitzvorrichtung 4000g weist eine alternative vierte Konsole 4300g auf. Die alternative vierte Flugzeugsitzvorrichtung 4000g ist um eine Achse gespiegelt zu der vierten Flugzeugsitzvorrichtung 400g ausgebildet, wobei die Achse senkrecht zu der Flugzeugkabinenmittelachse 16g und parallel zu einem Flugzeugkabinenboden 22g der Flugzeugkabine 12g ausgerichtet ist. Die Flugzeugsitzanordnung 14g umfasst zumindest eine weitere alternative vierte Flugzeugsitzvorrichtung 4000'g, die zumindest im Wesentlichen identisch zu der alternativen vierten Flugzeugsitzvorrichtung 4000g ausgebildet ist. Die Flugzeugsitzanordnung 14g umfasst eine alternative achte Flugzeugsitzvorrichtung 8000g. Die alternative achte Flugzeugsitzvorrichtung 8000g weist eine Sitzrichtung 8100g auf. Die Sitzrichtung 8100g der alternativen achten Flugzeugsitzvorrichtung 8000g weist eine Richtungskomponente entgegen der Flugrichtung 24g auf. Die Sitzrichtung 8100g der alternativen achten Flugzeugsitzvorrichtung 8000g weicht von der Flugrichtung 24g ab. Die Sitzrichtung 8100g der alternativen achten Flugzeugsitzvorrichtung 8000g ist im vorliegenden Fall um 30 Grad abgewinkelt zu der Flugzeugkabinenmittelachse 16g ausgerichtet. Die alternative achte Flugzeugsitzvorrichtung 8000g weist einen alternativen achten Flugzeugsitz 8200g auf. Die alternative achte Flugzeugsitzvorrichtung 8000g weist eine alternative achte Konsole 8300g auf. Die alternative achte Flugzeugsitzvorrichtung 8000g ist um eine Achse gespiegelt zu der achten Flugzeugsitzvorrichtung 800g ausgebildet, wobei die Achse senkrecht zu der Flugzeugkabinenmittelachse 16g und parallel zu dem Flugzeugkabinenboden 22g ausgerichtet ist. Die Flugzeugsitzanordnung 14g umfasst zumindest eine weitere alternative achte Flugzeugsitzvorrichtung 8000'g, die zumindest im Wesentlichen identisch zu der alternativen achten Flugzeugsitzvorrichtung 8000g ausgebildet ist.

Im vorliegenden Fall ist die erste innere Sitzspalte 38g über die Flugzeugkabinenmittelachse 16g symmetrisch zu der zweiten inneren Sitzspalte 40g ausgebildet. Im vorliegenden Fall ist die erste äußere Sitzspalte 36g über die Flugzeugkabinenmittelachse 16g symmetrisch zu der zweiten äußeren Sitzspalte 42g ausgebildet. Sitzrichtungen 4100g, 8100g eines Teils der mehreren Flugzeugsitzvorrichtungen 100g, 200g, 300g, 400g, 500g, 600g, 700g, 800g, 4000g, 8000g sind in dem Flugzeugkabinenabschnitt 26g zumindest im Wesentlichen entgegengesetzt zu der Flugrichtung 24g ausgerichtet. In dem Flugzeugkabinenabschnitt 26g sind im vorliegenden Fall zehn unterschiedlich voneinander ausgebildete Flugzeugsitzvorrichtungen 100g, 200g, 300g, 400g, 500g, 600g, 700g, 800g, 4000g, 8000g angeordnet.

In dem Flugzeugkabinenabschnitt 26g sind in der ersten inneren Sitzspalte 38g vier Flugzeugsitzvorrichtungen der mehreren Flugzeugsitzvorrichtungen 100g, 200g, 300g, 400g, 500g, 600g, 700g, 800g, 4000g, 8000g, nämlich zumindest die erste Flugzeugsitzvorrichtung 100g, die dritte Flugzeugsitzvorrichtung 300g, die vierte Flugzeugsitzvorrichtung 400g und die alternative vierte Flugzeugsitzvorrichtung 4000g, angeordnet. Im Unterschied zu dem ersten Ausführungsbeispiel ist die zweite Flugzeugsitzvorrichtung 200a aus dem ersten Ausführungsbeispiel in dem siebten Ausführungsbeispiel durch die alternative vierte Flugzeugsitzvorrichtung 4000g ersetzt. Die Flugzeugsitzanordnung 14g umfasst zumindest eine Zusatzkonsole 62g. Die Zusatzkonsole 62g ist in der ersten inneren Sitzspalte 38g entlang einer Flugzeuglängsachse betrachtet zwischen der dritten Flugzeugsitzvorrichtung 300g und der alternativen vierten Flugzeugsitzvorrichtung 4000g angeordnet. Die Zusatzkonsole 62g beabstandet die dritte Flugzeugsitzvorrichtung 300g von der alternativen vierten Flugzeugsitzvorrichtung 4000g. Die Sitzrichtungen 310g, 4100g der durch die Zusatzkonsole 62g voneinander beabstandeten Flugzeugsitzvorrichtungen 300g, 4000g sind entgegengesetzt zueinander ausgerichtet. Die Flugzeugsitzanordnung 14g weist eine erste Sitzgruppierung 52g von vier in dem Flugzeugkabinenabschnitt 26g in der ersten inneren Sitzspalte 38g unmittelbar hintereinander angeordneten Flugzeugsitzvorrichtungen, nämlich der ersten Flugzeugsitzvorrichtung 100g, der alternativen vierten Flugzeugsitzvorrichtung 4000g, der dritten Flugzeugsitzvorrichtung 300g und der vierten Flugzeugsitzvorrichtung 400g, auf.

In dem Flugzeugkabinenabschnitt 26g sind in der zweiten inneren Sitzspalte 40g vier Flugzeugsitzvorrichtungen der mehreren Flugzeugsitzvorrichtungen 100g, 200g, 300g, 400g, 500g, 600g, 700g, 800g, 4000g, 8000g, nämlich zumindest die fünfte Flugzeugsitzvorrichtung 500g, die siebte Flugzeugsitzvorrichtung 700g, die achte Flugzeugsitzvorrichtung 800g und die alternative achte Flugzeugsitzvorrichtung 8000g, angeordnet. Im Unterschied zu dem ersten Ausführungsbeispiel ist die sechste Flugzeugsitzvorrichtung 600a aus dem ersten Ausführungsbeispiel in dem siebten Ausführungsbeispiel durch die alternative achte Flugzeugsitzvorrichtung 8000g ersetzt. Die Flugzeugsitzanordnung 14g umfasst zumindest eine Zusatzkonsole 64g. Die Zusatzkonsole 64g ist in der zweiten inneren Sitzspalte 40g entlang einer Flugzeuglängsachse betrachtet zwischen der siebten Flugzeugsitzvorrichtung 700g und der alternativen achten Flugzeugsitzvorrichtung 8000g angeordnet. Die Zusatzkonsole 64g beabstandet die siebte Flugzeugsitzvorrichtung 700g von der alternativen achten Flugzeugsitzvorrichtung 8000g. Die Sitzrichtungen 710g, 8100g der durch die Zusatzkonsole 64g voneinander beabstandeten Flugzeugsitzvorrichtungen 700g, 8000g sind entgegengesetzt zueinander ausgerichtet. Die Flugzeugsitzanordnung 14g weist eine zweite Sitzgruppierung 54g von vier in dem Flugzeugkabinenabschnitt 26g in der zweiten inneren Sitzspalte 40g unmittelbar hintereinander angeordneten Flugzeugsitzvorrichtungen, nämlich der fünften Flugzeugsitzvorrichtung 500g, der alternativen achten Flugzeugsitzvorrichtung 8000g, der siebten Flugzeugsitzvorrichtung 700g und der achten Flugzeugsitzvorrichtung 800g, auf.

In dem Flugzeugkabinenabschnitt 26g sind in der ersten äußeren Sitzspalte 36g drei unterschiedlich ausgebildete Flugzeugsitzvorrichtungen, nämlich die weitere fünfte Flugzeugsitzvorrichtung 500'g, die sechste Flugzeugsitzvorrichtung 600g und eine weitere der siebten Flugzeugsitzvorrichtungen 700'g, angeordnet. In dem Flugzeugkabinenabschnitt 26g sind die sechste Flugzeugsitzvorrichtung 600g, die weitere siebte Flugzeugsitzvorrichtung 700'g und die weitere fünfte Flugzeugsitzvorrichtung 500'g in der ersten äußeren Sitzspalte 36g unmittelbar hintereinander angeordnet. In der ersten äußeren Sitzspalte 36g sind die weitere fünfte Flugzeugsitzvorrichtung 500'g und die sechste Flugzeugsitzvorrichtung 600g durch die weitere siebte Flugzeugsitzvorrichtung 700'g voneinander beabstandet. In dem Flugzeugkabinenabschnitt 26g ist in Flugrichtung 24g betrachtet unmittelbar hinter der sechsten Flugzeugsitzvorrichtung 600g eine weitere der sechsten Flugzeugsitzvorrichtungen 600'g angeordnet.

In dem Flugzeugkabinenabschnitt 26g sind in der zweiten äußeren Sitzspalte 42g drei unterschiedlich ausgebildete Flugzeugsitzvorrichtungen, nämlich die weitere erste Flugzeugsitzvorrichtung 100'g, die zweite Flugzeugsitzvorrichtung 200g und eine weitere der dritten Flugzeugsitzvorrichtungen 300'g, angeordnet. In dem Flugzeugkabinenabschnitt 26g sind die zweite Flugzeugsitzvorrichtung 200g, die weitere dritte Flugzeugsitzvorrichtung 300'g und die weitere erste Flugzeugsitzvorrichtung 100'g in der zweiten äußeren Sitzspalte 42g unmittelbar hintereinander angeordnet. In der zweiten äußeren Sitzspalte 42g sind die weitere erste Flugzeugsitzvorrichtung 100'g und die zweite Flugzeugsitzvorrichtung 200g durch die weitere dritte Flugzeugsitzvorrichtung 300'g voneinander beabstandet. In dem Flugzeugkabinenabschnitt 26g ist in Flugrichtung 24g betrachtet unmittelbar hinter der zweiten Flugzeugsitzvorrichtung 200g eine weitere der zweiten Flugzeugsitzvorrichtungen 200'g angeordnet.

In dem Flugzeugkabinenabschnitt 26g unterscheiden sich die erste Flugzeugsitzvorrichtung 100g, die zweite Flugzeugsitzvorrichtung 200g, die dritte Flugzeugsitzvorrichtung 300g, die vierte Flugzeugsitzvorrichtung 400g, die fünfte Flugzeugsitzvorrichtung 500g, die sechste Flugzeugsitzvorrichtung 600g, die siebte Flugzeugsitzvorrichtung 700g, die achte Flugzeugsitzvorrichtung 800g, die alternative vierte Flugzeugsitzvorrichtung 4000g und die alternative achte Flugzeugsitzvorrichtung 8000g in zumindest einer Komfortkategorie, wobei die Flugzeugsitzvorrichtungen 100g, 200g, 300g, 400g, 500g, 600g, 700g, 800g, 4000g, 8000g für die zumindest eine Komfortkategorie jeweils einen zueinander unterschiedlichen Wert aufweisen, der durch eine unterschiedliche Anordnung der Flugzeugsitze 120g, 220g, 320g, 420g, 520g, 620g, 720g, 820g, 4200g, 8200g und durch die zumindest teilweise unterschiedliche Ausbildung der Flugzeugsitzvorrichtungen 100g, 200g, 300g, 400g, 500g, 600g, 700g, 800g, 4000g, 8000g bedingt ist.

## Patentansprüche

1. Flugzeugsitzanordnung zur Verwendung in einer Flugzeugkabine eines Flugzeugs, wobei die Flugzeugkabine zumindest eine Sitzspalte und zumindest einen Flugzeugkabinenabschnitt aufweist, und wobei die Flugzeugsitzanordnung mehrere Flugzeugsitzvorrichtungen (100a-g, 100'a-g, 200ag, 200'a-g, 300a-g, 300'a-g, 400a-g, 400'a-g, 500a-g, 500'a-g, 600a-g, 600'a-g, 700ag, 700'a-g, 800a-g, 800'a-g, 1000f, 3000f, 3000'f, 4000g, 4000'g, 5000f, 5000'f, 7000f, 7000'f, 8000g, 8000'g) aufweist, die im Betriebszustand der Flugzeugsitzanordnung in dem zumindest einen Flugzeugkabinenabschnitt (26a-g) angeordnet sind, die zumindest teilweise unterschiedlich voneinander ausgebildet sind und jeweils einen Flugzeugsitz (120a-g, 220a-g, 320a-g, 420a-g, 520a-g, 620a-g, 720a-g, 820a-g, 1200f, 3200f, 4200g, 5200f, 7200f, 8200g) aufweisen, der als ein Full-Flat-Sitz ausgebildet ist, wobei sich die Flugzeugsitzvorrichtungen (100a-g, 100'a-g, 200ag, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) in zumindest einer Komfortkategorie unterscheiden, wobei die Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) für die zumindest eine Komfortkategorie jeweils einen zueinander unterschiedlichen Wert aufweisen, der durch eine unterschiedliche Anordnung der Flugzeugsitze (120a-g, 220a-g, 320a-g, 420a-g, 520a-g, 620a-g, 720a-g, 820a-g, 1200f, 3200f, 4200g, 5200f, 7200f, 8200g) und durch die zumindest teilweise unterschiedliche Ausbildung der Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) bedingt ist, wobei in der Sitzspalte (36a-g, 38a-g, 40a-g, 42a-g) zumindest vier, voneinander unterschiedlich ausgebildete, Flugzeugsitzvorrichtungen der mehreren Flugzeugsitzvorrichtungen (100ag, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) angeordnet sind, **dadurch gekennzeichnet, dass** die zumindest vier Flugzeugsitzvorrichtungen (100ag, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) im Betriebszustand der Flugzeugsitzanordnung unmittelbar hintereinander in der Sitzspalte angeordnet sind, sodass alle von einer selben Flugzeuglängsachse geschnitten werden und jeweils einer direkten Zugang zu einem selben Flugzeugkabinengang (32a-g, 34a-g) aufweisen.

2. Flugzeugsitzanordnung nach Anspruch 1, **dadurch gekennzeichnet, dass** die zumindest eine Komfortkategorie einen Livingspace, insbesondere eine Grundfläche, eine Bettlänge, eine Bettbreite, ein Fußraumvolumen und/oder eine Durchgangsbreite in zumindest einem Bereich, beschreibt.

3. Flugzeugsitzanordnung nach einem der vorhergehenden Ansprüche, **dadurch gekennzeichnet, dass** in dem Flugzeugkabinenabschnitt (26a-g) in einer Sitzspalte (36a-g, 38a-g, 40a-g, 42a-g) eine Sitzrichtung (110a-g, 310a-g, 510ag, 710a-g, 1100f, 3100f, 5100f, 7100f) einer Flugzeugsitzvorrichtung (100a-g, 300a-g, 500a-g, 700a-g, 1000f, 3000f, 5000f, 7000f) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) zumindest im Wesentlichen parallel zu einer Flugzeuglängsachse angeordnet ist und eine Sitzrichtung (210a-g, 410a-g, 610a-g, 810a-g, 4100g, 8100g) einer weiteren Flugzeugsitzvorrichtung (200a-g, 400a-g, 600a-g, 800a-g, 4000g, 8000g) der mehreren Flugzeugsitzvorrichtungen (100a-g, 100'a-g, 200ag, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), insbesondere in einem Winkel von mindestens 18 Grad, abgewinkelt zu der Flugzeuglängsachse angeordnet ist.

4. Flugzeugsitzanordnung nach einem der vorhergehenden Ansprüche, **dadurch gekennzeichnet, dass** in dem Flugzeugkabinenabschnitt (26a-g) eine Sitzrichtung (210a-g, 610a-g) von zumindest einer Flugzeugsitzvorrichtung (200a-g, 600a-g) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) von einem unmittelbar angrenzenden Flugzeugkabinengang (32a-g, 34a-g) weggerichtet ist.

5. Flugzeugsitzanordnung nach einem der vorhergehenden Ansprüche, **dadurch gekennzeichnet, dass** in dem Flugzeugkabinenabschnitt (26a-g) eine Sitzrichtung (410a-g, 810a-g, 4100g, 8100g) von zumindest einer Flugzeugsitzvorrichtung (400a-g, 800a-g, 4000g, 8000g) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) zu einem unmittelbar angrenzenden Flugzeugkabinengang (32a-g, 34ag) gerichtet ist.

6. Flugzeugsitzanordnung nach Anspruch 4 und 5, **dadurch gekennzeichnet, dass** die Sitzrichtungen (210a-g, 410a-g, 610a-g, 810a-g, 4100g, 8100g) von zumindest zwei Flugzeugsitzvorrichtungen (200a-g, 400a-g, 600a-g, 800a-g, 4000g, 8000g), die insbesondere durch zumindest eine weitere Flugzeugsitzvorrichtung (300a-g, 700a-g) voneinander beabstandet sind, in einer Sitzspalte (36a-g, 38a-g, 40a-g, 42a-g) um einen betragsmäßig zumindest im Wesentlichen gleichen Winkel zu einer Flugzeuglängsachse abgewinkelt angeordnet sind, wobei die Sitzrichtungen (210a-g, 410a-g, 610a-g, 810a-g, 4100g, 8100g) der Flugzeugsitzvorrichtungen (200a-g, 400a-g, 600a-g, 800a-g, 4000g, 8000g) zu einer Flugzeuglängsachse gespiegelt ausgebildet sind.

7. Flugzeugsitzanordnung nach einem der vorhergehenden Ansprüche, **dadurch gekennzeichnet, dass** ein Flugzeugsitz (120a-g, 220a-g, 520a-g, 620a-g, 1200f, 5200f) einer Flugzeugsitzvorrichtung (100a-g, 200a-g, 500a-g, 600a-g, 1000f, 5000f) der in dem Flugzeugkabinenabschnitt (26a-g) in einer Sitzspalte (36a-g, 38a-g, 40a-g, 42a-g) angeordneten Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) gangseitig angeordnet ist, wobei ein Flugzeugsitz (320a-g, 420a-g, 720a-g, 820a-g, 3200f, 4200g, 7200f, 8200g) einer weiteren Flugzeugsitzvorrichtung (300a-g, 400a-g, 700a-g, 800a-g, 3000f, 4000g, 7000f, 8000g) der in der Sitzspalte (36a-g, 38a-g, 40a-g, 42a-g) angeordneten Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) gangabgewandt angeordnet ist.

8. Flugzeugsitzanordnung nach einem der vorhergehenden Ansprüche, **gekennzeichnet durch** zumindest eine Sitzgruppierung (52a-g, 54a-g) von wenigstens vier, in dem Flugzeugkabinenabschnitt (26a-g) ir einer Sitzspalte (36a-g, 38a-g, 40a-g, 42a-g) unmittelbar hintereinander angeordneten Flugzeugsitzvorrichtungen der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g), die jeweils unterschiedliche Sitzrichtungen (110a-g, 210a-g, 310a-g, 410a-g, 510a-g, 610a-g, 710a-g, 810a-g, 4100g, 8100g) aufweisen und/oder deren Flugzeugsitze (120a-g, 220a-g, 320ag, 420a-g, 520a-g, 620a-g, 720a-g, 820a-g, 4200g, 8200g) gangseitig oder gangabgewandt angeordnet sind.

9. Flugzeugsitzanordnung nach Anspruch 8, **dadurch gekennzeichnet, dass** die Sitzrichtungen (110a-d, 210a-d, 310a-d, 410a, 510a-d, 610a-d, 710a-d, 810a, 4100g, 8100g) der unmittelbar hintereinander angeordneten Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) innerhalb der zumindest einen Sitzgruppierung (52a-g, 54a-g) abwechselnd zumindest im Wesentlichen parallel und abgewinkelt zu der Flugzeuglängsachse angeordnet sind.

10. Flugzeugsitzanordnung nach einem der vorhergehenden Ansprüche, **dadurch gekennzeichnet, dass** in dem Flugzeugkabinenabschnitt (26a) in einer Sitzspalte (36a, 38a, 40a, 42a) zwei Flugzeugsitzvorrichtungen (100a, 200a, 500a, 600a) der mehreren Flugzeugsitzvorrichtungen (100a, 100'a, 200a, 200'a, 300a, 300'a, 400a, 400'a, 500a, 500'a, 600a, 600'a, 700a, 700'a-g, 800a, 800'a) je einen Flugzeugsitz (120a, 220a, 520a, 620a) aufweisen, der gangseitig angeordnet ist, und zwei weitere Flugzeugsitzvorrichtungen (300a, 400a, 700a, 800a) der mehreren Flugzeugsitzvorrichtungen (100a, 100'a, 200a, 200'a, 300a, 300'a, 400a, 400'a, 500a, 500'a, 600a, 600'a, 700a, 700'a, 800a, 800'a), die in einer Flugrichtung (24a) betrachtet unmittelbar hinter oder vor den zwei Flugzeugsitzvorrichtungen (300a, 400a, 700a, 800a) angeordnet sind, je einen Flugzeugsitz (320a, 420a, 720a, 820a) aufweisen, der gangabgewandt angeordnet ist.

11. Flugzeugsitzanordnung nach einem der vorhergehenden Ansprüche, **dadurch gekennzeichnet, dass** in dem Flugzeugkabinenabschnitt (26a-g) in einer Sitzspalte (36a-g, 38a-g, 40a-g, 42a-g) zumindest drei Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) der mehreren Flugzeugsitzvorrichtungen (100a-g, 100'a-g, 200ag, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) angeordnet sind, wobei eine Sitzrichtung (110a-g, 310a-g, 510a-g, 710a-g) einer Flugzeugsitzvorrichtung (100a-g, 100'a-g, 300a-g, 300'a-g, 500a-g, 500'a-g, 700a-g, 700'a-g) der zumindest drei Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) zumindest im Wesentlichen parallel zu einer Flugzeuglängsachse angeordnet ist und Sitzrichtungen (210a-g, 410a-g, 610a-g, 810a-g, 4100g, 8100g) zweier weiterer Flugzeugsitzvorrichtungen (200ag, 200'a-g, 400a-g, 400'a-g, 600a-g, 600'a-g, 800a-g, 800'a-g, 4000g, 4000'g, 8000g, 8000'g) der zumindest drei Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) abgewinkelt zu der Flugzeuglängsachse angeordnet sind.

12. Flugzeugsitzanordnung nach Anspruch 11, + **dadurch gekennzeichnet, dass** Flugzeugsitze (220a-g, 420a-g, 620a-g, 820a-g, 4200g, 8200g) der Flugzeugsitzvorrichtungen (200a-g, 200'a-g, 400a-g, 400'a-g, 600a-g, 600'a-g, 800a-g, 800'a-g, 4000g, 4000'g, 8000g, 8000'g), deren Sitzrichtungen (210a-g, 410a-g, 610a-g, 810a-g, 4100g, 8100g) abgewinkelt zu der Flugzeuglängsachse angeordnet sind, unterschiedliche Abstände zu einem Flugzeugkabinengang (32a-g, 34a-g) aufweisen.

13. Flugzeugsitzanordnung nach einem der vorhergehenden Ansprüche, **dadurch gekennzeichnet, dass** in dem Flugzeugkabinenabschnitt (26a) in zumindest einer Sitzspalte (36a, 38a, 40a, 42a) vier unterschiedlich voneinander ausgebildete Flugzeugsitzvorrichtungen (100a, 100'a, 200a, 200'a, 300a, 300'a, 400a, 400'a, 500a, 500'a, 600a, 600'a, 700a, 700'a, 800a, 800'a) der mehreren Flugzeugsitzvorrichtungen (100a, 100'a, 200a, 200'a, 300a, 300'a, 400a, 400'a, 500a, 500'a, 600a, 600'a, 700a, 700'a, 800a, 800'a) unmittelbar hintereinander angeordnet sind, wobei Sitzrichtungen (110a, 310a, 510a, 710a) zweier Flugzeugsitzvorrichtungen (100a, 100'a, 300a, 300'a, 500a, 500'a, 700a, 700'a) der vier Flugzeugsitzvorrichtungen (100a, 100'a, 200a, 200'a, 300a, 300'a, 400a, 400'a, 500a, 500'a, 600a, 600'a, 700a, 700'a, 800a, 800'a) zumindest im Wesentlichen parallel zu einer Flugzeuglängsachse angeordnet sind, wobei ein Flugzeugsitz (120a, 520a) einer Flugzeugsitzvorrichtung (100a, 100'a, 500a, 500'a) der zwei Flugzeugsitzvorrichtungen (100a, 100'a, 300a, 300'a, 500a, 500'a, 700a, 700'a) gangseitig angeordnet ist und ein weiterer Flugzeugsitz (320a, 720a) einer weiteren Flugzeugsitzvorrichtung (300a, 300'a, 700a, 700'a) der zwei Flugzeugsitzvorrichtungen (100a, 100'a, 300a, 300'a, 500a, 500'a, 700a, 700'a) gangabgewandt angeordnet ist, und Sitzrichtungen (210a, 410a, 610a, 810a) zweier weiterer Flugzeugsitzvorrichtungen (200a, 200'a, 400a, 400'a, 600a, 600'a, 800a, 800'a) der vier Flugzeugsitzvorrichtungen (100a, 100'a, 200a, 200'a, 300a, 300'a, 400a, 400'a, 500a, 500'a, 600a, 600'a, 700a, 700'a, 800a, 800'a) abgewinkelt zu der Flugzeuglängsachse angeordnet sind, wobei ein Flugzeugsitz (220a, 620a) einer Flugzeugsitzvorrichtung (200a, 200'a, 600a, 600'a) der zwei weiteren Flugzeugsitzvorrichtungen (200a, 200'a, 400a, 400'a, 600a, 600'a, 800a, 800'a) gangseitig angeordnet ist und ein weiterer Flugzeugsitz (420a, 820a) einer weiteren Flugzeugsitzvorrichtung (400a, 400'a, 800a, 800'a) der zwei weiteren Flugzeugsitzvorrichtungen (200a, 200'a, 400a, 400'a, 600a, 600'a, 800a, 800'a) gangabgewandt angeordnet ist.

14. Flugzeugsitzanordnung nach einem der vorhergehenden Ansprüche, **dadurch gekennzeichnet, dass** in dem Flugzeugkabinenabschnitt (26a-g) zwei Flugzeugsitzvorrichtungen (300a-g, 700a-g) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) in zwei unmittelbar nebeneinander angeordneten Sitzspalten (38a-g, 40a-g) ein Sitzpaar (46a-g) ausbilden, wobei Sitzrichtungen (310a-g, 710a-g) der zwei Flugzeugsitzvorrichtungen (300a-g, 700a-g) zumindest im Wesentlichen parallel zu einer Flugzeuglängsachse angeordnet sind und Flugzeugsitze (320ag, 720a-g) der zwei Flugzeugsitzvorrichtungen (300a-g, 700a-g) gangabgewandt angeordnet sind, wobei in den zwei unmittelbar nebeneinander angeordneten Sitzspalten (38a-g, 40a-g) zumindest zwei der Sitzpaare (46a-g) angeordnet sind.

15. Flugzeugsitzanordnung nach einem der vorhergehenden Ansprüche, **dadurch gekennzeichnet, dass** eine Anordnung von Flugzeugsitzvorrichtungen (100e-f, 100'f, 200e, 200'e, 300e-f, 300'e-f, 400f, 400'f, 500e-f, 500'f, 600e, 600'e, 700e-f, 700'e-f, 800e) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) in dem Flugzeugkabinenabschnitt (26e-f) in zumindest einer Sitzspalte (36e-f, 38e-f) auf einer ersten Flugzeugkabinenseite (56e-f) asymmetrisch zu einer Anordnung von Flugzeugsitzvorrichtungen (100e-f, 100'f, 200e, 200'e, 300e-f, 300'e-f, 400f, 400'f, 500e-f, 500'f, 600e, 600'e, 700e-f, 700'e-f, 800e) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) in zumindest einer Sitzspalte (40e-f, 42e-f) auf einer zweiten Flugzeugkabinenseite (58e-f) ausgebildet ist, wobei die erste Flugzeugkabinenseite (56e-f) durch eine gedachte Flugzeugkabinenmittelebene, die senkrecht zu einem Flugzeugkabinenboden (22e-f) entlang einer Flugzeuglängsachse ausgerichtet ist, von der zweiten Flugzeugkabinenseite (58e-f) getrennt ist.

16. Flugzeugsitzanordnung nach Anspruch 15, **dadurch gekennzeichnet, dass** in zumindest einer Sitzspalte (36e, 38e; 42f) ausschließlich Flugzeugsitzvorrichtungen (200e, 400e-f, 800e) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) angeordnet sind, deren Sitzrichtungen (210e, 410e-f, 810e) abgewinkelt zu der Flugzeuglängsachse angeordnet sind.

17. Flugzeugsitzanordnung nach Anspruch 15 oder 16, **dadurch gekennzeichnet, dass** in zumindest einer Sitzspalte (36f, 38f, 40e-f, 42e) ausschließlich Flugzeugsitzvorrichtungen (100e-f, 100'e-f, 300e-f, 300'e-f, 500e-f, 500'e-f, 700e-f, 700'e-f, 1000f, 1000'f, 3000f, 3000'f, 5000f, 5000'f, 7000f, 7000'f) der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) angeordnet sind, deren Sitzrichtungen (110e-f, 310e-f, 510e-f, 710e-f, 1100f, 3100f, 5100f, 7100f) zumindest im Wesentlichen parallel zu der Flugzeuglängsachse angeordnet sind.

18. Flugzeugsitzanordnung nach einem der vorhergehenden Ansprüche, **dadurch gekennzeichnet, dass** Sitzrichtungen (1100f, 3100f, 4100g, 5100f, 7100f, 8100g) eines Teils der mehreren Flugzeugsitzvorrichtungen (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) in dem Flugzeugkabinenabschnitt (26f-g) zumindest im Wesentlichen entgegengesetzt zu einer Flugrichtung (24f-g) ausgerichtet sind.

## Claims

1. An aircraft seat arrangement for use in an aircraft cabin of an aircraft, wherein the aircraft cabin comprises at least one seat column and at least one aircraft cabin section, and wherein the aircraft seat arrangement comprises a plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), which, in an operating state of the aircraft seat arrangement, are arranged in the at least one aircraft cabin section (26a-g) and are designed to be at least partially different from one another and each have an aircraft seat (120a-g, 220a-g, 320a-g, 420a-g, 520a-g, 620a-g, 720a-g, 820a-g, 1200f, 3200f, 4200g, 5200f, 7200f, 8200g) which is designed as a full-flat seat, wherein the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) differ in at least one comfort category, wherein the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) for the at least one comfort category each have a mutually different value which is caused by a different arrangement of the aircraft seats (120a-g, 220a-g, 320a-g, 420a-g, 520a-g, 620a-g, 720a-g, 820a-g, 1200f, 3200f, 4200g, 5200f, 7200f, 8200g) and by the at least partially different design of the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g),
wherein in the seat column (36a-g, 38a-g, 40a-g, 42a-g) at least four aircraft seat devices of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) are arranged, which differ in design from one another, **characterized in that** the at least four aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), in the operating state of the aircraft seat arrangement, are arranged directly one behind another in the seat column, so that they are all cut by a same aircraft longitudinal axis and in each case have a direct access to an aircraft seat aisle (32a-g, 34a-g).

2. The aircraft seat arrangement according to claim 1, **characterized in that** the at least one comfort category describes a living space, in particular a base area, a bed length, a bed width, a food space volume and/or a passage width in at least one region.

3. The aircraft seat arrangement according to any one of the preceding claims, **characterized in that** in one seat column (36a-g, 38a-g, 40a-g, 42a-g) in the aircraft cabin section (26a-g) a sitting direction (110a-g, 310a-g, 510a-g, 710a-g, 1100f, 3100f, 5100f, 7100f) of an aircraft seat device (100a-g, 300a-g, 500a-g, 700a-g, 1000f, 3000f, 5000f, 7000f) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) is arranged at least substantially parallel to an aircraft longitudinal axis, and a sitting direction (210a-g, 410a-g, 610a-g, 810a-g, 4100g, 8100g) of a further aircraft seat device (200a-g, 400a-g, 600a-g, 800a-g, 4000g, 8000g) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), is arranged angled with respect to the aircraft longitudinal axis, in particular at an angle of at least 18 degrees.

4. The aircraft seat arrangement according to any one of the preceding claims, **characterized in that** in the aircraft cabin section (26a-g), a sitting direction (210a-g, 610a-g) of at least one aircraft seat device (200a-g, 600a-g) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) is directed away from a directly adjacent aircraft cabin aisle (32a-g, 34a-g).

5. The aircraft seat arrangement according to any one of the preceding claims, **characterized in that** in the aircraft cabin section (26a-g), a sitting direction (410a-g, 810a-g, 4100g, 8100g) of at least one aircraft seat device (400a-g, 800a-g, 4000g, 8000g) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) is directed toward a directly adjacent aircraft cabin aisle (32a-g, 34a-g).

6. The aircraft seat arrangement according to claims 4 and 5, **characterized in that** the sitting directions (210a-g, 410a-g, 610a-g, 810a-g, 4100g, 8100g) of at least two aircraft seat devices (200a-g, 400a-g, 600a-g, 800a-g, 4000g, 8000g) which are in particular spaced apart from one another by at least one further aircraft seat device (300a-g, 700a-g) are arranged in one seat column (36a-g, 38a-g, 40a-g, 42a-g) in a manner angled with respect to an aircraft longitudinal axis by at least substantially the same angle in terms of value, wherein the sitting directions (210a-g, 410a-g, 610a-g, 810a-g, 4100g, 8100g) of the aircraft seat devices (200a-g, 400a-g, 600a-g, 800a-g, 4000g, 8000g) are formed in mirror image to an aircraft longitudinal axis.

7. The aircraft seat arrangement according to any one of the preceding claims, **characterized in that** an aircraft seat (120a-g, 220a-g, 520a-g, 620a-g, 1200f, 5200f) of an aircraft seat device (100a-g, 200a-g, 500a-g, 600a-g, 1000f, 5000f) of the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) which are arranged in one seat column (36a-g, 38a-g, 40a-g, 42a-g) in the aircraft cabin section (26a-g) is arranged on an aisle side, wherein an aircraft seat (320a-g, 420a-g, 720a-g, 820a-g, 3200f, 4200g, 7200f, 8200g) of a further aircraft seat device (300a-g, 400a-g, 700a-g, 800a-g, 3000f, 4000g, 7000f, 8000g) of the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) which are arranged in the seat column (36a-g, 38a-g, 40a-g, 42a-g) is arranged facing away from the aisle.

8. The aircraft seat arrangement according to any one of the preceding claims, **characterized by** at least one seat grouping (52a-g, 54a-g) of at least four aircraft seat devices of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g), which aircraft seat devices are arranged directly one behind another in one seat column (36a-g, 38a-g, 40a-g, 42a-g) in the aircraft cabin section (26a-g) and each have different sitting directions (110a-g, 210a-g, 310a-g, 410a-g, 510a-g, 610a-g, 710a-g, 810a-g, 4100g, 8100g) and/or whose aircraft seats (120a-g, 220a-g, 320a-g, 420a-g, 520a-g, 620a-g, 720a-g, 820a-g, 4200g, 8200g) are arranged on an aisle side or facing away from the aisle.

9. The aircraft seat arrangement according to claim 8, **characterized in that** the sitting directions (110a-d, 210a-d, 310a-d, 410a, 510a-d, 610a-d, 710a-d, 810a, 4100g, 8100g) of the aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) arranged directly one behind another within the at least one seat grouping (52a-g, 54a-g) are arranged in an alternating manner at least substantially parallel to and in an angled manner with respect to the aircraft longitudinal axis.

10. The aircraft seat arrangement according to any one of the preceding claims, **characterized in that** in one seat column (36a, 38a, 40a, 42a) in the aircraft cabin section (26a), two aircraft seat devices (100a, 200a, 500a, 600a) of the plurality of aircraft seat devices (100a, 100'a, 200a, 200'a, 300a, 300'a, 400a, 400'a, 500a, 500'a, 600a, 600'a, 700a, 700'a-g, 800a, 800'a) each have an aircraft seat (120a, 220a, 520a, 620a) which is arranged on an aisle side, and two further aircraft seat devices (300a, 400a, 700a, 800a) of the plurality of aircraft seat devices (100a, 100'a, 200a, 200'a, 300a, 300'a, 400a, 400'a, 500a, 500'a, 600a, 600'a, 700a, 700'a, 800a, 800'a), which, as viewed in a flight direction (24a), are arranged directly behind or in front of the two aircraft seat devices (300a, 400a, 700a, 800a) each have an aircraft seat (320a, 420a, 720a, 820a) which is arranged facing away from the aisle.

11. The aircraft seat arrangement according to any one of the preceding claims, **characterized in that** in one seat column (36a-g, 38a-g, 40a-g, 42a-g) in the aircraft cabin section (26a) at least three aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) are arranged, wherein a sitting direction (110a-g, 310a-g, 510a-g, 710a-g) of an aircraft seat device (100a-g, 100'a-g, 300a-g, 300'a-g, 500a-g, 500'a-g, 700a-g, 700'a-g) of the at least three aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) is arranged at least substantially parallel to an aircraft longitudinal axis, and sitting directions (210a-g, 410a-g, 610a-g, 810a-g, 4100g, 8100g) of two further aircraft seat devices (200a-g, 200'a-g, 400a-g, 400'a-g, 600a-g, 600'a-g, 800a-g, 800'a-g, 4000g, 4000'g, 8000g, 8000'g) of the at least three aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) are arranged in an angled manner with respect to the aircraft longitudinal axis.

12. The aircraft seat arrangement according to claim 11, **characterized in that** aircraft seats (220a-g, 420a-g, 620a-g, 820a-g, 4200g, 8200g) of the aircraft seat devices (200a-g, 200'a-g, 400a-g, 400'a-g, 600a-g, 600'a-g, 800a-g, 800'a-g, 4000g, 4000'g, 8000g, 8000'g), the sitting directions (210a-g, 410a-g, 610a-g, 810a-g, 4100g, 8100g) of which are arranged in an angled manner with respect to the aircraft longitudinal axis, have different distances from an aircraft cabin aisle (32a-g, 34a-g).

13. The aircraft seat arrangement according to any one of the preceding claims, **characterized in that** in at least one seat column (36a, 38a, 40a, 42a) in the aircraft cabin section (26a), four aircraft seat devices (100a, 100'a, 200a, 200'a, 300a, 300'a, 400a, 400'a, 500a, 500'a, 600a, 600'a, 700a, 700'a, 800a, 800'a) of the plurality of aircraft seat devices (100a, 100'a, 200a, 200'a, 300a, 300'a, 400a, 400'a, 500a, 500'a, 600a, 600'a, 700a, 700'a, 800a, 800'a) which differ from one another, are arranged directly one behind another, wherein sitting directions (110a, 310a, 510a, 710a) of two aircraft seat devices (100a, 100'a, 300a, 300'a, 500a, 500'a, 700a, 700'a) of the four aircraft seat devices (100a, 100'a, 200a, 200'a, 300a, 300'a, 400a, 400'a, 500a, 500'a, 600a, 600'a, 700a, 700'a, 800a, 800'a) are arranged at least substantially parallel to an aircraft longitudinal axis, wherein one aircraft seat (120a, 520a) of one aircraft seat device (100a, 100'a, 500a, 500'a) of the two aircraft seat devices (100a, 100'a, 300a, 300'a, 500a, 500'a, 700a, 700'a) is arranged on an aisle side and a further aircraft seat (320a, 720a) of a further aircraft seat device (300a, 300'a, 700a, 700'a) of the two aircraft seat devices (100a, 100'a, 300a, 300'a, 500a, 500'a, 700a, 700'a) is arranged facing away from the aisle, and sitting directions (210a, 410a, 610a, 810a) of two further aircraft seat devices (200a, 200'a, 400a, 400'a, 600a, 600'a, 800a, 800'a) of the four aircraft seat devices (100a, 100'a, 200a, 200'a, 300a, 300'a, 400a, 400'a, 500a, 500'a, 600a, 600'a, 700a, 700'a, 800a, 800'a) are arranged in an angled manner with respect to the aircraft longitudinal axis, wherein one aircraft seat (220a, 620a) of one aircraft seat device (200a, 200'a, 600a, 600'a) of the two further aircraft seat devices (200a, 200'a, 400a, 400'a, 600a, 600'a, 800a, 800'a) is arranged on the aisle side and a further aircraft seat (420a, 820a) of a further aircraft seat device (400a, 400'a, 800a, 800'a) of the two further aircraft seat devices (200a, 200'a, 400a, 400'a, 600a, 600'a, 800a, 800'a) is arranged facing away from the aisle.

14. The aircraft seat arrangement according to any one of the preceding claims, **characterized in that** in the aircraft cabin section (26a-g), two aircraft seat devices (300a-g, 700a-g) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) form a pair of seats (46a-g) in two seat columns (38a-g, 40a-g) which are arranged directly next to each other, wherein sitting directions (310a-g, 710a-g) of the two aircraft seat devices (300a-g, 700a-g) are arranged at least substantially parallel to an aircraft longitudinal aixis, and aircraft seats (320a-g, 720a-g) of the two aircraft seat devices (300a-g, 700a-g) are arranged facing away from an aisle, wherein at least two of the pairs of seats (46a-g) are arranged in the two seat columns (38a-g, 40a-g) which are arranged directly next to each other.

15. The aircraft seat arrangement according to any one of the preceding claims, **characterized in that** an arrangement of aircraft seat devices (100e-f, 100'f, 200e, 200'e, 300e-f, 300'e-f, 400f, 400'f, 500e-f, 500'f, 600e, 600'e, 700e-f, 700'e-f, 800e) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) in the aircraft cabin section (26e-f) in at least one seat column (36e-f, 38e-f) on a first aircraft cabin side (56e-f) is formed asymmetrically to an arrangement of aircraft seat devices (100e-f, 100'f, 200e, 200'e, 300e-f, 300'e-f, 400f, 400'f, 500e-f, 500'f, 600e, 600'e, 700e-f, 700'e-f, 800e) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) in at least one seat column (40e-f, 42e-f) on a second aircraft cabin side (58e-f), wherein the first aircraft cabin side (56e-f) is separated from the second aircraft cabin side (58e-f) by an imaginary aircraft cabin center plane which is oriented along an aircraft longitudinal axis perpendicular to an aircraft cabin floor (22e-f).

16. The aircraft seat arrangement according to claim 15, **characterized in that** in at least one seat column (36e, 38e; 42f), only such aircraft seat devices (200e, 400e-f, 800e) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) are arranged whose sitting directions (210e, 410e-f, 810e) are arranged in an angled manner with respect to the aircraft longitudinal axis.

17. The aircraft seat arrangement according to claim 15 or 16, **characterized in that** in at least one seat column (36f, 38f, 40e-f, 42e), only such aircraft seat devices (100e-f, 100'e-f, 300e-f, 300'e-f, 500e-f, 500'e-f, 700e-f, 700'e-f, 1000f, 1000'f, 3000f, 3000'f, 5000f, 5000'f, 7000f, 7000'f) of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) are arranged whose sitting directions (110e-f, 310e-f, 510e-f, 710e-f, 1100f, 3100f, 5100f, 7100f) are arranged at least substantially parallel to the aircraft longitudinal axis.

18. The aircraft seat arrangement according to any one of the preceding claims, **characterized in that** sitting directions (1100f, 3100f, 4100g, 5100f, 7100f, 8100g) of some of the plurality of aircraft seat devices (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) in the aircraft cabin section (26f-g) are oriented at least substantially in an opposite direction to a flying direction (24f-g).

## Revendications

1. Agencement de siège d'avion destiné à être utilisé dans une cabine d'avion d'un avion, où la cabine d'avion présente au moins une colonne de sièges et au moins une section de cabine d'avion, et où l'agencement de siège d'avion présente plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), qui sont disposés dans l'état de fonctionnement de l'agencement de siège d'avion dans l'au moins une section de cabine d'avion (26a-g), qui sont réalisés au moins en partie différemment les uns des autres et qui présentent respectivement un siège d'avion (120a-g, 220a-g, 320a-g, 420a-g, 520a-g, 620a-g, 720a-g, 820a-g, 1200f, 3200f, 4200g, 5200f, 7200f, 8200g), qui est réalisé sous forme de siège à plat complet, où les dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) se distinguent dans au moins une catégorie de confort, où les dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) présentent respectivement pour l'au moins une catégorie de confort une valeur différente l'une de l'autre, qui est due à un agencement différent des sièges d'avion (120a-g, 220a-g, 320a-g, 420a-g, 520a-g, 620a-g, 720a-g, 820a-g, 1200f, 3200f, 4200g, 5200f, 7200f, 8200g) et à la réalisation au moins en partie différente des dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), où dans la colonne de sièges (36a-g, 38a-g, 40a-g, 42a-g) sont disposés au moins quatre dispositifs de siège d'avion réalisés différemment les uns des autres des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g), **caractérisé en ce que** les au moins quatre dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) sont disposés dans l'état de fonctionnement de l'agencement de siège d'avion directement les uns derrière les autres dans la colonne de sièges, de sorte que tous sont coupés par un même axe longitudinal d'avion et présentent respectivement un accès direct à un même couloir de cabine d'avion (32a-g, 34a-g).

2. Agencement de siège d'avion selon la revendication 1, **caractérisé en ce que** l'au moins une catégorie de confort décrit un espace de vie, en particulier une surface de base, une longueur de lit, une largeur de lit, un volume d'espace pour les pieds et/ou une largeur de passage dans au moins une région.

3. Agencement de siège d'avion selon l'une quelconque des revendications précédentes, **caractérisé en ce que** dans la section de cabine d'avion (26a-g) dans une colonne de sièges (36a-g, 38a-g, 40a-g, 42a-g) est disposée au moins sensiblement parallèlement à un axe longitudinal d'avion une direction de siège (110a-g, 310a-g, 510a-g, 710a-g, 1100f, 3100f, 5100f, 7100f) d'un dispositif de siège d'avion (100a-g, 300a-g, 500a-g, 700a-g, 1000f, 3000f, 5000f, 7000f) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) et une direction de siège (210a-g, 410a-g, 610a-g, 810a-g, 4100g, 8100g) d'un autre dispositif de siège d'avion (200a-g, 400a-g, 600a-g, 800a-g, 4000g, 8000g) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) est disposée de manière coudée par rapport à l'axe longitudinal d'avion, en particulier selon un angle d'au moins 18 degrés.

4. Agencement de siège d'avion selon l'une quelconque des revendications précédentes, **caractérisé en ce que** dans la section de cabine d'avion (26a-g) est orientée à l'opposé d'un couloir de cabine d'avion (32a-g, 34a-g) directement adjacent une direction de siège (210a-g, 610a-g) d'au moins un dispositif de siège d'avion (200a-g, 600a-g) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g).

5. Agencement de siège d'avion selon l'une quelconque des revendications précédentes, **caractérisé en ce que** dans la section de cabine d'avion (26a-g) est orientée une direction de siège (410a-g, 810a-g, 4100g, 8100g) d'au moins un dispositif de siège d'avion (400a-g, 800a-g, 4000g, 8000g) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) vers un couloir de cabine d'avion (32a-g, 34a-g) directement adjacent.

6. Agencement de siège d'avion selon la revendication 4 et 5, **caractérisé en ce que** les directions de siège (210a-g, 410a-g, 610a-g, 810a-g, 4100g, 8100g) d'au moins deux dispositifs de siège d'avion (200a-g, 400a-g, 600a-g, 800a-g, 4000g, 8000g), qui sont espacés l'un de l'autre en particulier par au moins un autre dispositif de siège d'avion (300a-g, 700a-g), sont disposées dans une fente de siège (36a-g, 38a-g, 40a-g, 42a-g) de manière coudée d'un angle au moins sensiblement identique en valeur absolue par rapport à un axe longitudinal d'avion, les directions de siège (210a-g, 410a-g, 610a-g, 810a-g, 4100g, 8100g) des dispositifs de siège d'avion (200a-g, 400a-g, 600a-g, 800a-g, 4000g, 8000g) étant réalisées de manière symétrique par rapport à un axe longitudinal d'avion.

7. Agencement de siège d'avion selon l'une quelconque des revendications précédentes, **caractérisé en ce qu'**un siège d'avion (120a-g, 220a-g, 520a-g, 620a-g, 1200f, 5200f) d'un dispositif de siège d'avion (100a-g, 200a-g, 500a-g, 600a-g, 1000f, 5000f) des dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) disposés dans la section de cabine d'avion (26a-g) dans une fente de siège (36a-g, 38a-g, 40a-g, 42a-g) est disposé du côté du couloir, où un siège d'avion (320a-g, 420a-g, 720a-g, 820a-g, 3200f, 4200g, 7200f, 8200g) d'un autre dispositif de siège d'avion (300a-g, 400a-g, 700a-g, 800a-g, 3000f, 4000g, 7000f, 8000g) des dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) disposés dans la fente de siège (36a-g, 38a-g, 40a-g, 42a-g) est disposé du côté opposé au couloir.

8. Agencement de siège d'avion selon l'une quelconque des revendications précédentes, **caractérisé par** au moins un groupement de sièges (52a-g, 54a-g) d'au moins quatre dispositifs de siège d'avion des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) disposés directement les uns derrière les autres dans la section de cabine d'avion (26a-g) dans une fente de siège (36a-g, 38a-g, 40a-g, 42a-g), lesquels présentent à chaque fois différentes directions de siège (110a-g, 210a-g, 310a-g, 410a-g, 510a-g, 610a-g, 710a-g, 810a-g, 4100g, 8100g) et/ou dont les sièges d'avion (120a-g, 220a-g, 320a-g, 420a-g, 520a-g, 620a-g, 720a-g, 820a-g, 4200g, 8200g) sont disposés du côté du couloir ou du côté opposé au couloir.

9. Agencement de siège d'avion selon la revendication 8, **caractérisé en ce que** les directions de siège (110a-d, 210a-d, 310a-d, 410a, 510a-d, 610a-d, 710a-d, 810a, 4100g, 8100g) des dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) disposés directement les uns derrière les autres à l'intérieur de l'au moins un groupement de sièges (52a-g, 54a-g) sont disposées en alternance au moins sensiblement parallèlement et de manière coudée par rapport à l'axe longitudinal d'avion.

10. Agencement de siège d'avion selon l'une quelconque des revendications précédentes, **caractérisé en ce que** dans la section de cabine d'avion (26a) dans une fente de siège (36a, 38a, 40a, 42a), deux dispositifs de siège d'avion (100a, 200a, 500a, 600a) des plusieurs dispositifs de siège d'avion (100a, 100'a, 200a, 200'a, 300a, 300'a, 400a, 400'a, 500a, 500'a, 600a, 600'a, 700a, 700'a-g, 800a, 800'a) présentent à chaque fois un siège d'avion (120a, 220a, 520a, 620a) qui est disposé du côté du couloir, et deux autres dispositifs de siège d'avion (300a, 400a, 700a, 800a) des plusieurs dispositifs de siège d'avion (100a, 100'a, 200a, 200'a, 300a, 300'a, 400a, 400'a, 500a, 500'a, 600a, 600'a, 700a, 700'a, 800a, 800'a), qui sont disposés, vus dans une direction de vol (24a), directement derrière ou devant les deux dispositifs de siège d'avion (300a, 400a, 700a, 800a), présentent à chaque fois un siège d'avion (320a, 420a, 720a, 820a) qui est disposé du côté opposé au couloir.

11. Agencement de siège d'avion selon l'une quelconque des revendications précédentes, **caractérisé en ce que** dans la section de cabine d'avion (26a-g) dans une fente de siège (36a-g, 38a-g, 40a-g, 42a-g), au moins trois dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) sont disposés, où une direction de siège (110a-g, 310a-g, 510a-g, 710a-g) d'un dispositif de siège d'avion (100a-g, 100'a-g, 300a-g, 300'a-g, 500a-g, 500'a-g, 700a-g, 700'a-g) des au moins trois dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) est disposée au moins sensiblement parallèlement à un axe longitudinal d'avion et des directions de siège (210a-g, 410a-g, 610a-g, 810a-g, 4100g, 8100g) de deux autres dispositifs de siège d'avion (200a-g, 200'a-g, 400a-g, 400'a-g, 600a-g, 600'a-g, 800a-g, 800'a-g, 4000g, 4000'g, 8000g, 8000'g) des au moins trois dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 4000g, 4000'g, 8000g, 8000'g) sont disposés de manière coudée par rapport à l'axe longitudinal d'avion.

12. Agencement de siège d'avion selon la revendication 11, **caractérisé en ce que** des sièges d'avion (220a-g, 420a-g, 620a-g, 820a-g, 4200g, 8200g) des dispositifs de siège d'avion (200a-g, 200'a-g, 400a-g, 400'a-g, 600a-g, 600'a-g, 800a-g, 800'a-g, 4000g, 4000'g, 8000g, 8000'g), dont les directions de siège (210a-g, 410a-g, 610a-g, 810a-g, 4100g, 8100g) sont disposées de manière coudée par rapport à l'axe longitudinal d'avion, présentent des distances différentes par rapport à un couloir de cabine d'avion (32a-g, 34a-g).

13. Agencement de siège d'avion selon l'une quelconque des revendications précédentes, **caractérisé en ce que** dans la section de cabine d'avion (26a), dans au moins une fente de siège (36a, 38a, 40a, 42a), quatre dispositifs de siège d'avion (100a, 100'a, 200a, 200'a, 300a, 300'a, 400a, 400'a, 500a, 500'a, 600a, 600'a, 700a, 700'a, 800a, 800'a) réalisés de manière différente les uns des autres des plusieurs dispositifs de siège d'avion (100a, 100'a, 200a, 200'a, 300a, 300'a, 400a, 400'a, 500a, 500'a, 600a, 600'a, 700a, 700'a, 800a, 800'a) sont disposés directement les uns derrière les autres, des directions de siège (110a, 310a, 510a, 710a) de deux dispositifs de siège d'avion (100a, 100'a, 300a, 300'a, 500a, 500'a, 700a, 700'a) des quatre dispositifs de siège d'avion (100a, 100'a, 200a, 200'a, 300a, 300'a, 400a, 400'a, 500a, 500'a, 600a, 600'a, 700a, 700'a, 800a, 800'a) étant disposées au moins sensiblement parallèlement à un axe longitudinal d'avion, un siège d'avion (120a, 520a) d'un dispositif de siège d'avion (100a, 100'a, 500a, 500'a) des deux dispositifs de siège d'avion (100a, 100'a, 300a, 300'a, 500a, 500'a, 700a, 700'a) étant disposé du côté du couloir et un autre siège d'avion (320a, 720a) d'un autre dispositif de siège d'avion (300a, 300'a, 700a, 700'a) des deux dispositifs de siège d'avion (100a, 100'a, 300a, 300'a, 500a, 500'a, 700a, 700'a) étant disposé du côté opposé au couloir, et des directions de siège (210a, 410a, 610a, 810a) de deux autres dispositifs de siège d'avion (200a, 200'a, 400a, 400'a, 600a, 600'a, 800a, 800'a) des quatre dispositifs de siège d'avion (100a, 100'a, 200a, 200'a, 300a, 300'a, 400a, 400'a, 500a, 500'a, 600a, 600'a, 700a, 700'a, 800a, 800'a) étant disposées de manière coudée par rapport à l'axe longitudinal d'avion, un siège d'avion (220a, 620a) d'un dispositif de siège d'avion (200a, 200'a, 600a, 600'a) des deux autres dispositifs de siège d'avion (200a, 200'a, 400a, 400'a, 600a, 600'a, 800a, 800'a) étant disposé du côté du couloir et un autre siège d'avion (420a, 820a) d'un autre dispositif de siège d'avion (400a, 400'a, 800a, 800'a) des deux autres dispositifs de siège d'avion (200a, 200'a, 400a, 400'a, 600a, 600'a, 800a, 800'a) étant disposé du côté opposé au couloir.

14. Agencement de siège d'avion selon l'une quelconque des revendications précédentes, **caractérisé en ce que** dans la section de cabine d'avion (26a-g), deux dispositifs de siège d'avion (300a-g, 700a-g) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) forment une paire de sièges (46a-g) dans deux fentes de siège (38a-g, 40a-g) disposées directement l'une à côté de l'autre, où des directions de siège (310a-g, 710a-g) des deux dispositifs de siège d'avion (300a-g, 700a-g) sont disposées au moins sensiblement parallèlement à un axe longitudinal d'avion et des sièges d'avion (320a-g, 720a-g) des deux dispositifs de siège d'avion (300a-g, 700a-g) sont disposés du côté opposé au couloir, où au moins deux des paires de sièges (46a-g) sont disposées dans les deux fentes de siège (38a-g, 40a-g) disposées directement l'une à côté de l'autre

15. Agencement de siège d'avion selon l'une quelconque des revendications précédentes, **caractérisé en ce qu'**un agencement de dispositifs de siège d'avion (100e-f, 100'f, 200e, 200'e, 300e-f, 300'e-f, 400f, 400'f, 500e-f, 500'f, 600e, 600'e, 700e-f, 700'e-f, 800e) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) dans la section de cabine d'avion (26e-f) dans au moins une fente de siège (36e-f, 38e-f) sur un premier côté de cabine d'avion (56e-f) est réalisé de manière asymétrique par rapport à un agencement de dispositifs de siège d'avion (100e-f, 100'f, 200e, 200'e, 300e-f, 300'e-f, 400f, 400'f, 500e-f, 500'f, 600e, 600'e, 700e-f, 700'e-f, 800e) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f) dans au moins une fente de siège (40e-f, 42e-f) sur un deuxième côté de cabine d'avion (58e-f), où le premier côté de cabine d'avion (56e-f) est séparé du deuxième côté de cabine d'avion (58e-f) par un plan médian de cabine d'avion imaginaire qui est orienté perpendiculairement à un plancher de cabine d'avion (22e-f) le long d'un axe longitudinal d'avion.

16. Agencement de siège d'avion selon la revendication 15, **caractérisé en ce que** dans au moins une fente de siège (36e, 38e ; 42f) sont disposés exclusivement des dispositifs de siège d'avion (200e, 400e-f, 800e) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f), dont les directions de siège (210e, 410e-f, 810e) sont disposées de manière coudée par rapport à l'axe longitudinal d'avion.

17. Agencement de siège d'avion selon la revendication 15 ou 16, **caractérisé en ce que** dans au moins une fente de siège (36f, 38f, 40e-f, 42e) sont disposés exclusivement des dispositifs de siège d'avion (100e-f, 100'e-f, 300e-f, 300'e-f, 500e-f, 500'e-f, 700e-f, 700'e-f, 1000f, 1000'f, 3000f, 3000'f, 5000f, 5000'f, 7000f, 7000'f) des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 5000f, 5000'f, 7000f, 7000'f), dont les directions de siège (110e-f, 310e-f, 510e-f, 710e-f, 1100f, 3100f, 5100f, 7100f) sont disposées au moins sensiblement parallèlement à l'axe longitudinal d'avion.

18. Agencement de siège d'avion selon l'une quelconque des revendications précédentes, **caractérisé en ce que** des directions de siège (1100f, 3100f, 4100g, 5100f, 7100f, 8100g) d'une partie des plusieurs dispositifs de siège d'avion (100a-g, 100'a-g, 200a-g, 200'a-g, 300a-g, 300'a-g, 400a-g, 400'a-g, 500a-g, 500'a-g, 600a-g, 600'a-g, 700a-g, 700'a-g, 800a-g, 800'a-g, 1000f, 3000f, 3000'f, 4000g, 4000'g, 5000f, 5000'f, 7000f, 7000'f, 8000g, 8000'g) sont orientées dans la section de cabine d'avion (26f-g) au moins sensiblement à l'opposé d'une direction de vol (24f-g).
